# EUROPEAN PATENT APPLICATION

(11) **EP 4 610 522 A1**
(43) Date of publication of application: **03.09.2025**
(21) Application number: 23882704.2
(22) Date of filing: 25.10.2023
(51) Int. Cl.: F16H 25/24, B23Q 1/01, B23Q 1/58, B23Q 5/40, F16C 23/06, F16C 25/08, F16F 9/10, F16F 15/023, F16F 15/08, F16H 25/20, F16H 25/22, F16J 3/02, F16J 15/18

(54) **ROTATION SUPPORT DEVICE, AND SUPPORT MECHANISM POSITION ADJUSTMENT MECHANISM FOR SHAFT SUPPORT DEVICE**

(30) Priority: 28.10.2022 JP 2022173762; 21.07.2023 JP 2023118996; 22.08.2023 JP 2023134636
(71) Applicant: NSK LTD., Tokyo 141-8560 (JP)
(72) Inventor: ARAI, Satoru, Fujisawa-shi, Kanagawa 251-8501 (JP)
(74) Representative: Grünecker Patent- und Rechtsanwälte PartG mbB
(86) International application number: PCT/JP2023/038613
(87) International publication number: WO 2024/090500

(57) **Abstract**

A support mechanism (30), which rotatably supports both axial-direction ends of a screw shaft (21), is provided with a bearing unit (41) having a moving-side bearing housing (51) and a pair of angular contact ball bearings (33), a support base (43), and a housing position adjustment mechanism (44) disposed between the bearing unit (41) and the support base (43). The housing position adjustment mechanism (44) is provided with: a support-base-side member (61) provided on the support base (43) side; a bearing-housing-side member (62) that is provided on the bearing housing (51) side and is capable of moving relative to the support-base-side member (61) in the axial direction; a partition member (83) that is located in a space (66) formed between the support-base-side member (61) and the bearing-housing-side member (62), and that divides the space (66) in the axial direction into a first space (66A) and a second space (66B); a plurality of disc springs (70) and a first working fluid (80) that are housed in a compressed state in the first space (66A); and a hollow member (90) and a second working fluid (81) that are housed in a compressed state in the second space (66B). It is thereby possible to continuously and stably maintain axial support rigidity even if the axial length of a rotating shaft changes due to the influence of heat.

## Description

### TECHNICAL FIELD

The present invention relates to a rotation support device that supports a rotation shaft such as a ball screw feeding device or a spindle device, and a support mechanism position adjustment mechanism for a shaft support device that supports a shaft.

### BACKGROUND ART

In the ball screw feeding device, high axial rigidity is required to maintain feeding accuracy of a screw shaft. In the related art, as a method for imparting rigidity to a screw shaft of a ball screw device, a method of combining a plurality of angular bearings and then applying a preload, and disposing the combined bearings at one end or both ends of the screw shaft to fix and support the screw shaft in an axial direction is generally used. In addition, when thermal expansion of the screw shaft is taken into consideration, a method of applying tension in the axial direction to the screw shaft in advance to extend the screw shaft by a predetermined amount is adopted. Patent Literature 1 describes a pre-tension mechanism that applies a tension to a feed screw (screw shaft) in advance by adjusting an axial dimension of a spacer, and when the feed screw extends due to a temperature rise beyond a range to be extended by the pre-tension, further moving the bearing in the axial direction by a disc spring or a pressure of a fluid to apply a tension to the feed screw.

### CITATION LIST

### PATENT LITERATURE

Patent Literature 1: JP2573982Y2

### SUMMARY OF INVENTION

### TECHNICAL PROBLEM

However, when a load called a pre-tension applied to the feed screw is excessively large, a large load is applied to the bearing, and the bearing may be damaged. For this reason, normally, a disc spring, a fluid supplied from outside, or the like, as seen in the pre-tension mechanism described in Patent Literature 1 is provided as long as no excessive load is applied to the bearing in the axial direction. However, in the case of using the disc spring, since the load becomes weaker as the shaft extends, it is only possible to cope with the extension by 3 degrees to 4 degrees of the temperature rise. In a machining center or the like, the temperature rise of the ball screw often exceeds 4 degrees, and in this case, the load by the disc spring may be insufficient, and the support rigidity in the axial direction may decrease.

In the method of applying a load by a hydraulic pressure by supplying a fluid from the outside, there are problems that external devices such as a hydraulic pump are required, the ball screw feeding device is increased in size, cost is increased, and additional energy is consumed.

Further, such problems exist not only in the ball screw feeding device but also in a rotation support device such as a spindle device in which both ends in the axial direction of a rotation shaft are supported by a pair of support mechanisms in a rotatable manner.

The present invention has been made in view of the above-described problems, and an object of the present invention is to provide a rotation support device and a support mechanism position adjustment mechanism for a shaft support device capable of continuously and stably maintaining support rigidity in an axial direction even when an axial length of a rotation shaft changes due to an influence of heat.

### SOLUTION TO PROBLEM

The above object of the present invention is achieved by the following configurations.
[1] A rotation support device, including:
   a rotation shaft; and
   a pair of support mechanisms that respectively support both ends in an axial direction of the rotation shaft in a rotatable manner, in which
   one of the pair of support mechanisms includes
      a bearing unit including a bearing housing and a bearing that supports the rotation shaft in a rotatable manner with respect to the bearing housing and capable of supporting an axial load,
      a support base through which the rotation shaft penetrates or which is disposed around the rotation shaft, and
      a housing position adjustment mechanism disposed between the bearing unit and the support base, and
   the housing position adjustment mechanism includes
      a support base side member provided on the support base side and through which the rotation shaft penetrates or which is disposed around the rotation shaft,
      a bearing housing side member provided on the bearing housing side, through which the rotation shaft penetrates or which is disposed around the rotation shaft, and movable relative to the support base side member in the axial direction,
      a partition member that is disposed in an accommodation space formed between the support base side member and the bearing housing side member and divides the accommodation space into a first space and a second space in the axial direction,
      a first pressure generating unit accommodated in the first space in a compressed state, and
      a second pressure generating unit accommodated in the second space in a compressed state.
[2] A support mechanism position adjustment mechanism for a shaft support device including a shaft and a pair of support mechanisms provided at both ends in an axial direction of the shaft to support the shaft, the support mechanism position adjustment mechanism for a shaft support device being provided in one of the pair of support mechanisms, one of the pair of support mechanisms including a support through which the shaft penetrates or which is disposed around the shaft, the support mechanism position adjustment mechanism including:
   a first member provided on one of the shaft side and the support side, and through which the shaft is capable of penetrating or which is capable of being disposed around the shaft;
   a second member provided on the other of the shaft side and the support side, and through which the shaft is capable of penetrating or which is capable of being disposed around the shaft, which is movable in the axial direction relative to the first member, and which forms an accommodation space with the first member;
   a partition member disposed in the accommodation space and dividing the accommodation space into a first space and a second space in the axial direction;
   a first pressure generating unit accommodated in the first space in a compressed state; and
   a second pressure generating unit accommodated in the second space in a compressed state.

### ADVANTAGEOUS EFFECTS OF INVENTION

According to the rotation support device of the present invention, even when the axial length of the rotation shaft changes due to the influence of heat, the support rigidity in the axial direction can be continuously and stably maintained. The support rigidity and a damping characteristic required for the rotation support device can be imparted by two types of pressure generating units accommodated in the accommodation space.

According to the support mechanism position adjustment mechanism for a shaft support device of the present invention, even when the axial length of the shaft changes due to the influence of heat, the support rigidity in the axial direction can be continuously and stably maintained.

The support rigidity and the damping characteristic required for the shaft support device can be imparted by the two types of pressure generating units accommodated in the accommodation space.

### BRIEF DESCRIPTION OF DRAWINGS

FIG. 1 is a cross-sectional view of a table feeding system of a machine tool to which a ball screw feeding device according to a first embodiment of the present invention is applied.
FIG. 2 is an enlarged cross-sectional view of a support mechanism including a housing position adjustment mechanism illustrated in FIG. 1.
FIG. 3 is a view on an arrow A in FIG. 2.
FIG. 4 is a view corresponding to FIG. 2 of a ball screw feeding device according to a modification of the first embodiment.
FIG. 5 is a view corresponding to FIG. 2 of a ball screw feeding device according to another modification of the first embodiment.
FIG. 6 is a view corresponding to FIG. 2 of a ball screw feeding device according to still another modification of the first embodiment.
FIG. 7 is a view corresponding to FIG. 2 of a ball screw feeding device according to a second embodiment of the present invention.
FIG. 8 is an enlarged view of a portion VIII in FIG. 7.
FIGS. 9A to 9C are enlarged cross-sectional views of a main part illustrating an example in which a wear-resistant member is applied to a seal groove of a ball screw feeding device according to a modification of the second embodiment.
FIGS. 10A to 10D are cross-sectional views illustrating modifications of a partition member in the second embodiment.
FIG. 11 is a view corresponding to FIG. 2 of a ball screw feeding device according to a third embodiment of the present invention.
FIG. 12 is a view corresponding to FIG. 2 of a ball screw feeding device according to a fourth embodiment of the present invention.
FIG. 13 is a view corresponding to FIG. 2, according to a modification of a bearing unit in which a pair of angular ball bearings are in back surface combination in the first to fourth embodiments.
FIG. 14 is a view corresponding to FIG. 2, according to another modification of the bearing unit in which the pair of angular ball bearings are in parallel combination in the first to fourth embodiments.
FIG. 15A is a schematic side view illustrating a first example in which the housing position adjustment mechanism is constituted by a plurality of accommodation spaces, and FIG. 15B is a schematic side view illustrating a second example in which the housing position adjustment mechanism is constituted by a plurality of accommodation spaces.
FIG. 16A is a schematic side view illustrating a third example in which the housing position adjustment mechanism is constituted by a plurality of accommodation spaces, and FIG. 16B is a schematic side view illustrating a fourth example in which the housing position adjustment mechanism is constituted by a plurality of accommodation spaces.
FIG. 17 is a schematic side view illustrating a fifth example in which the housing position adjustment mechanism is constituted by a plurality of accommodation spaces.
FIG. 18 is a cross-sectional view taken along a line XVIII-XVIII in FIG. 16A.
FIG. 19 is a view corresponding to FIG. 2 of a ball screw feeding device according to a fifth embodiment of the present invention.
FIG. 20 is a view corresponding to FIG. 2 of a ball screw feeding device according to a first modification of the fifth embodiment.

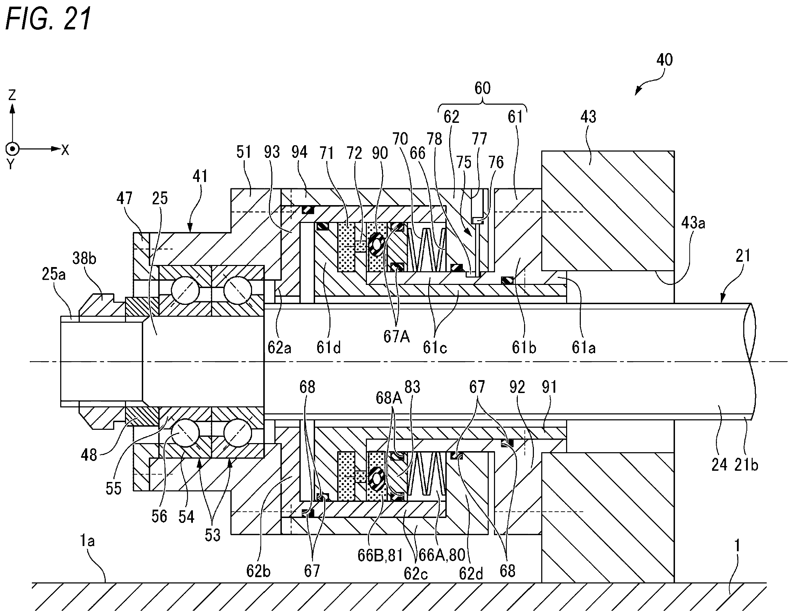

FIG. 21 is a view corresponding to FIG. 2 of a ball screw feeding device according to a second modification of the fifth embodiment.
FIG. 22 is a view corresponding to FIG. 2 of a ball screw feeding device according to a third modification of the fifth embodiment.
FIG. 23 is an enlarged view of a portion XXIII in FIG. 22.
FIG. 24 is a view corresponding to FIG. 2 of a ball screw feeding device according to a fourth modification of the fifth embodiment.
FIG. 25 is a view corresponding to FIG. 2 of a ball screw feeding device according to a fifth modification of the fifth embodiment.
FIG. 26 is a view corresponding to FIG. 2 of a ball screw feeding device according to a sixth embodiment of the present invention.
FIG. 27 is a view corresponding to FIG. 2 for illustrating a modification of a first pressure generating unit and a second pressure generating unit in the ball screw feeding device according to the first embodiment.
FIG. 28 is a view corresponding to FIG. 2 for illustrating another modification of the first pressure generating unit and the second pressure generating unit in the ball screw feeding device according to the first embodiment.
FIGS. 29A to 29C are cross-sectional views illustrating first to third modifications of a hollow member of the present invention.
FIGS. 30A to 30C are cross-sectional views illustrating fourth to sixth modifications of the hollow member of the present invention.
FIGS. 31A and 31B are cross-sectional views illustrating seventh and eighth modifications of the hollow member of the present invention.
FIGS. 32A to 32C are cross-sectional views illustrating ninth to eleventh modifications of the hollow member of the present invention.
FIG. 33A is an enlarged cross-sectional view corresponding to FIG. 2 in a phase in which an oil supply path formed in a bearing housing side member is provided to fill the accommodation spaces with a working fluid, and FIG. 33B is a cross-sectional view illustrating a modification of a stopper bolt in FIG. 33A.
FIG. 34 Ais a cross-sectional view of a stopper plug used instead of the stopper bolt in FIG. 33A, FIG. 34B is a cross-sectional view illustrating an example in which the stopper plug in FIG. 34 A and a disc-shaped member are combined, FIG. 34 C is a cross-sectional view illustrating a modification of the disc-shaped member in FIG. 34 B, and FIG. 34 Dis a cross-sectional view illustrating another modification of the disc-shaped member in FIG. 34 B.
FIG. 35 is a cross-sectional view of a table feeding system of a machine tool to which a ball screw feeding device according to a modification of the present invention is applied.
FIG. 36 is a cross-sectional view illustrating a first example of the housing position adjustment mechanism in which a support base is disposed on an axial end side with respect to the bearing unit.
FIG. 37 is a cross-sectional view illustrating a second example of the housing position adjustment mechanism in which the support base is disposed on the axial end side with respect to the bearing unit.
FIG. 38 is a cross-sectional view illustrating a third example of the housing position adjustment mechanism in which the support base is disposed on the axial end side with respect to the bearing unit.
FIG. 39 is a cross-sectional view illustrating a fourth example of the housing position adjustment mechanism in which the support base is disposed on the axial end side with respect to the bearing unit.
FIG. 40 is a cross-sectional view illustrating a rotation support device according to the present invention.
FIG. 41 is a cross-sectional view illustrating another rotation support device according to the present invention.
FIG. 42 is a cross-sectional view illustrating a shaft support device to which the support mechanism position adjustment mechanism according to the present invention is applied.
FIG. 43 is an enlarged view of a portion ILIII in FIG. 42.

### DESCRIPTION OF EMBODIMENTS

Hereinafter, each embodiment of a ball screw feeding device as an example of a rotation support device and a shaft support device according to the present invention will be described in detail with reference to the drawings.

### (First Embodiment)

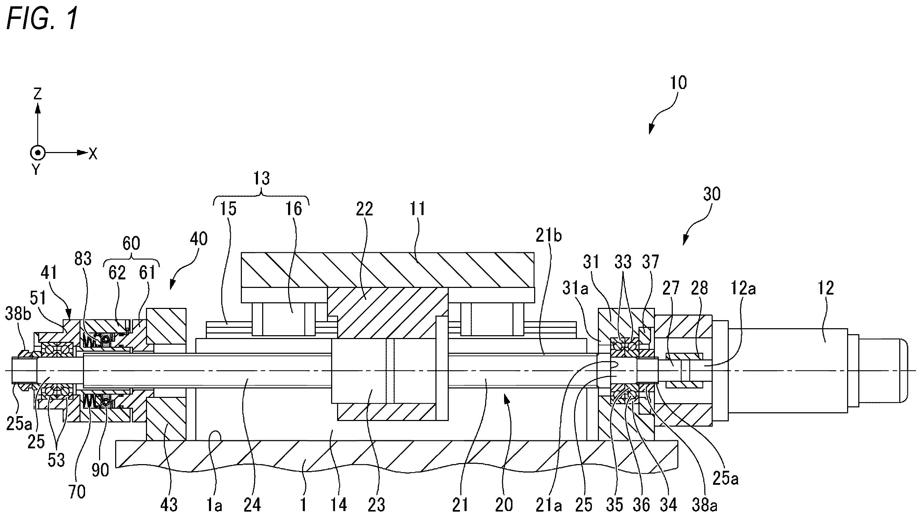

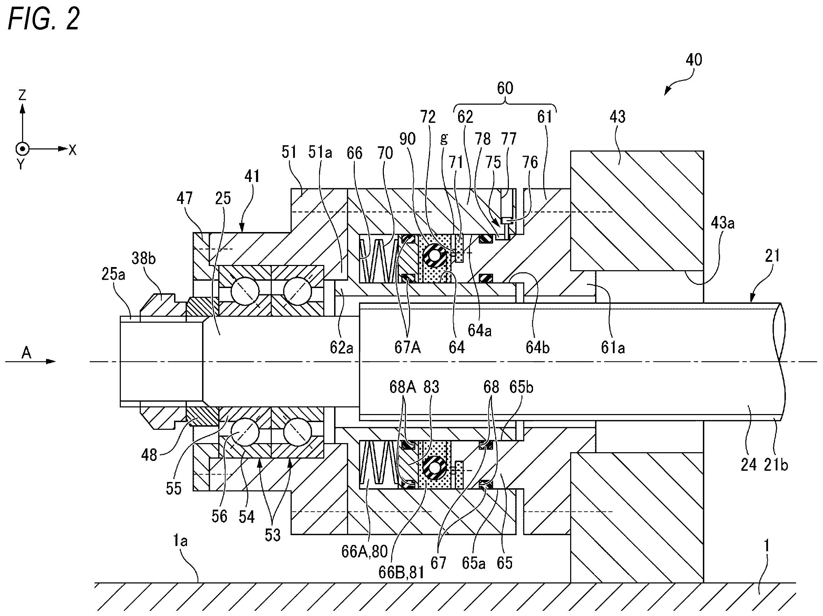

FIG. 1 illustrates a table feeding system of a machine tool to which a ball screw feeding device of a first embodiment is applied. Note that in FIGS. 1 to 3, an axial direction of a screw shaft 21 of a ball screw feeding device 20 (a left-right direction in FIG. 1) is defined as an X direction, a direction parallel to a mounting surface 1a of a base 1 and orthogonal to the axial direction of the screw shaft 21 (a direction perpendicular to a paper surface of FIG. 1) is defined as a Y direction, and a direction perpendicular to the mounting surface 1a of the base 1 (an upper-lower direction in FIG. 1) is defined as a Z direction. In FIG. 2 and each drawing corresponding to FIG. 2, a dotted line represents a bolt fastening portion.

A table feeding system 10 includes a moving table 11 fixed to a nut 23 of the ball screw feeding device 20, and is configured such that the moving table 11 is movable in the X direction by driving the screw shaft 21 of the ball screw feeding device 20 by a drive motor 12. The moving table 11 is provided with a pair of linear guides 13 (only one is illustrated in FIG. 1) on both sides of the ball screw feeding device 20 in the Y direction. Each linear guide 13 includes a guide rail 15 disposed on the base 1 in parallel with the screw shaft 21 via a rail mounting base 14, and two sliders 16 fixed to a lower surface of the moving table 11 and provided across the guide rail 15. When the screw shaft 21 is rotated by the drive motor 12, the moving table 11 is guided by the pair of linear guides 13 and linearly reciprocates together with the nut 23.

The ball screw feeding device 20 includes the screw shaft 21 having an outer peripheral surface formed with a spiral screw groove 21b, the nut 23 disposed around the screw shaft 21, having an inner peripheral surface formed with a spiral screw groove (not illustrated), and fitted to a nut housing 22 fixed to the lower surface of the moving table 11, and a plurality of balls (not illustrated) disposed between the screw groove of the nut 23 and the screw groove 21b of the screw shaft 21 in a freely rolling manner.

The screw shaft 21 is formed at a center in the axial direction, and includes a large-diameter portion 24 in which the screw groove 21b is formed, and small-diameter portions 25 formed at both ends in the axial direction of the large-diameter portion 24. A male screw 25a is formed on an outer peripheral surface on a tip side of the small-diameter portion 25, and a small-diameter shaft 27 is provided on a tip on one side (a right side in the drawing) of the screw shaft 21. A rotation shaft 12a of the drive motor 12 is connected to the small-diameter shaft 27 via a coupling 28.

For the screw shaft 21, one side of the screw shaft 21 to which the drive motor 12 is connected is supported by a first support mechanism 30 in a rotatable manner, and the other side (a left side in the drawing) of the screw shaft 21 is supported by the second support mechanism 40 in a rotatable manner.

The first support mechanism 30 includes a fixed side bearing housing 31 fixed to the base 1, and a pair of angular ball bearings 33, 33 that support the screw shaft 21 in a rotatable manner with respect to the fixed side bearing housing 31 and are arranged in front surface combination. Each of the pair of angular ball bearings 33, 33 includes an outer ring 34 fitted into the fixed side bearing housing 31, an inner ring 35 fitted onto the small-diameter portion 25 of the screw shaft 21, and a plurality of balls 36 arranged in a freely rolling manner between the outer ring 34 and the inner ring 35 with a contact angle.

In the pair of angular ball bearings 33, 33, the outer ring 34 of the angular ball bearing 33 on an inner side in the axial direction is brought into contact with an inward flange 31a of the fixed side bearing housing 31, and the outer ring 34 of the angular ball bearing 33 on an outer side in the axial direction is fixed by an outer ring retainer 37 fastened to the fixed side bearing housing 31. The inner ring 35 of the angular ball bearing 33 on the inner side in the axial direction is brought into contact with a step portion 21a between the large-diameter portion 24 and the small-diameter portion 25 of the screw shaft 21, and the inner ring 35 of the angular ball bearing 33 on the outer side in the axial direction is fastened by a fastening nut 38a screwed to the male screw 25a.

Therefore, the first support mechanism 30 supports the screw shaft 21 in a state in which a position in the axial direction of the screw shaft 21 is fixed.

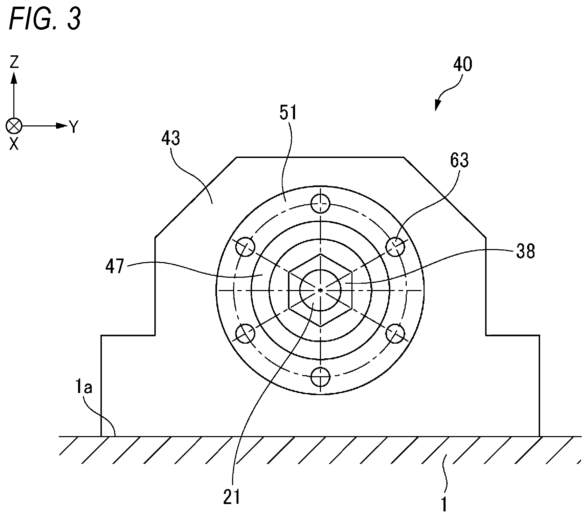

Referring also to FIGS. 2 and 3, the second support mechanism 40 includes a bearing unit 41 disposed at the end on the other side of the screw shaft 21, a support base 43 fixed to the base 1 on an axial center side of the bearing unit 41, and a housing position adjustment mechanism 60 disposed between the bearing unit 41 and the support base 43. The support base 43 is provided with a through hole 43a through which the screw shaft 21 penetrates.

The bearing unit 41 includes a movable side bearing housing 51 and a pair of angular ball bearings 53, 53 that support the screw shaft 21 in a rotatable manner with respect to the movable side bearing housing 51. The pair of angular ball bearings 53, 53 include an outer ring 54 fitted into the movable side bearing housing 51, an inner ring 55 fitted onto the small-diameter portion 25 of the screw shaft 21, and a plurality of balls 56 arranged in a freely rolling manner between the outer ring 54 and the inner ring 55 with a contact angle.

In the pair of angular ball bearings 53, 53, the outer ring 54 of the angular ball bearing 53 on the inner side in the axial direction is brought into contact with an inward flange 51a of the movable side bearing housing 51, the outer ring 54 of the angular ball bearing 53 on the outer side in the axial direction is fastened by an outer ring retainer 47 fastened and fixed to the movable side bearing housing 51, and each of the outer rings 54, 54 is positioned in the axial direction with respect to the movable side bearing housing 51. The inner ring 55 of the angular ball bearing 53 disposed on the outer side in the axial direction is fastened by a fastening nut 38b screwed to the male screw 25a via a spacer 48.

That is, the pair of angular ball bearings 53, 53, the movable side bearing housing 51, and the outer ring retainer 47 can be unitized as the bearing unit 41 in a state in which a predetermined preload is applied to the pair of angular ball bearings 53, 53 arranged in front surface combination, and the bearing unit 41 can be easily attached to the screw shaft 21 and the housing position adjustment mechanism 60. In this configuration, the movable side bearing housing 51 can be integrated with the bearing housing side member 62 as necessary.

The housing position adjustment mechanism 60 includes a support base side member 61 that is provided on the support base 43 side and through which the screw shaft 21 penetrates, and a bearing housing side member 62 that is provided on the movable side bearing housing 51 side and is movable relative to the support base side member 61 in the axial direction. The support base side member 61 and the bearing housing side member 62 face each other in the axial direction.

The support base side member 61 is fixed to the support base 43 with a plurality of bolts (not illustrated) by fitting an annular portion 61a protruding toward the support base 43 side to the through hole 43a of the support base 43. The bearing housing side member 62 is fixed to the movable side bearing housing 51 with a plurality of bolts 63 (see FIG. 3) by fitting an annular portion 62a protruding toward the movable side bearing housing 51 side to the inward flange 51a.

A side surface of the bearing housing side member 62 on the support base side member 61 side is provided with a bottomed annular concave portion 64 that opens to the support base side member 61 side (one side in the axial direction). On the other hand, a side surface of the support base side member 61 on the bearing housing side member 62 side is provided with an annular convex portion 65 protruding into the annular concave portion 64 toward the bearing housing side member 62 side (the other side in the axial direction). The annular concave portion 64 and the annular convex portion 65 are fitted so as to be slidable in the axial direction, and an annular space (accommodation space) 66 is formed between a bottom surface, the inward surface 64a, and the outward surface 64b of the annular concave portion 64 and a tip surface of the annular convex portion 65.

An annular partition member 83 having an outer peripheral surface and an inner peripheral surface in sliding contact with the inward surface 64a and the outward surface 64b of the annular concave portion 64 is disposed in an annular space 66. Accordingly, the annular space 66 is divided into a first space 66A and a second space 66B in the axial direction with the partition member 83 interposed therebetween.

A plurality of disc springs (elastic members) 70 and a first working fluid 80 are accommodated in a compressed state in the first space 66A as a first pressure generating unit, and a hollow member 90 and a second working fluid 81 are accommodated in a compressed state in the second space 66B as a second pressure generating unit.

The plurality of disc springs 70 are arranged in a compressed state between opposite end surfaces in the axial direction of the bearing housing side member 62 and the partition member 83. When the plurality of disc springs 70 function as series springs, as illustrated in FIG. 2, the plurality of disc springs 70 are arranged in a manner of overlapping each other in the axial direction such that convex surfaces of adjacent disc springs 70 face each other and concave surfaces thereof face each other. When the plurality of disc springs 70 function as parallel springs, although not illustrated, the disc springs 70 are arranged to overlap each other in the same orientation with respect to the axial direction.

The hollow member 90 is configured on the premise of a sealed structure, is a swim ring-shaped structure formed in an annular shape and having an elliptical cross-sectional shape with an inner diameter larger than that of the outward surface 64b of the annular concave portion 64 and an outer diameter smaller than that of the inward surface 64a of the annular concave portion 64, and is made by an elastically deformable rubber, resin, metal, or the like, or a combination thereof. The hollow member 90 contains any liquid or gas that has an elastic effect when an external force is applied and has industrially confirmed rigidity.

The working fluid may be a liquid such as oil or water or gas, which has substantially an elastic effect when an external force is applied and whose rigidity has been confirmed industrially, and in the present embodiment, a gas is applied as the first working fluid 80 and oil is applied as the second working fluid 81.

Therefore, in the present embodiment, the first pressure generating unit includes the disc springs 70 accommodated in the first space 66A and the first working fluid 80 with which the first space 66A around the disc springs 70 is filled. The second pressure generating unit includes the hollow member 90 accommodated in the second space 66B and the second working fluid 81 with which the second space 66B around the hollow member 90 is filled.

An O-ring 67A is mounted between the inward surface 64a of the annular concave portion 64 and an outer peripheral surface of the partition member 83 and between the outward surface 64b of the annular concave portion 64 and an inner peripheral surface of the partition member 83.

Specifically, the O-ring 67A is disposed in an annular seal groove 68A formed in the outer peripheral surface and an inner peripheral surface of the partition member 83, and comes into sliding contact with the inward surface 64a and outward surface 64b opposite to each other of the annular concave portion 64 to seal a radial gap between the outer peripheral surface of the partition member 83 and the inward surface 64a of the annular concave portion 64 and a radial gap between the inner peripheral surface of the partition member 83 and the outward surface 64b of the annular concave portion 64.

Further, an O-ring 67 is mounted between an outward surface 65a of the annular convex portion 65 and the inward surface 64a of the annular concave portion 64, and between an inward surface 65b of the annular convex portion 65 and the outward surface 64b of the annular concave portion 64. Specifically, the O-ring 67 is disposed in an annular seal groove 68 formed in the outward surface 65a and the inward surface 65b of the annular convex portion 65, and comes into sliding contact with the inward surface 64a and the outward surface 64b of the annular concave portion 64 opposite to each other to seal a radial gap between the outward surface 65a of the annular convex portion 65 and the inward surface 64a of the annular concave portion 64 and a radial gap between the inward surface 65b of the annular convex portion 65 and the outward surface 64b of the annular concave portion 64. Note that the seal groove 68 may be formed on the inward surface 64a and the outward surface 64b of the annular concave portion 64. Although the O-rings 67, 67A and the seal grooves 68, 68A are provided between opposite surfaces, respectively, a plurality of O-rings and a plurality of seal grooves may be provided. Accordingly, the O-ring 67, 67A prevents leakage of the first working fluid 80 in the first space 66A and the second working fluid 81 in the second space 66B. The O-ring 67 may be subjected to a surface treatment having wear resistance or the like from a viewpoint of preventing wear.

A rotation prevention mechanism 75 is provided between the support base side member 61 and the bearing housing side member 62 to prevent relative rotation therebetween. Specifically, for example, a through hole 77 penetrating in a radial direction is formed on at least one place in a circumferential direction of the bearing housing side member 62 such that a tip of a positioning pin 76 protrudes from the inward surface 64a of the annular concave portion 64. The tip of the positioning pin 76 is inserted into a long hole 78 formed along the axial direction in the outward surface 65a of the annular convex portion 65 of the support base side member 61 so that the bearing housing side member 62 can move in the axial direction. Note that the positioning pin 76 may be replaced by inserting a positioning key (not illustrated) or the like in a rotation direction having a similar rotation prevention function into the long hole 78 so that the bearing housing side member 62 can be moved in the axial direction.

In addition, a storage chamber 71 is formed in the annular convex portion 65, and an orifice 72 along the axial direction is formed on at least one place (two places in FIG. 2) in the circumferential direction so as to establish communication between the storage chamber 71 and the annular space 66.

The storage chamber 71 is opened to the outward surface 65a of the annular convex portion 65 on the tip surface side of the annular convex portion 65 with respect to the seal groove 68 in which the O-ring 67 is disposed, and is formed in a disc groove shape. Therefore, in the present embodiment, the second working fluid 81 is stored in the storage chamber 71 and the orifice 72 in addition to the second space 66B.

Such a housing position adjustment mechanism 60 uses the partition member 83 to accommodate the disc springs 70 and the first working fluid 80 in the first space 66A and accommodate the hollow member 90 and the second working fluid 81 in the second space 66B, and then fastens the fastening nut 38b to push the bearing housing side member 62 toward the support base side member 61 side via the pair of angular ball bearings 53, 53 and the movable side bearing housing 51. Accordingly, in the first space 66A, the plurality of disc springs 70 and the first working fluid 80 are compressed, and a pressure in a screw shaft direction is applied to the plurality of disc springs 70 and the first working fluid 80. In the second space 66B, the hollow member 90 and the second working fluid 81 are compressed, and a pressure in the screw shaft direction is applied to the hollow member 90 and the second working fluid 81.

On the other hand, since the support base side member 61 is fixed to the base 1 via the support base 43, the bearing housing side member 62 and the movable side bearing housing 51 are pressed to the left direction in the drawing by the pressures of the plurality of disc springs 70 and the first working fluid 80 accommodated in the first space 66A and the hollow member 90 and the second working fluid 81 accommodated in the second space 66B in a compressed state. As a result, a state is provided in which a tension to the left direction in FIGS. 1 and 2 is applied to the screw shaft 21 in advance.

The pressure of the plurality of disc springs 70 and the first working fluid 80 accommodated in the first space 66A and the pressure of the hollow member 90 and the second working fluid 81 accommodated in the second space 66B can be controlled to any size by a fastening amount of the fastening nut 38b. That is, a size of an axial load applied to the screw shaft 21 by the fastening nut 38b can be set to any size by a total pressure in the screw shaft direction generated by the plurality of disc springs 70 and the first working fluid 80 and the hollow member 90 and the second working fluid 81 in a compressed state, and a desired compression characteristic can be achieved.

Next, functions of the ball screw feeding device 20 of the present embodiment will be described.

In the ball screw feeding device 20, when the screw shaft 21 is driven to rotate by the drive motor 12 and the moving table 11 fixed to the nut 23 is linearly reciprocated, the drive motor 12, the angular ball bearing 33,53, the nut 23, and the like generate heat along with the reciprocating motion, a temperature of the ball screw feeding device 20 gradually rises, and the screw shaft 21 extends in the axial direction due to thermal expansion.

When the screw shaft 21 extends in the axial direction due to thermal expansion, in the ball screw feeding device 20 of the present embodiment illustrated in FIG. 1, since a right end of the screw shaft 21 is fixed to the fixed side bearing housing 31 via the angular ball bearings 33, 33, the screw shaft 21 extends in the left direction. When the screw shaft 21 extends in the axial direction (left direction) due to an influence of heat, the bearing unit 41 and the bearing housing side member 62 move in the same direction following the extension of the screw shaft 21 in the axial direction due to thermal expansion by the pressures of the plurality of disc springs 70 and the first working fluid 80 arranged in the first space 66A and the hollow member 90 and the second working fluid 81 arranged in the second space 66B.

Especially, since the hollow member 90 is accommodated in the second space 66B in a floating manner via the second working fluid 81, the pressure generated by the hollow member 90 is transmitted to the bearing unit 41 and the bearing housing side member 62 via the second working fluid 81.

In the present embodiment, even when the screw shaft 21 extends in the axial direction, the plurality of disc springs 70 and the first working fluid, and the hollow member 90 and the second working fluid 81 are designed to continuously press the bearing unit 41 and the bearing housing side member 62 to the left direction. The plurality of disc springs 70, the hollow member 90, and the annular space 66 have a large degree of freedom in design, and by appropriately selecting physical properties of the working fluid in the annular space and the size and shape of the annular space, it is possible to apply a sufficient and appropriate load corresponding to the larger extension of the shaft. Therefore, even when the temperature of the ball screw feeding device 20 rises by more than 4 degrees, support rigidity in the axial direction can be maintained by moving the pair of angular ball bearings 53, 53 in the axial direction, and rigidity in the axial direction of the ball screw feeding device 20 is stabilized.

Especially, since the pressure by the plurality of disc springs 70 and the hollow member 90 can be changed corresponding to the extension in the axial direction of the screw shaft 21 even when the temperature rises by more than 4 degrees, while the screw shaft 21 is extended in the axial direction, the rigidity in the axial direction of the ball screw feeding device 20 is stabilized while maintaining the state in which the pair of angular ball bearings 33, 33 are fixed supports.

In this case, since an excessive load does not act on the pairs of angular ball bearings 33, 33 and 53, 53, there is no risk that excessive wear, seizure, or the like due to poor lubrication occurs, and lifetimes of the pairs of angular ball bearings 33, 33 and 53, 53 become long.

That is, in the present embodiment, since it is not necessary to apply a pre-tension having a size as that applied by the spacer in the ball screw described in Patent Literature 1 to the screw shaft 21, an excessive load does not act on the pairs of angular ball bearings 33, 33 and 53, 53.

Further, in the ball screw feeding device 20 of the present embodiment, it is not necessary to install an external device such as an accumulator or a pump for supplying the working fluids 80, 81 to the annular space 66, and the housing position adjustment mechanism 60 can be simplified. As a result, the pressure in the annular space 66 can be maintained with as little change as possible without consuming energy supplied from outside. Note that the ball screw feeding device 20 of the present embodiment may be configured to include an external device for supplying the working fluid to the outside.

The O-rings 67, 67A of the present embodiment also act as damping mechanisms. That is, when a workpiece placed on the moving table 11 is machined, the screw shaft 21 having relatively low rigidity also tends to vibrate due to vibration generated in the moving table 11. The vibration of the screw shaft 21 is also transmitted to the bearing housing side member 62 via the pair of angular ball bearings 33, 33 and the movable side bearing housing 51, but the vibration of the bearing housing side member 62 is damped by the O-rings 67, 67A between the bearing housing side member 62 and the support base side member 61. Therefore, the vibration of the screw shaft 21 can also be damped, and disturbance of machined surface quality of the workpiece placed on the moving table 11 can be prevented.

In this case, the O-rings 67, 67A arranged between the bearing housing side member 62 and the support base side member 61 can damp not only the vibration in the axial direction of the screw shaft 21 but also vibration in the radial direction of the screw shaft 21.

The first and second working fluids 80, 81 of the housing position adjustment mechanism 60 are stored not only in the first space 66A and the second space 66B, respectively, but also in gaps between the outward surface 65a of the annular convex portion 65 and the inward surface 64a of the annular concave portion 64 and between the inward surface 65b of the annular convex portion 65 and the outward surface 64b of the annular concave portion 64, and on the annular space 66 side of the O-ring 67. Therefore, the bearing housing side member 62 is supported with a sufficient and appropriate load in the radial direction with respect to the support base side member 61 by the first and second working fluids 80, 81.

As a result, the housing position adjustment mechanism 60 can provide the support rigidity in the radial direction to the screw shaft 21 via the pair of angular ball bearings 53, 53 and the bearing housing 51, and can also have an alignment function with respect to the screw shaft 21.

In the present embodiment, since the bearing housing side member 62 vibrates together with the movable side bearing housing 51 and the pair of angular ball bearings 33, 33 due to the vibration of the screw shaft 21, the second working fluid 81 in the annular space 66 and the storage chamber 71 passes through the orifice 72 and a gap g between the outward surface 65a of the annular convex portion 65 and the inward surface 64a of the annular concave portion 64, so that the vibration can be damped. Therefore, similarly to the O-rings 67, 67A described above, when the workpiece placed on the moving table 11 is machined, the vibration transmitted to the screw shaft 21 can be damped, and the disturbance of the machined surface quality of the workpiece can be further prevented.

The second working fluid 81 can exhibit the above-described damping function for the screw shaft 21 by passing through the gap g between the annular convex portion 65 and the annular concave portion 64 and flowing through the storage chamber 71 and the orifice 72.

Therefore, according to the ball screw feeding device 20 of the present embodiment, by disposing the partition member 83 in the annular space 66, even when an axial length of the screw shaft 21 changes due to the influence of heat, the support rigidity in the axial direction can be continuously and stably maintained, and the vibration in the axial direction and the radial direction can be damped, by the plurality of disc springs 70 and the first working fluid 80, and the hollow member 90 and the second working fluid 81, which are two types of pressure generating members accommodated in the annular space 66.

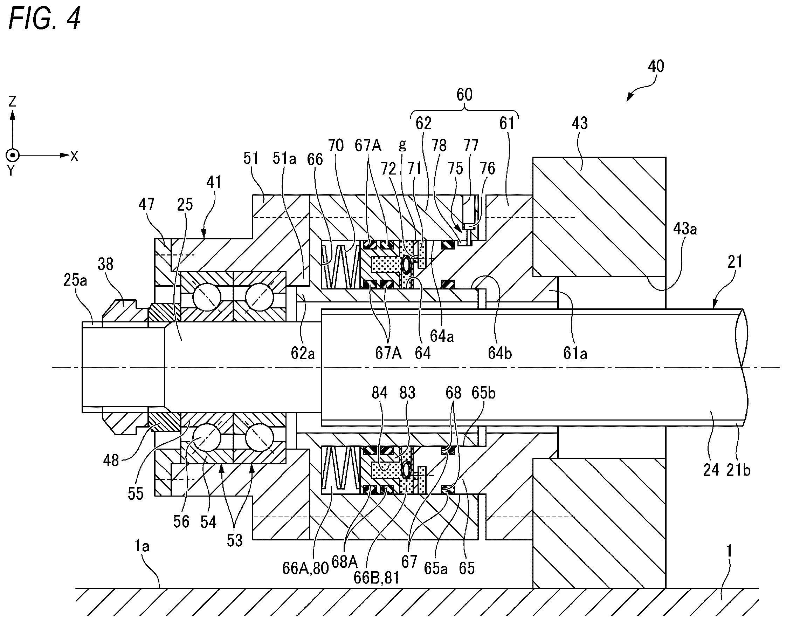

Note that as illustrated in FIG. 4, the partition member 83 may be elongated in the axial direction, and two O-rings 67A may be arranged side by side in the axial direction to improve a sealing property and the damping mechanism. The partition member 83 may be formed with an annular groove 84 opening to one side surface in the axial direction in an intermediate portion in the radial direction. Accordingly, the working fluid can be accommodated in the annular groove 84, and the compact configuration of the housing position adjustment mechanism 60 can be maintained.

Note that the annular groove 84 is not limited to being open to one side surface in the axial direction, and may be formed on both sides in the axial direction so as to open to both side surfaces in the axial direction.

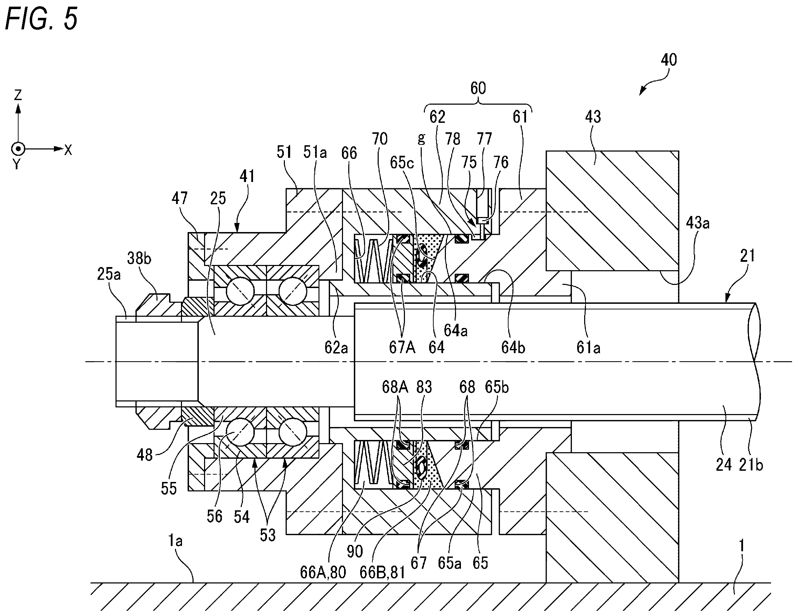

As a modification of the present embodiment, as illustrated in FIG. 5, a tip surface 65c of the annular convex portion 65 of the support base side member 61 may be formed in a pointed convex tapered shape from an inner peripheral edge to an outer peripheral edge such that an axial length of the second space 66B gradually increases toward an outer side in the radial direction.

Accordingly, since the bearing housing side member 62 is further aligned with respect to the support base side member 61 by the second working fluid 81 in the second space 66B, the alignment function of the pair of angular ball bearings 53, 53 with respect to the screw shaft 21 can be further improved.

Note that although not illustrated, when the tip surface 65c of the annular convex portion 65 of the support base side member 61 has a conical concave tapered shape from an outer peripheral edge toward an inner peripheral edge, coaxial performance of the pair of angular ball bearings 53, 53 with respect to the screw shaft 21 can be improved.

In the ball screw feeding device 20 illustrated in FIG. 2, the storage chamber 71 in communication with the second space 66B via the orifice 72 is provided, and the second working fluid 81 constituting the second pressure generating unit is accommodated not only in the second space 66B but also in the storage chamber 71 and the orifice 72 in a compressed state. As illustrated in FIG. 5, the annular convex portion 65 may have a configuration in which the storage chamber 71 and the orifice 72 are not provided, and in this case, the second working fluid 81 is accommodated in the second space 66B in a compressed state.

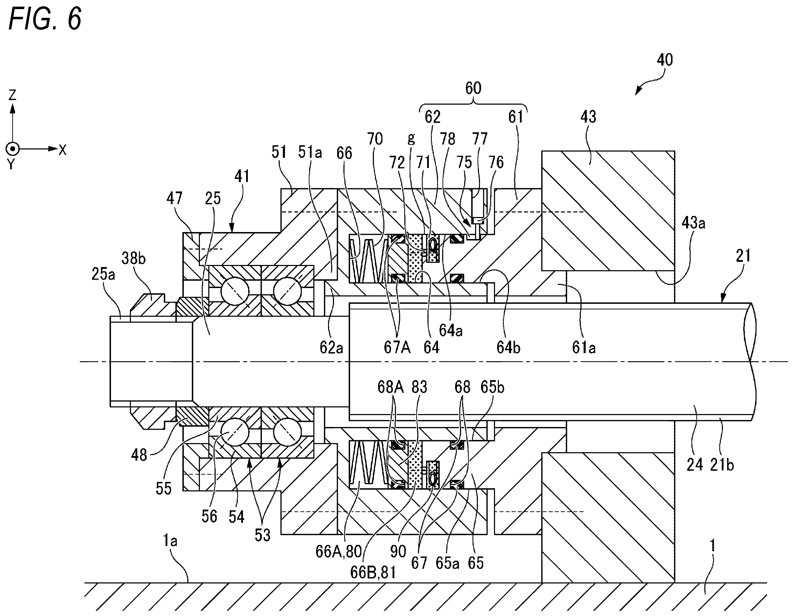

Further, as another modification of the present embodiment, as illustrated in FIG. 6, the hollow member 90 configured on the premise of a sealed structure may be disposed in the storage chamber 71 in communication with the second space 66B, instead of the second space 66B.

In this case, the second pressure generating unit includes the second working fluid 81 accommodated in the second space 66B, the storage chamber 71, and the orifice 72 in a compressed state, and the hollow member 90 accommodated in the storage chamber 71.

Although not illustrated, the support base side member 61 may be integrally formed with the support base 43, and the bearing housing side member 62 may also be integrally formed with the movable side bearing housing 51.

### (Second Embodiment)

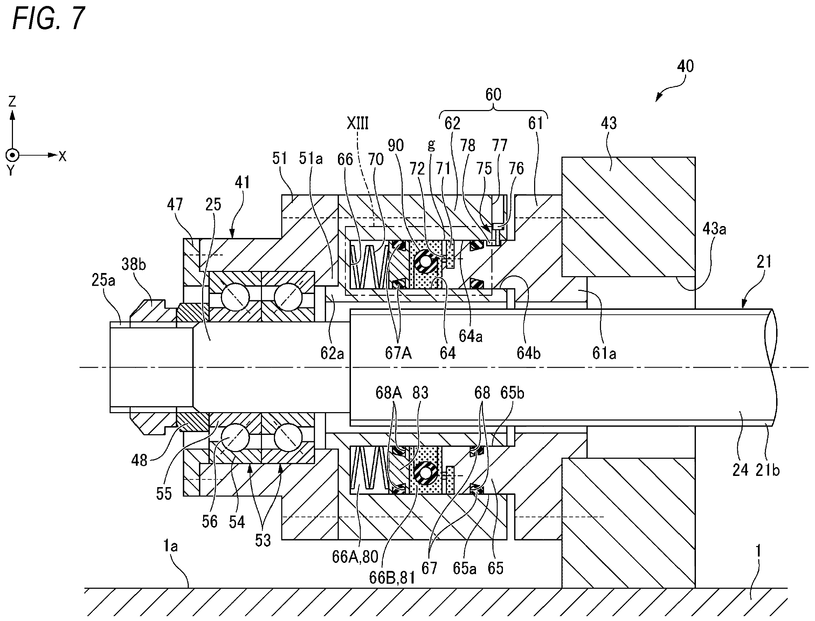

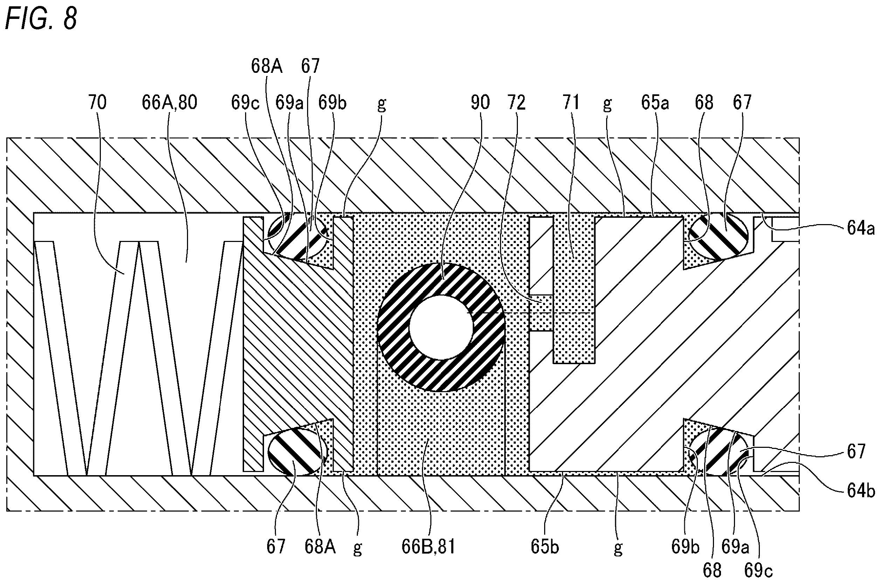

Next, a ball screw feeding device according to a second embodiment of the present invention will be described with reference to FIGS. 7 and 8. Note that in the present embodiment, the configuration of the housing position adjustment mechanism 60 of the second support mechanism 40 is different from that of the first embodiment.

In the housing position adjustment mechanism 60 of the second embodiment, the seal groove 68 formed on the outward surface 65a and the inward surface 65b of the annular convex portion 65 and the seal groove 68A formed on the outer peripheral surface and the inner peripheral surface of the partition member 83 are configured by a tapered surface 69a whose groove depth decreases as a distance from the second space 66B increases, and both side surfaces 69b, 69c in the axial direction having a circular ring shape extending along the radial direction from both end edges in the axial direction of the tapered surface 69a.

A distance in the axial direction between both side surfaces 69b, 69c in the axial direction is larger than a width in the axial direction of the O-ring 67 in a state of being elastically deformed and mounted in the seal grooves 68, 68A. Accordingly, the second working fluid 81 that has passed through the gap g from the second space 66B flows around to the vicinity of a boundary between the side surface 69b in the axial direction having a large groove depth and the tapered surface 69a.

Therefore, as the pressure of the second working fluid 81 in the second space 66B increases and then the O-ring 67 is pushed toward the atmospheric pressure side or the first space 66A side by the second working fluid 81, a sealing property of the O-ring 67 is further improved by a wedge structure between the tapered surface 69a of the seal grooves 68, 68A and the opposite inward surface 64a or outward surface 64b of the annular concave portion 64. As a result, even when the relative movement between the support base side member 61 and the bearing housing side member 62 occurs, the leakage of the second working fluid 81 to the atmospheric pressure side or the first space 66A side can be prevented, and the axial rigidity of the ball screw feeding device 20 can be continuously maintained.

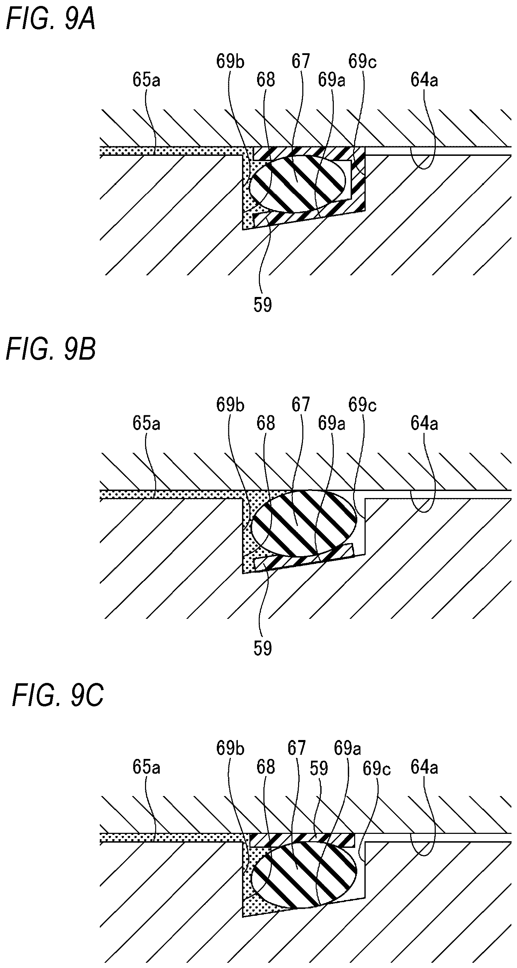

Note that as modifications of the present embodiment, as illustrated in FIGS. 9A to 9C, a wear-resistant member 59 may be interposed between the O-ring 67 and at least one of the inward surface 64a of the annular concave portion 64 and the outward surface 65a of the annular convex portion 65 (in the present embodiment, the tapered surface 69a of the seal groove 68 formed on the outward surface 65a).

Specifically, as illustrated in FIG. 9A, the wear-resistant member 59 may be formed as an annular member having a U-shaped cross section so as to be positioned between an outer peripheral surface of the O-ring 67 and the inward surface 64a of the annular concave portion 64 and between an inner peripheral surface of the O-ring 67 and the tapered surface 69a of the seal grooves 68, 68A formed on the outward surface 65a of the annular convex portion 65.

As illustrated in FIG. 9B, the wear-resistant member 59 may be formed as an annular member having a linear cross section so as to be positioned between the inner peripheral surface of the O-ring 67 and the tapered surface 69a of the seal grooves 68, 68A formed on the outward surface 65a of the annular convex portion 65. Further, as illustrated in FIG. 9C, the wear-resistant member 59 may be formed as an annular member having a linear cross section so as to be positioned between the outer peripheral surface of the O-ring 67 and the inward surface 64a of the annular concave portion 64.

As the wear-resistant member 59, for example, a resin material such as fluorine-based resin or a metal material subjected to appropriate surface treatment is used.

In any form of FIGS. 9A to 9C, by using the wear-resistant member 59, stress concentration applied to the O-ring 67 can be dispersed, and damage such as wear of the O-ring 67 and a contact surface with the O-ring 67 can be prevented.

Note that as illustrated in FIG. 8, the wear-resistant member 59 may also be interposed between the O-ring 67 and at least one of the outward surface 64b of the annular concave portion 64 and the inward surface 65b of the annular convex portion 65 (in FIG. 8, the tapered surface 69a of the seal groove 68 formed on the inward surface 65b).

In FIGS. 9A to 9C, the wear-resistant member 59 is interposed between the O-ring 67 and a surface opposite to the O-ring 67 in the seal groove 68 having the tapered surface 69a. On the other hand, the above effect can also be achieved by interposing the wear-resistant member 59 between the O-ring 67 and the surface opposite to the O-ring 67 in the seal groove 68 having a uniform groove depth as illustrated in FIG. 2.

The wear-resistant member 59 may be interposed between the O-ring 67 and at least one of the inward surface 64a of the annular concave portion 64 and the outer peripheral surface of the partition member 83 (in the present embodiment, the seal groove 68A formed on the outer peripheral surface). Further, the wear-resistant member 59 may be interposed between the O-ring 67 and at least one of the outward surface 64b of the annular concave portion 64 and the inner peripheral surface of the partition member 83 (in the present embodiment, the seal groove 68A formed on the inner peripheral surface).

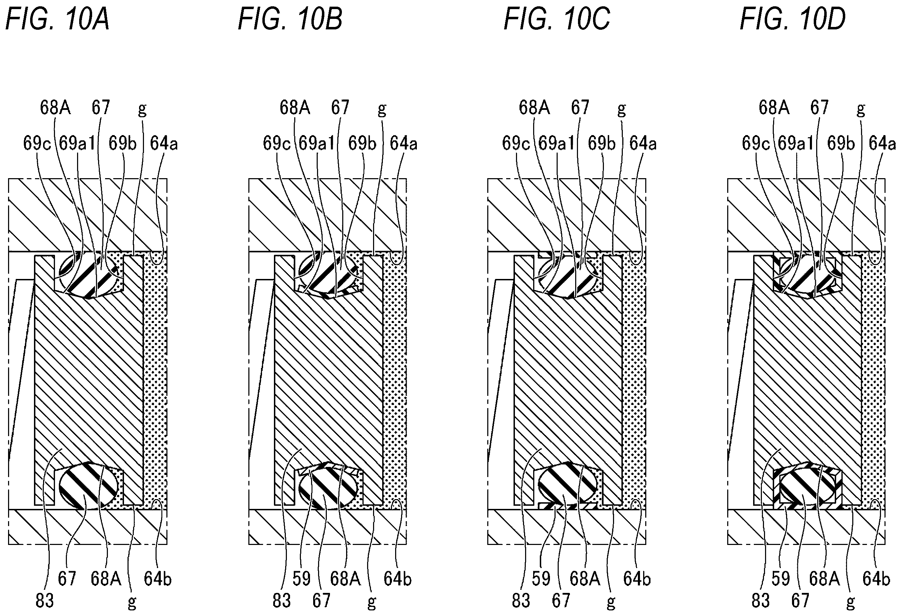

In addition, as illustrated in FIGS. 10A to 10D, the seal groove 68A formed in the outer peripheral surface and the inner peripheral surface of the partition member 83 may have a V-shaped groove bottom surface 69a1 in which a groove gradually deepens from both side surfaces 69b and 69c in the axial direction toward an intermediate portion in the axial direction.

The O-ring 67 is interposed between two tapered surfaces constituting the groove bottom surface 69a1 and the inward surface 64a of the annular concave portion 64 (or the outward surface 64b of the annular concave portion 64) to seal the first working fluid 80 in the first space 66A and the second working fluid 81 in the second space 66B. When the O-ring 67 moves on the tapered surface of the groove bottom surface 69a1 toward one of the side surfaces 69b and 69c in the axial direction according to a pressure difference between the first space 66A and the second space 66B, the sealing property for the first and second working fluids 80 and 81 is improved by a wedge function. Note that the partition member 83 itself may move in the axial direction according to the pressure difference between the first space 66A and the second space 66B, and in that case, a contact position between the groove bottom surface 69a1 of the partition member 83 and the O-ring 67 changes.

Note that as illustrated in FIGS. 10B to 10D, the wear-resistant member 59 may be interposed between the O-ring 67 and at least one of the inward surface 64a of the annular concave portion 64 and the outer peripheral surface of the partition member 83 (in the present embodiment, the seal groove 68A formed on the outer peripheral surface). The wear-resistant member 59 may be interposed between the O-ring 67 and at least one of the outward surface 64b of the annular concave portion 64 and the inner peripheral surface of the partition member 83 (in the present embodiment, the seal groove 68A formed on the inner peripheral surface).

Other configurations and operations are similar as those of the first embodiment.

### (Third Embodiment)

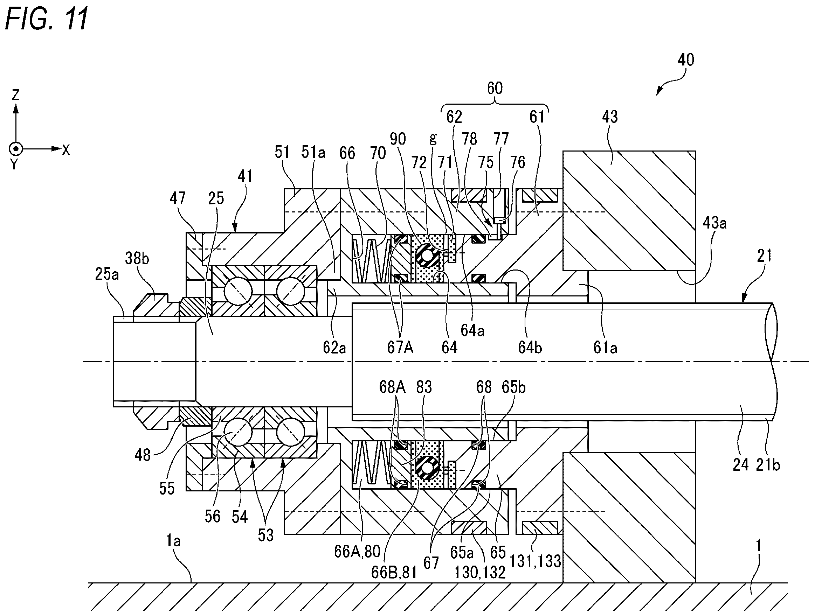

Next, a ball screw feeding device according to a third embodiment of the present invention will be described with reference to FIG. 11. Note that in the present embodiment, the configuration of the housing position adjustment mechanism 60 of the second support mechanism 40 is different from that of the first embodiment.

In the housing position adjustment mechanism 60 of the third embodiment, heating elements 130, 131 as working medium volume change units, such as a heating wire or a rubber heater, are annularly or discretely arranged on an outer peripheral surface of the support base side member 61 and an outer peripheral surface of the bearing housing side member 62.

In this way, heat from the heating elements 130, 131 is transferred from the support base side member 61 and the bearing housing side member 62 to the hollow member 90 and the first and second working fluids 80, 81 in the first and second spaces 66A and 66B, and the hollow member 90 and the first and second working fluids 80, 81 are heated, so that volumes of the hollow member 90 and the first and second working fluids 80, 81 can be expanded.

As a result, even when the screw shaft 21 extends in the axial direction, a load is excited in the first and second spaces 66A and 66B by the volume expansion of the hollow member 90 and the first and second working fluids 80, 81, so that the support rigidity in the axial direction can be maintained.

Note that in the present embodiment, the heating elements 130, 131 are attached as the working medium volume change units to the outer peripheral surface of the support base side member 61 and the outer peripheral surface of the bearing housing side member 62, but cooling media 132, 133 such as cooling jackets or cooling elements may be attached instead.

By using the cooling media 132, 133, even when the load excited in the first and second spaces 66A and 66B due to the volume expansion of the hollow member 90 and the first and second working fluids 80, 81 becomes excessive, the hollow member 90 and the first and second working fluids 80, 81 can be cooled to reduce the volumes of the hollow member 90 and the first and second working fluids 80, 81. Accordingly, the support rigidity of the ball screw feeding device 20 in the axial direction can be prevented from being excessively increased, and the support rigidity in the axial direction can be continuously maintained in a stable state.

In the present embodiment, since the temperatures of the hollow member 90 and the first and second working fluids 80, 81 are affected by the components, an installation environment, an operation cycle, and the like of the ball screw feeding device 20, the hollow member 90 and the first and second working fluids 80, 81 may be controlled to target temperatures by forming a feedback loop for the temperatures of the components, the hollow member 90, the first and second working fluids 80, 81, and the like using the heating elements 130, 131 and the cooling media 132, 133. Further, in the present embodiment, operations of the heating elements 130, 131 and the cooling media 132, 133 may be feedback-controlled in consideration of the volume change of the first and second working fluids 80, 81, a state of the pressures in the first and second spaces 66A, 66B, relative displacement in the axial direction between the support base side member 61 and the bearing housing side member 62, and the like.

In the present embodiment, the working medium volume change units are attached to both the support base side member 61 and the bearing housing side member 62, but may be attached to either one of the support base side member 61 and the bearing housing side member 62.

Further, in the present embodiment, the working medium volume change units are provided on the outer peripheral surface of the support base side member 61 and the outer peripheral surface of the bearing housing side member 62, but the working medium volume change units can be attached to any position such as a side surface in the axial direction, an inner peripheral surface, or the inside thereof as long as the working medium volume change units can expand or contract the volumes of the hollow member 90 and the first and second working fluids 80, 81 in the first and second spaces 66A, 66B.

In addition, a heating element may be attached to either one of the support base side member 61 and the bearing housing side member 62, and a cooling medium may be attached to the other. The heating element and the cooling medium may be provided so as to coexist in both the support base side member 61 and the bearing housing side member 62.

Other configurations and operations are similar as those of the first embodiment.

### (Fourth Embodiment)

Next, a ball screw feeding device according to a fourth embodiment of the present invention will be described with reference to FIG. 11. Note that the present embodiment is different from the first embodiment in that the second support mechanism 40 further includes another housing position adjustment mechanism 160.

That is, the second support mechanism 40 of the fourth embodiment further includes another housing position adjustment mechanism 160 disposed adjacent to the housing position adjustment mechanism 60 between the bearing unit 41 and the support base 43.

The another housing position adjustment mechanism 160 includes another support base side member 161 which is provided on the support base 43 side and through which the screw shaft 21 penetrates, another bearing housing side member 162 which is provided on the bearing housing 51 side, through which the screw shaft 21 penetrates, and which is movable in the axial direction relative to the another support base side member 161, and a partition member 183 which is disposed in another accommodation space formed between the another support base side member 161 and the another bearing housing side member 162 and which divides the another accommodation space into a third space 166A and a fourth space 166B in the axial direction. Further, the another housing position adjustment mechanism 160 includes the plurality of disc springs 70 and the first working fluid 80 as a third pressure generating unit accommodated in the third space 166A in a compressed state, and the hollow member 90 and the second working fluid 81 as a fourth pressure generating unit accommodated in the fourth space 166B in a compressed state. That is, the second support mechanism 40 includes two housing position adjustment mechanisms 60, 160 having a tandem configuration arranged in series in the axial direction.

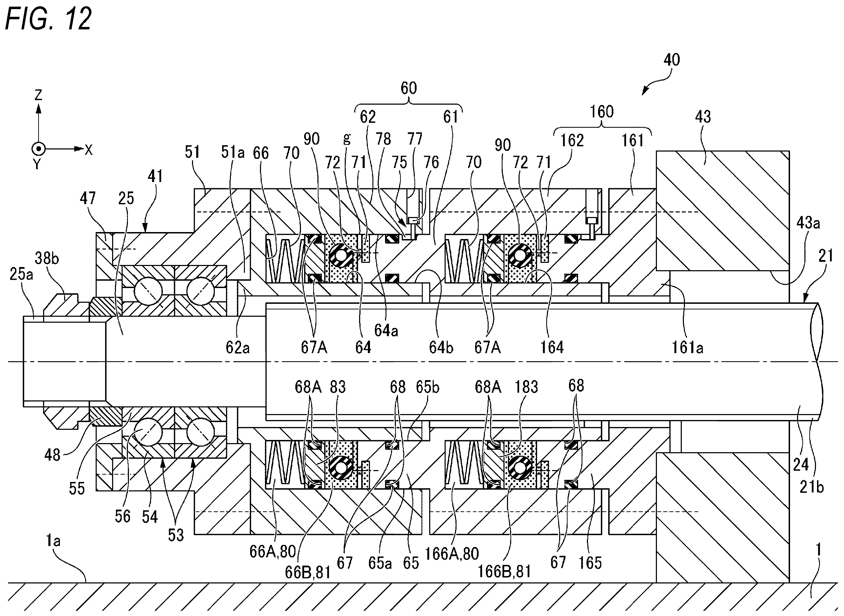

As illustrated in FIG. 12, in the another housing position adjustment mechanism 160, the another bearing housing side member 162 has an annular concave portion 164, the another support base side member 161 has an annular convex portion 165 fitted in the annular concave portion 164 in a slidable manner in the axial direction, and the third pressure generating unit and the fourth pressure generating unit are arranged with the partition member 183 interposed therebetween in the another accommodation space formed between the another support base side member 161 and the another bearing housing side member 162.

In the present embodiment, the another support base side member 161 is fixed to the support base 43 with a plurality of bolts (not illustrated) by fitting an annular portion 161a protruding toward the support base 43 side to the through hole 43a of the support base 43. Further, the support base side member 61 of the housing position adjustment mechanism 60 and the another bearing housing side member 162 of the another housing position adjustment mechanism 160 are configured by two single members or integrally configured by connecting the two members.

As described above, since the two housing position adjustment mechanisms 60, 160 are arranged in series in the axial direction, even when the extension of the screw shaft is further increased, it is possible to stably maintain the axial rigidity of the ball screw feeding device 20, and it is also possible to improve aligning performance and the coaxial performance in the axial direction.

Note that the another housing position adjustment mechanism 160 is not limited to the same configuration as the housing position adjustment mechanism 60 as illustrated in FIG. 12, and may have a different configuration as long as at least the third pressure generating unit that is accommodated in a compressed state in the another accommodation space formed between the another support base side member 161 and the another bearing housing side member 162 is provided. For example, the partition member may not be provided in the another accommodation space, and only the plurality of disc springs 70 may be arranged as the third pressure generating unit.

The second support mechanism 40 may have three or more housing position adjustment mechanisms in addition to the two housing position adjustment mechanisms 60, 160, and may have a configuration in which a plurality of housing position adjustment mechanisms are arranged in series in the axial direction.

Other configurations and operations are similar as those of the first embodiment.

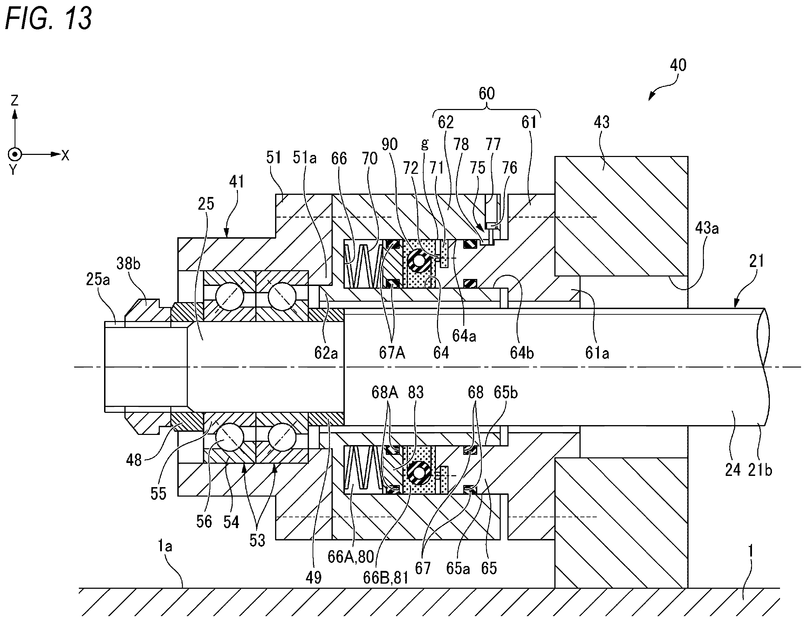

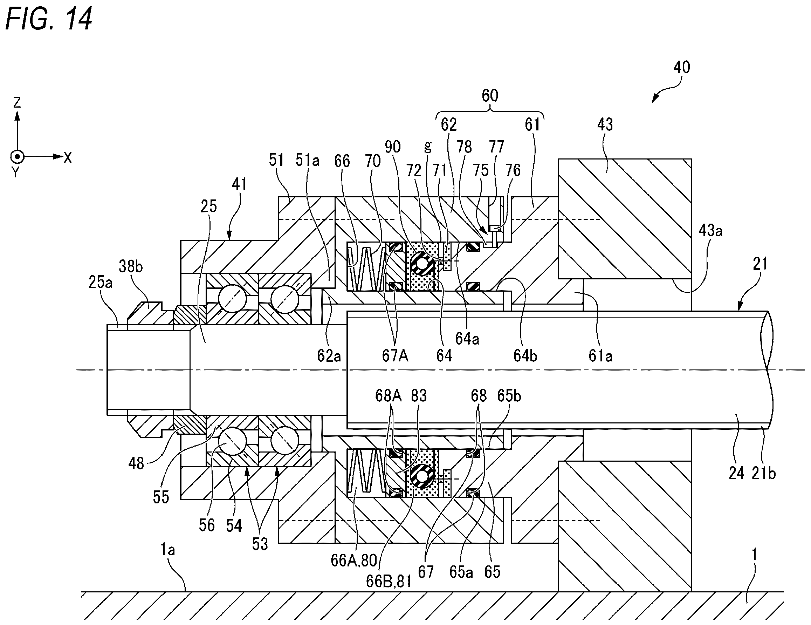

Note that in the first to fourth embodiments, the pair of angular ball bearings applied to the bearing unit of the second support mechanism are arranged in front surface combination, but the combination arrangement is not limited thereto. That is, the pair of angular ball bearings 53, 53 may be arranged in various support forms such as a back surface combination as illustrated in FIG. 13 or a parallel combination as illustrated in FIG. 14. Note that as illustrated in FIG. 13, when the pair of angular ball bearings 53, 53 are arranged in back surface combination, an inner ring spacer 49 may be disposed between the step between the large-diameter portion 24 and the small-diameter portions 25 of the screw shaft 21 and the inner ring 55 of the angular ball bearing 53 on an inner side in the axial direction.

The pair of angular ball bearings 33, 33 of the first support mechanism are also arranged in front surface combination, but may be arranged in various support forms such as back surface combination or parallel combination.

Further, although not illustrated, the angular ball bearings 33, 53 are not necessarily constituted by two angular ball bearings, and may be constituted by three or more angular ball bearings.

Further, in the above embodiment, the another housing position adjustment mechanism 160 is disposed adjacent to the housing position adjustment mechanism 60 in the axial direction, but the present invention is not limited thereto, and the another housing position adjustment mechanism 160 may be disposed adjacent to the housing position adjustment mechanism 60 in the radial direction in parallel.

In this way, it is possible to maintain the axial rigidity of the ball screw feeding device 20 in a state in which a larger axial load is generated than when a single housing position adjustment mechanism is disposed, while reducing an axial dimension of the ball screw feeding device 20.

Although the annular concave portion is provided in the bearing housing side member and the annular convex portion is provided in the support base side member in the above embodiment, the present invention is not limited thereto, and the annular concave portion may be provided in the support base side member and the annular convex portion may be provided in the bearing housing side member.

Further, in the above embodiment, the annular space 66 is formed in an annular shape by the annular concave portion 64 and the annular convex portion 65, but a plurality of concave portions and convex portions may be formed in the circumferential direction, and the partition member may be disposed in each of the plurality of accommodation spaces. Furthermore, in this case, an O-ring may be disposed between an inner peripheral surface of the concave portion and an outer peripheral surface of the convex portion to have a fluid leakage and damping function, and a storage chamber opening to the outer peripheral surface of the convex portion and an orifice that establishes communication between the storage chamber and the second space may be provided to have an additional damping function.

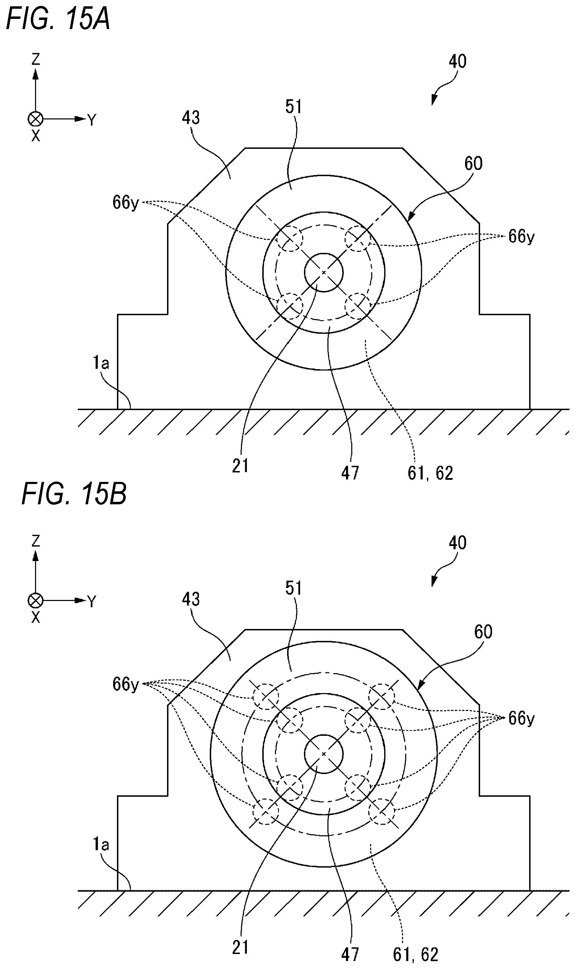

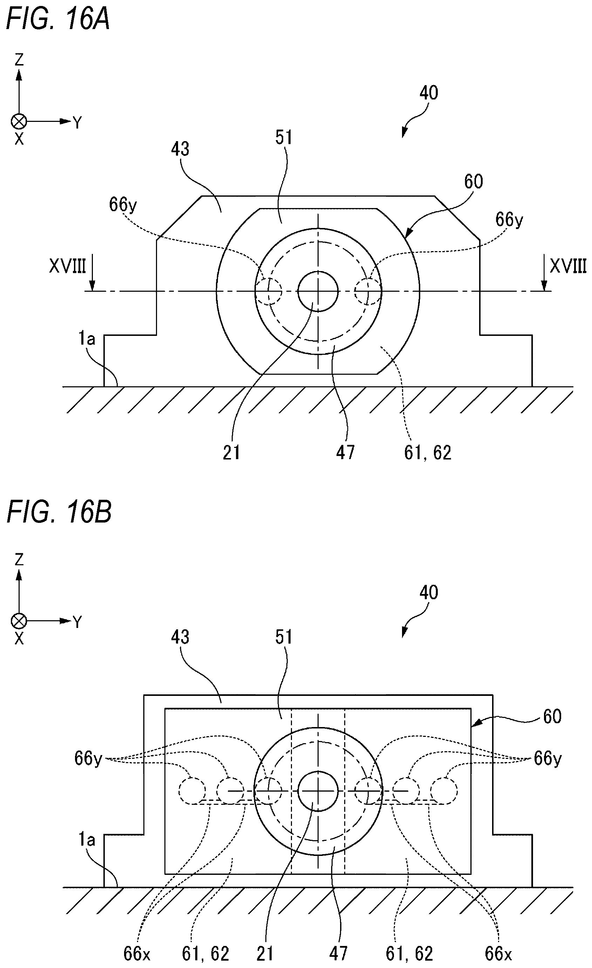

For example, as illustrated in FIG. 15A, four accommodation spaces 66y may be arranged around the screw shaft 21 in the circumferential direction, and as illustrated in FIG. 15B, two accommodation spaces 66y arranged in parallel with and adjacent to each other in the radial direction may be provided at four places in the circumferential direction, that is, a total of eight accommodation spaces 66y may be arranged around the screw shaft 21. Alternatively, as illustrated in FIG. 16A, the accommodation spaces 66y arranged at two places in the circumferential direction, that is, the accommodation spaces 66y on both sides in the width direction (Y direction) with respect to the screw shaft 21 may be arranged around the screw shaft 21, and as illustrated in FIG. 16B, three accommodation spaces 66y arranged in parallel with and adjacent to each other in the radial direction (the width direction in the present example) may be provided at two places in the circumferential direction, that is, a total of six accommodation spaces 66y may be arranged around the screw shaft 21. In this case, height dimensions of the support base side member 61 and the bearing housing side member 62 can be reduced.

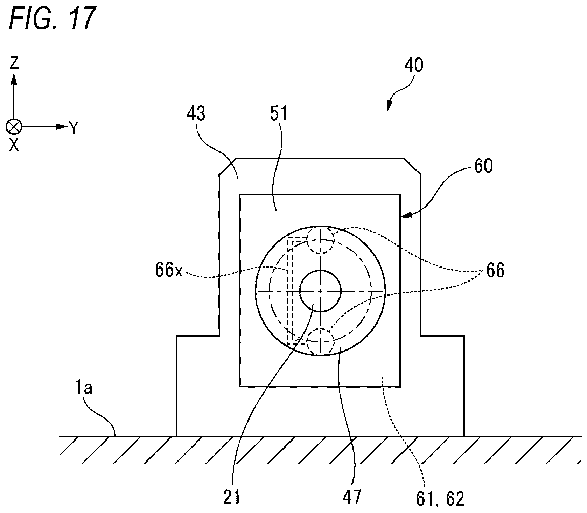

Further, as illustrated in FIG. 17, the accommodation spaces 66y arranged at two places in the circumferential direction, that is, the accommodation spaces 66y on both sides in the upper-lower direction with respect to the screw shaft 21 may be arranged around the screw shaft 21. In this case, width dimensions of the support base side member 61 and the bearing housing side member 62 can be reduced.

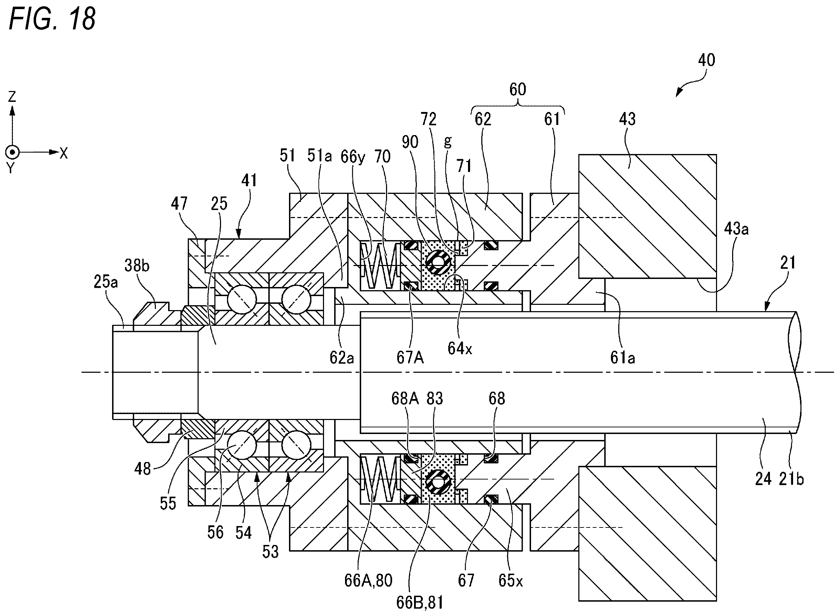

FIG. 18 is a schematic cross-sectional view taken along a line XVIII-XVIII in FIG. 16A. In this case, the accommodation spaces 66y at two places are formed by a concave portion 64x and a convex portion 65x.

Note that in the drawings, the convex portion 65x is formed integrally with a base of the support base side member 61, but may be formed separately from the base portion and joined thereto.

Note that the plurality of accommodation spaces 66y can be freely arranged as long as the bearing unit 41 and the bearing housing side member 62 can stably move in the same direction following the extension in the axial direction of the screw shaft 21 due to thermal expansion, and specifically, the accommodation spaces 66y are preferably arranged point-symmetrically or line-symmetrically on a plane orthogonal to the screw shaft 21. The plurality of accommodation spaces 66y may be arranged to be offset in the axial direction.

Further, the adjacent accommodation spaces 66y may be in communication with each other via a communication passage as necessary for the purpose of pressure equalization or the like, and a working fluid inside may flow through the adjacent accommodation spaces 66y.

For example, in FIG. 16B and FIG. 17, the first spaces 66A and the second spaces 66B of the adjacent accommodation spaces 66y are in communication with each other via the respective communication passages 66x.

The support base side member 61 and the bearing housing side member 62 are not limited to being configured as a single member, and may be divided and configured to be arranged around the screw shaft 21 according to layout of the accommodation spaces 66y. Further, the support base side member 61 and the bearing housing side member 62, which are single members, may also be arranged around the screw shaft 21, and may be configured such that a part in the circumferential direction thereof is opened or divided.

For example, in FIG. 16B, the two support base side members 61 and the two bearing housing side members 62 are divided in the width direction with respect to the screw shaft 21.

A cross section of the concave portion or the convex portion constituting the accommodation space 66y is not limited to a circular shape, and may have any shape such as a rectangular shape. Further, the plurality of accommodation spaces 66y can be configured to have any cross-sectional dimensions and axial dimensions.

Even when the plurality of accommodation spaces 66y are provided as described above, each accommodation space 66y is divided into the first space 66A and the second space 66B in the axial direction by the partition member 83 disposed in each accommodation space 66y, the first pressure generating unit having any configuration is accommodated in the first space 66A in a compressed state, and the second pressure generating unit having any configuration is accommodated in the second space 66B in a compressed state.

### (Fifth Embodiment)

In the housing position adjustment mechanism 60 of the embodiments and the modifications described above, when the screw shaft 21 extends in the axial direction, the volume of the annular space 66 increases, and the plurality of disc springs 70 and the hollow member 90 in a compressed state press the bearing unit 41 and the bearing housing side member 62 to the left direction while gradually decreasing the pressure. In this way, the pair of angular ball bearings 53, 53 are moved in the axial direction, and the support rigidity of the screw shaft 21 in the axial direction is maintained.

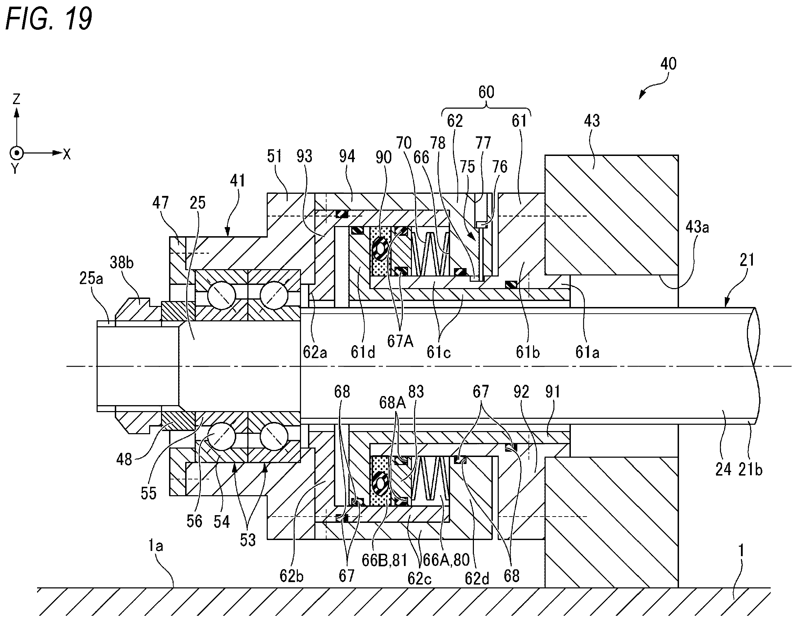

However, in the fifth embodiment, the housing position adjustment mechanism 60 as illustrated in FIG. 19 is used to maintain the support rigidity of the screw shaft 21 in the axial direction. Specifically, when the screw shaft 21 extends in the axial direction, the bearing unit 41 and the bearing housing side member 62 move to the left direction via the pair of angular ball bearings 53, 53 that move together with the screw shaft 21, and the volume of the annular space 66 decreases. On the other hand, when the pressure of the plurality of disc springs 70 and the hollow member 90 gradually increases, the bearing unit 41 and the bearing housing side member 62 are pressed to the right direction. Therefore, by adjusting the volume of the annular space 66 and the pressure of the plurality of disc springs 70 and the hollow member 90 so as to allow the extension of the screw shaft 21 in the axial direction, the support rigidity of the screw shaft 21 in the axial direction can be maintained.

In this case, the support base side member 61 includes a small-diameter cylindrical portion 61c extending from a small-diameter portion of an annular base 61b attached to the support base 43 toward the bearing housing 51, and an outward flange portion 61d extending from a tip of the small-diameter cylindrical portion 61c toward an outer diameter side. The bearing housing side member 62 includes a large-diameter cylindrical portion 62c extending from a large-diameter portion of an annular base 62b attached to the movable side bearing housing 51 toward the support base 43, and an inward flange portion 62d extending from a tip of the large-diameter cylindrical portion 62c toward an inner diameter side.

The outward flange portion 61d of the support base side member 61 is relatively movable in the axial direction between the annular base 62b and the inward flange portion 62d of the bearing housing side member 62, and an outer peripheral surface thereof is in sliding contact with an inner peripheral surface of the large-diameter cylindrical portion 62c via the O-ring 67. The inward flange portion 62d of the bearing housing side member 62 is relatively movable in the axial direction between the annular base portion 61b and the outward flange portion 61d of the support base side member 61, and an inner peripheral surface thereof is in sliding contact with an outer peripheral surface of the small-diameter cylindrical portion 61c via the O-ring 67. Therefore, the annular space 66 is partitioned and formed by the small-diameter cylindrical portion 61c and the outward flange portion 61d of the support base side member 61 and the large-diameter cylindrical portion 62c and the inward flange portion 62d of the bearing housing side member 62. The annular space 66 is partitioned by the partition member 83, the plurality of disc springs 70 and the first working fluid 80 are accommodated in the first space 66A, and the hollow member 90 and the second working fluid 81 are accommodated in the second space 66B.

In this case, in the first and second pressure generating units, spring characteristics, a material of the hollow member 90, and the first and second working fluids 80, 81 are appropriately selected so that desired axial rigidity is given to the screw shaft 21 by a pressure acting on the bearing housing side member 62 when the annular space 66 is narrowed in the axial direction according to the shaft extension of the screw shaft 21 even when the temperature rises by more than 4 degrees.

By forming the annular space 66 in this manner, when the screw shaft 21 extends in the axial direction due to thermal expansion, the pair of angular ball bearings 53, 53, the bearing housing 51, and the bearing housing side member 62 move to the left direction in the drawing while compressing the plurality of disc springs 70, the hollow member 90, and the first and second working fluids 80, 81 in the annular space 66, so that the support rigidity of the screw shaft 21 in the axial direction can be maintained.

The O-rings 67A are mounted between the inner peripheral surface of the large-diameter cylindrical portion 62c and the outer peripheral surface of the partition member 83 and between the outer peripheral surface of the small-diameter cylindrical portion 61c and the inner peripheral surface of the partition member 83. The O-rings 67 are mounted between the inner peripheral surface of the inward flange portion 62d and the outer peripheral surface of the small-diameter cylindrical portion 61c and between the outer peripheral surface of the outward flange portion 61d and the inner peripheral surface of the large-diameter cylindrical portion 62c. Accordingly, it is possible to prevent the leakage of the second working fluid 81 in the second space 66B, and it is possible to damp the vibration generated in the screw shaft 21 by acting as a damping mechanism.

Further, the first working fluid 80 is stored in the gap between the inner peripheral surface of the inward flange portion 62d and the outer peripheral surface of the small-diameter cylindrical portion 61c, and the second working fluid 81 is stored in the gap between the outer peripheral surface of the outward flange portion 61d and the inner peripheral surface of the large-diameter cylindrical portion 62c. Therefore, the support rigidity and aligning performance in the radial direction between the bearing housing side member 62 and the support base side member 61 can be improved by the pressure to the radial direction of the first and second working fluids 80, 81 acting on the gap. As a result, the housing position adjustment mechanism 60 can provide the support rigidity in a radial direction to the screw shaft 21, and can also have an alignment function with respect to the screw shaft 21.

Note that the same alignment effect is also provided by the working fluids 80, 81 stored in the gap between the partition member 83 and the small-diameter cylindrical portion 61c and the gap between the partition member 83 and the large-diameter cylindrical portion 62c.

Note that the support base side member 61 and the bearing housing side member 62 may be constituted by single members, but as illustrated in FIG. 19, the support base side member 61 and the bearing housing side member 62 may be constituted in a state in which the O-rings 67 are sandwiched between two members 91, 92 and 93, 94 in consideration of an assembly ability.

Although the O-rings 67 and the seal grooves 68 are provided between opposite surfaces, respectively, a plurality of O-rings and a plurality of seal grooves may be provided.

Instead of FIG. 19, the support base side member 61 may include a large-diameter cylindrical portion and an inward flange portion, and the bearing housing side member 62 may include a small-diameter cylindrical portion and an outward flange portion to form an annular space.

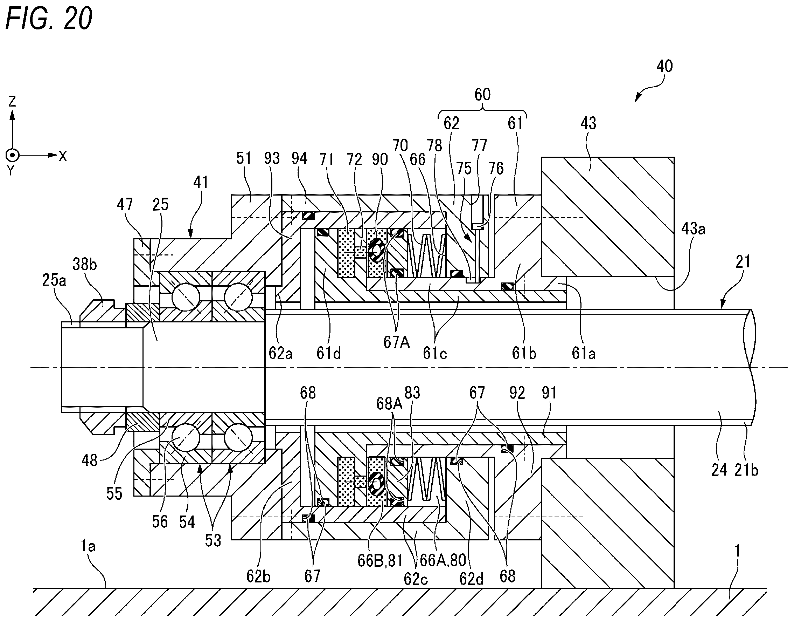

Further, as illustrated in FIG. 20, such a housing position adjustment mechanism 60 may have a function of damping the vibration of the screw shaft 21 by providing the storage chamber 71 and the orifice 72 in the outward flange portion 61d and allowing the second working fluid 81 in the second space 66B and the storage chamber 71 to pass through the orifice 72 and the gap between the inner peripheral surface of the large-diameter cylindrical portion 62c and the outer peripheral surface of the outward flange portion 61d, similarly to the first embodiment.

Note that the storage chamber and the orifice may be formed in the inward flange portion 62d, and the storage chamber for storing the first working fluid 80 may be opened to the outer peripheral surface of the small-diameter cylindrical portion 61c.

In the configuration having no orifice as illustrated in FIG. 19, the damping function of the O-rings 67 can be mainly utilized.

Also in such a housing position adjustment mechanism 60, the pair of angular ball bearings 53, 53 may be arranged in front surface combination as illustrated in FIGS. 19 and 20, may be arranged in back surface combination as illustrated in FIG. 20, or may be arranged in various support forms such as parallel combination.

In addition, although not illustrated, the pair of angular ball bearings is not necessarily constituted by two angular ball bearings, and may be constituted by three or more ball bearings.

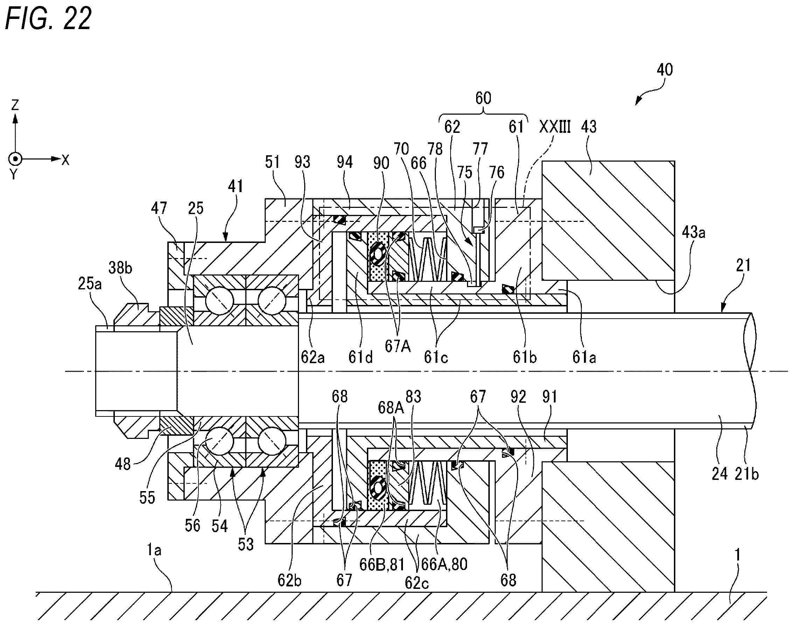

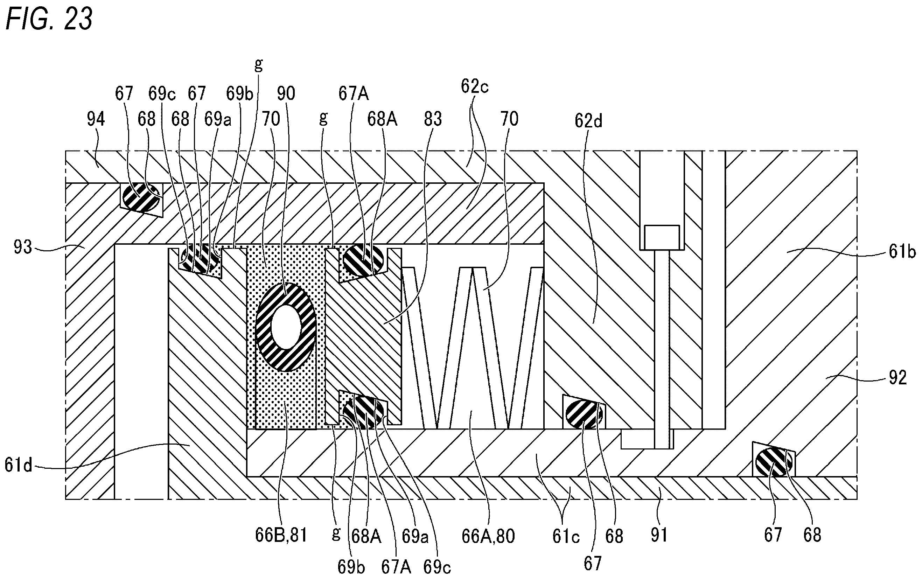

Further, as illustrated in FIGS. 22 and 23, in the housing position adjustment mechanism 60 of the fifth embodiment, similarly to the second embodiment, the seal groove 68 formed on the inner peripheral surface of the inward flange portion 62d and the outer peripheral surface of the outward flange portion 61d and the seal groove 68A formed on the outer peripheral surface and the inner peripheral surface of the partition member 83 may be constituted by the tapered surface 69a whose groove depth decreases as a distance from the second space 66B increases, and both side surfaces 69b, 69c in the axial direction having a circular ring shape extending along the radial direction from both end edges in the axial direction of the tapered surface 69a.

Therefore, as the pressure of the second working fluid 81 in the second space 66B increases and then the O-ring 67 is pushed toward the atmospheric pressure side or the first space 66A side, the O-ring 67 further improves the sealing property by the wedge structure between the tapered surface 69a of the seal grooves 68, 68A and the opposite outer peripheral surface of the small-diameter cylindrical portion 61c or the inner peripheral surface of the large-diameter cylindrical portion 62c. As a result, even when the relative movement between the support base side member 61 and the bearing housing side member 62 occurs, the leakage of the second working fluid 81 to the atmospheric pressure side or the first space 66A side can be prevented, and the axial rigidity of the ball screw feeding device 20 can be continuously maintained.

Note that in the present modification, as illustrated in FIG. 22, the seal groove 68 formed in any one of opposite surfaces of the two members 91, 92 constituting the support base side member 61 and the seal groove 68 formed in any one of opposite surfaces of the two members 93, 94 constituting the bearing housing side member 62 may also have the tapered surface 69a whose groove depth decreases as the distance from the second space side increases.

Also in the case of the present modification, a wear-resistant member may be interposed between the O-ring 67 and at least one of the inner peripheral surface of the inward flange portion 62d and the outer peripheral surface of the small-diameter cylindrical portion 61c, and between the O-ring 67 and at least one of the outer peripheral surface of the outward flange portion 61d and the inner peripheral surface of the large-diameter cylindrical portion 62c.

Also in this case, the wear-resistant member 59 may be interposed between the O-ring 67 and the surface opposite to the O-ring 67 in the seal groove 68 having the tapered surface 69a as illustrated in FIG. 22, or may be interposed between the O-ring 67 and the surface opposite to the O-ring 67 in the seal groove 68 having a uniform groove depth as illustrated in FIG. 14.

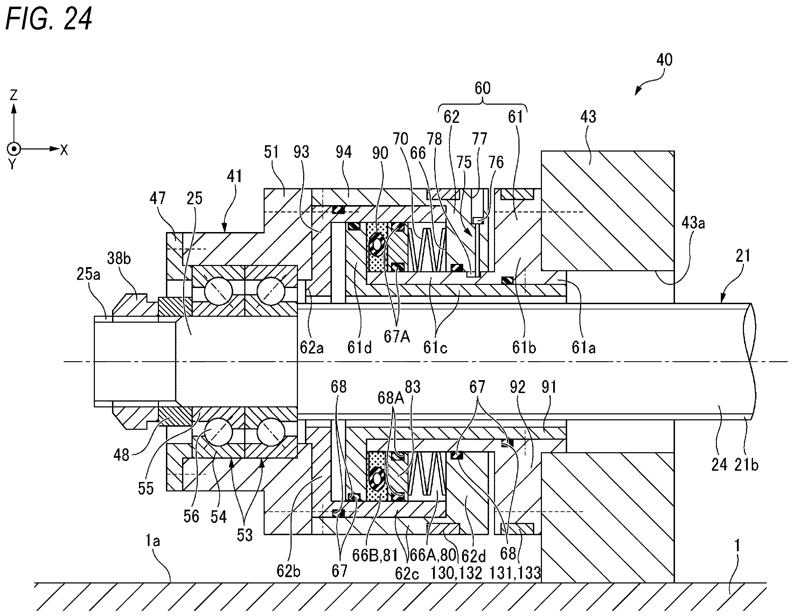

Further, as illustrated in FIG. 24, in the housing position adjustment mechanism 60 of the fifth embodiment, similarly to the third embodiment, the support base side member 61 and the bearing housing side member 62 may be provided with a working medium volume change unit such as the heating elements 130, 131 or the cooling media 132, 133.

Accordingly, as described in the third embodiment, according to a state of the ball screw feeding device 20 in use, the volumes of the hollow member 90 and the first and second working fluids 80, 81 in the first and second spaces 66A, 66B are expanded by the heating elements 130, 131, and the volumes of the hollow member 90 and the first and second working fluids 80, 81 in the first and second spaces 66A, 66B are contracted by the cooling media 132, 133, so that the support rigidity in the axial direction can be continuously maintained in a stable state.

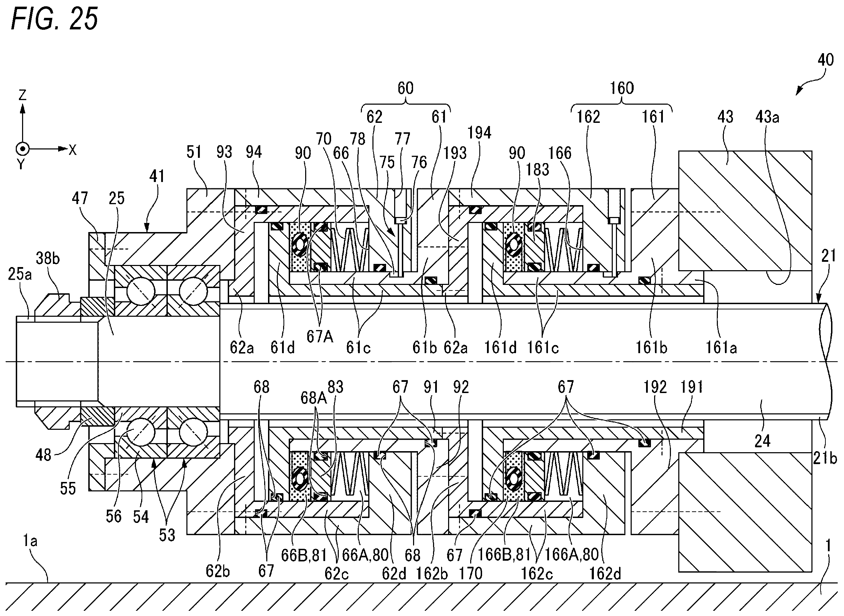

In the housing position adjustment mechanism 60 of the fifth embodiment, as illustrated in FIG. 25, similarly to the fourth embodiment, the second support mechanism 40 may have a tandem configuration in which the housing position adjustment mechanism 60 and the another housing position adjustment mechanism 160 are arranged in series in the axial direction between the bearing unit 41 and the support base 43.

Also in this case, the another support base side member 161 of the another housing position adjustment mechanism 160 includes an annular base 161b, a small-diameter cylindrical portion 161c, and an outward flange portion 161d, and the another bearing housing side member 162 includes an annular base 162b, a large-diameter cylindrical portion 162c, and an inward flange portion 162d. Each of the another support base side member 161 and the another bearing housing side member 162 of the another housing position adjustment mechanism 160 is constituted by two members 191, 192 and 193, 194, respectively. Further, the support base side member 61 of the housing position adjustment mechanism 60 and the another bearing housing side member 162 of the another housing position adjustment mechanism 160 are connected to each other and integrally formed.

In the present embodiment, as in the fourth embodiment, the second support mechanism 40 may have a configuration in which a plurality of housing position adjustment mechanisms are arranged in series in the axial direction, or may have a configuration in which the housing position adjustment mechanisms are arranged in parallel in the radial direction.

### (Sixth Embodiment)

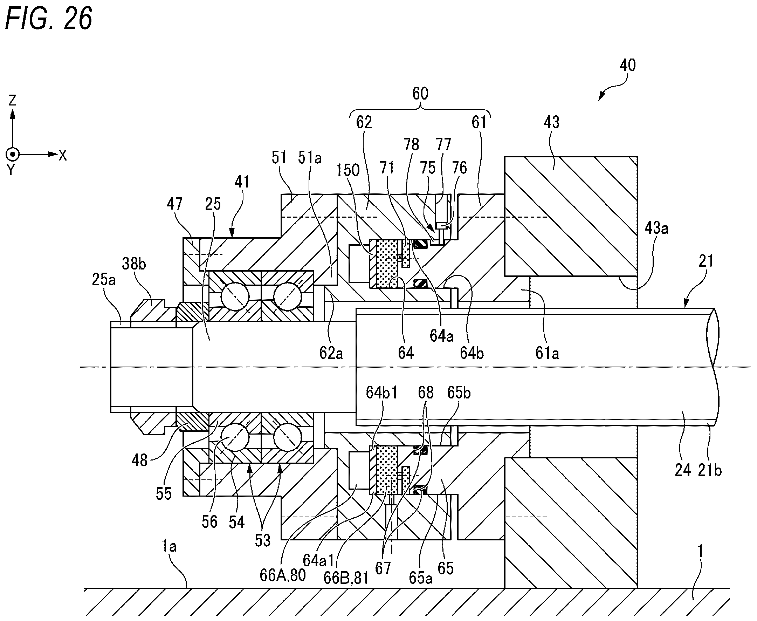

Next, a ball screw feeding device according to a sixth embodiment of the present invention will be described with reference to FIG. 26. Note that the present embodiment is different from the first embodiment in that the partition member that divides the accommodation space into the first space and the second space is constituted by a diaphragm 150.

Specifically, in the present embodiment, stepped portions 64a1, 64b1 are formed on the inward surface 64a and the outward surface 64b of the annular concave portion 64 such that dimensions in the radial direction of bottoms thereof are narrowed. An inner peripheral edge and an outer peripheral edge of the ring-shaped diaphragm 150 are positioned and fixed to the stepped portions 64a1, 64b1 of the annular concave portion 64. The diaphragm 150 has a membrane structure made of resin, metal, or the like, and a radially central portion thereof is deformable in the axial direction.

In the present embodiment, the first pressure generating unit is the first working fluid (for example, gas) 80 with which the first space 66A is filled, and the second pressure generating unit is the second working fluid (for example, working oil) 81 with which the second space 66B is filled.

As a result, the diaphragm 150 is deformed in the axial direction by the pressures in the first space 66A and the second space 66B, and can apply a pressure to the bearing housing side member 62 while balancing the pressures in the first space 66A and the second space 66B. Therefore, in the present embodiment, even when the axial length of the screw shaft 21 changes due to the influence of heat, the support rigidity in the axial direction can also be continuously maintained in a stable state.

Other configurations and operations are similar as those of the first embodiment.

Note that the present invention is not limited to the above embodiments, and can be appropriately modified, improved, or the like. Each embodiment and each modification described in the present specification can be combined and applied within a practicable range.

For example, in the first to fifth embodiments, the plurality of disc springs 70 and the first working fluid 80 are accommodated in the first space 66A as the first pressure generating unit, and the hollow member 90 and the second working fluid 81 are accommodated in the second space 66B as the second pressure generating unit, but the first pressure generating unit and the second pressure generating unit are not limited thereto.

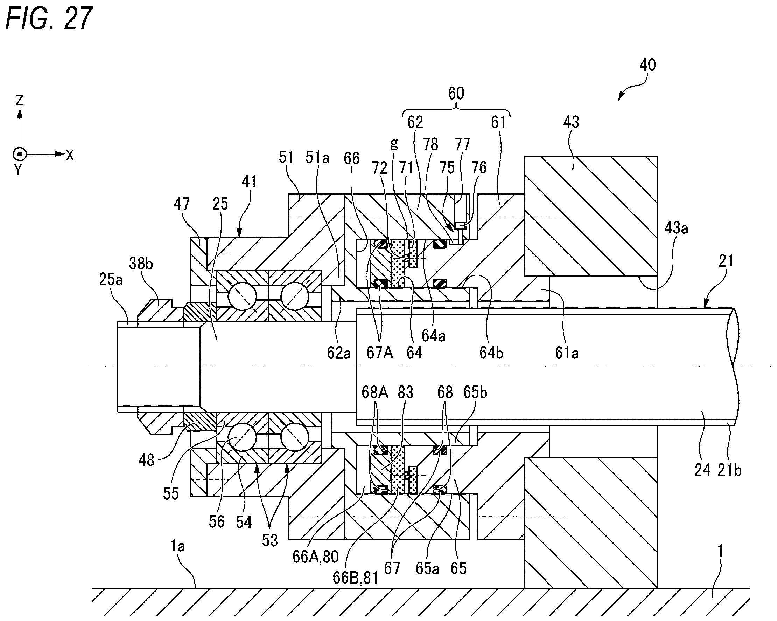

Specifically, in the housing position adjustment mechanism 60 of the first embodiment, as illustrated in FIG. 27, the first pressure generating unit may be the first working fluid (for example, gas) 80 with which the first space 66A is filled, and the second pressure generating unit is the second working fluid (for example, working oil) 81 with which the second space 66B is filled.

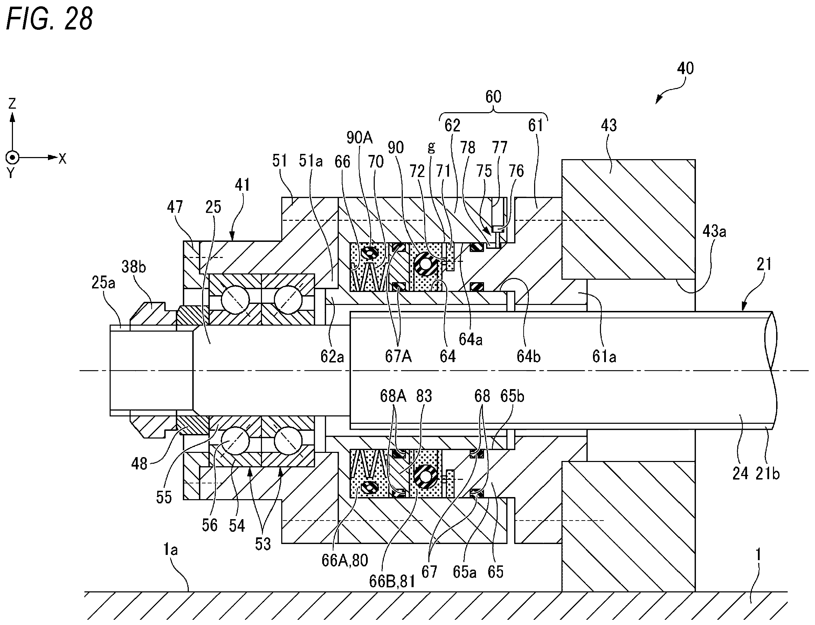

As illustrated in FIG. 28, the first pressure generating unit may include a spherical hollow member 90A and the disc springs 70 accommodated in the first space 66A, and the first working fluid (for example, working oil) 80 with which the vicinity of the hollow member 90A and the disc springs 70 is filled, and the second pressure generating unit may include the hollow member 90 accommodated in the second space 66B, and the second working fluid (for example, working oil) 81 with which the vicinity of the hollow member 90A is filled.

That is, in the ball screw feeding device 20 of the present embodiment, the first pressure generating unit and the second pressure generating unit may have any one of the following configurations (a) to (d).
(a) The first pressure generating unit is the first working fluid with which the first space is filled, and the second pressure generating unit is the second working fluid with which the second space is filled.
(b) The first pressure generating unit is the first working fluid filled in the first space, and the second pressure generating unit includes at least one of a hollow member and an elastic member accommodated in the second space, and the second working fluid with which the vicinity of at least one of the hollow member and the elastic member is filled.
(c) The first pressure generating unit includes at least one of a hollow member and an elastic member accommodated in the first space, and the first working fluid with which the vicinity of at least one of the hollow member and the elastic member is filled, and the second pressure generating unit is the second working fluid with which the second space is filled.
(d) The first pressure generating unit includes at least one of a hollow member and an elastic member accommodated in the first space, and the first working fluid with which the vicinity of at least one of the hollow member and the elastic member is filled, and the second pressure generating unit includes at least one of a hollow member and an elastic member accommodated in the second space, and the second working fluid with which the vicinity of at least one of the hollow member and the elastic member is filled.

Further, each of the spaces 66A and 66B is not limited thereto, and may be provided with a pressure generating unit having another configuration that is accommodated in a compressed state and can generate a pressure for pressing the bearing unit 41 and the bearing housing side member 62.

An auxiliary accumulator or an external pump for supplying working can be connected to the above-described annular space as necessary. Further, the annular space may diagnose or correct the state of the ball screw feeding device by monitoring the pressures of the first and second working fluids and the load applied to the pair of angular bearings 53, 53.

In the first to fourth and sixth embodiments, the O-rings 67A are mounted between the inward surface 64a of the annular concave portion 64 and the outer peripheral surface of the partition member 83 and between the outward surface 64b of the annular concave portion 64 and the inner peripheral surface of the partition member 83, but the present invention is not limited thereto, and a seal member for preventing the first working fluid 80 from leaking from the first space 66A may be disposed.

Similarly, the O-rings 67 are mounted between the outward surface 65a of the annular convex portion 65 and the inward surface 64a of the annular concave portion 64 and between the inward surface 65b of the annular convex portion 65 and the outward surface 64b of the annular concave portion 64, but the present invention is not limited thereto, and a seal member for preventing the second working fluid 81 from leaking from the second space 66B may be disposed.

Also in the sixth embodiment, the O-rings 67A are mounted between the inner peripheral surface of the large-diameter cylindrical portion 62c and the outer peripheral surface of the partition member 83 and between the outer peripheral surface of the small-diameter cylindrical portion 61c and the inner peripheral surface of the partition member 83, but the present invention is not limited thereto, and a seal member for preventing the first working fluid 80 from leaking from the first space 66A may be disposed.

Similarly, the O-rings 67 are mounted between the outer peripheral surface of the outward flange portion 61d and the inner peripheral surface of the large-diameter cylindrical portion 62c and between the inner peripheral surface of the inward flange portion 62d and the outer peripheral surface of the small-diameter cylindrical portion 61c, but the present invention is not limited thereto, and a seal member for preventing the second working fluid 81 from leaking from the second space 66B may be disposed.

Further, it is more preferable that the seal member not only prevents the working fluids 80, 81 from leaking from the first and second spaces 66A, 66B, but also damps the vibration of the screw shaft 21 similarly to the O-rings 67, 67A.

The accommodation space is not necessarily annular, and may be divided as appropriate. Accordingly, the disc springs and the hollow member constituting the pressure generating unit may also be divided.

In some cases, the disc springs may be configured in another form such as a coil spring.

Further, the shape of the hollow member is not limited to an annular shape or a spherical shape, and may be a semicircular arc shape or the like.

The hollow member 90 may be integrally joined without a seam, but is not limited thereto, and may be, for example, a joined body having a hollow cross section constituted by integrating two or more members via edges of the two or more members. Alternatively, the hollow member 90 may form a hollow cross section by bending a member and joining edges of the member.

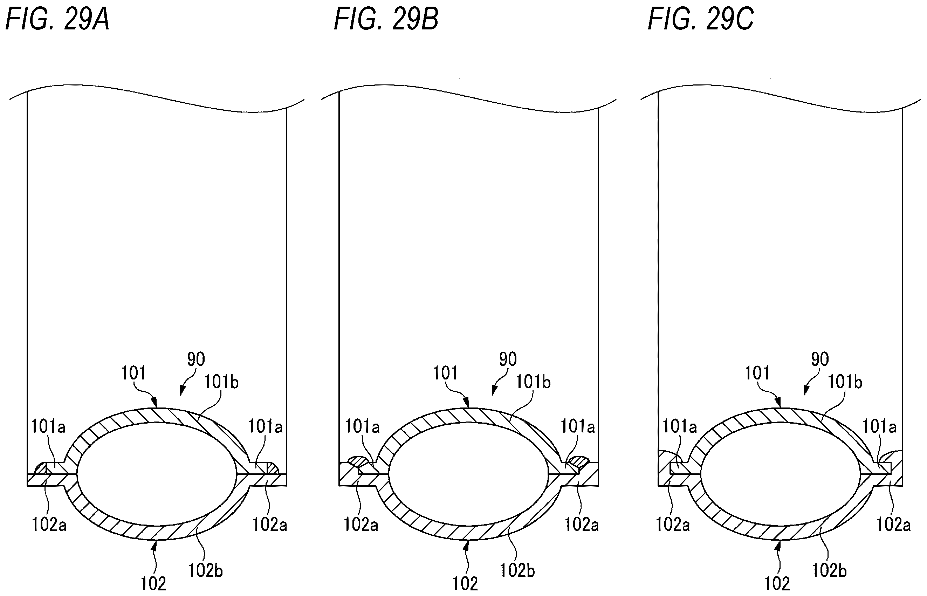

Specifically, in a modification based on a ring-shaped member as illustrated in FIGS. 29A to 31C, the hollow member 90 is a joined body having a hollow cross section, which is constituted by joining and integrating two or more ring-shaped members 101,102 via ribs 101a and 102a formed on both peripheral edges of the ring-shaped members 101, 102. As a method for joining the ring-shaped members 101, 102, an appropriate method may be selected from adhesion, melt bonding, connection by a mechanical lock mechanism, and the like.

For example, as illustrated in FIGS. 29A to 29C, the hollow member 90 is constituted by an outer diameter side ring-shaped member 101 and an inner diameter side ring-shaped member 102 which are divided into two in the radial direction, and a hollow cross section is formed by arc-shaped portions 101b, 102b of the ring-shaped members 101, 102. In FIGS. 29A and 29B, one of the ribs 101a and 102a is made longer than the other, and the ribs 101a and 102a are joined to each other by adhesion or melt bonding, and in particular, as illustrated in FIG. 29B, the rib 102a may cover a side surface of the shorter rib 101a by bending a tip of the longer rib 102a. Further, as illustrated in FIG. 29C, the longer rib 102a and the shorter rib 101a may be joined by a continuous or discontinuous U-shaped fastening structure so that the tip of the longer rib 102a covers the tip of the shorter rib 101a and inside thereof is sealed.

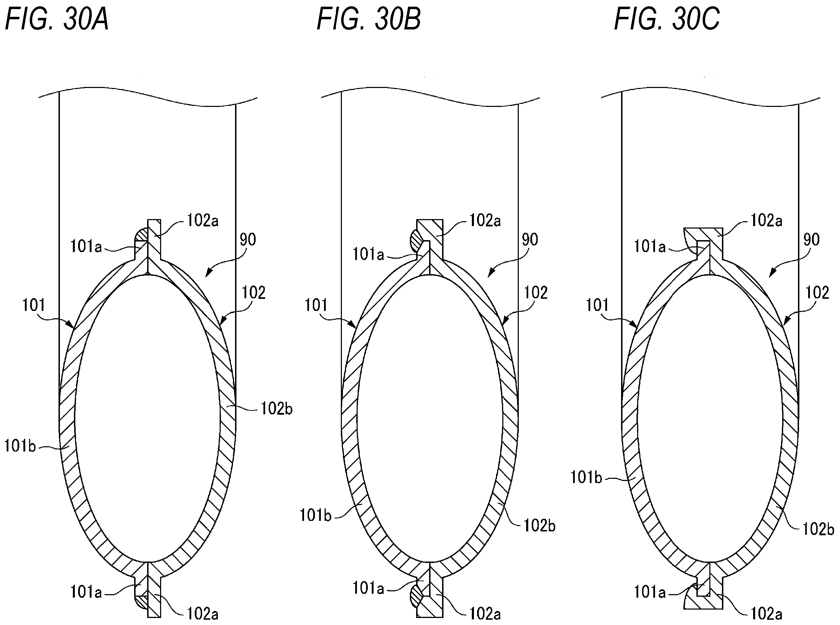

Alternatively, as illustrated in FIGS. 30A to 30C, the hollow member 90 is constituted by a left ring-shaped member 101 and a right ring-shaped member 102, which are divided into two in the axial direction, and a hollow cross section is formed by arc-shaped portions 101b, 102b of the ring-shaped members 101, 102. In FIGS. 30A and 30B, one of the ribs 101a and 102a is also made longer than the other, and the ribs 101a and 102a are joined to each other by adhesion or melt bonding, and in particular, as illustrated in FIG. 30B, the rib 102a may cover a side surface of the shorter rib 101a by bending a tip of the longer rib 102a. Further, as illustrated in FIG. 30C, the longer rib 102a and the shorter rib 101a may be joined by a continuous or discontinuous U-shaped fastening structure so that the tip of the longer rib 102a covers the tip of the shorter rib 101a and inside thereof is sealed.

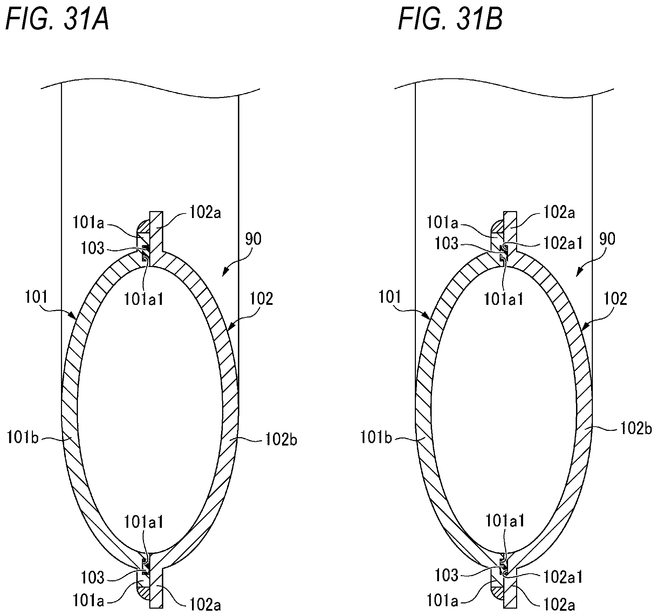

As illustrated in FIGS. 31A and 30B, the hollow member 90 may be formed with seal grooves 101a1, 102a1 in the vicinity of edges in at least one of surfaces opposite to the ribs 101a, 102a of the ring-shaped members 101, 102 divided into two (the rib 101a in FIG. 31A, and the ribs 101a, 102a in FIG. 31B), and a seal member such as an O-ring 103 may be disposed to improve a sealing property of the inside.

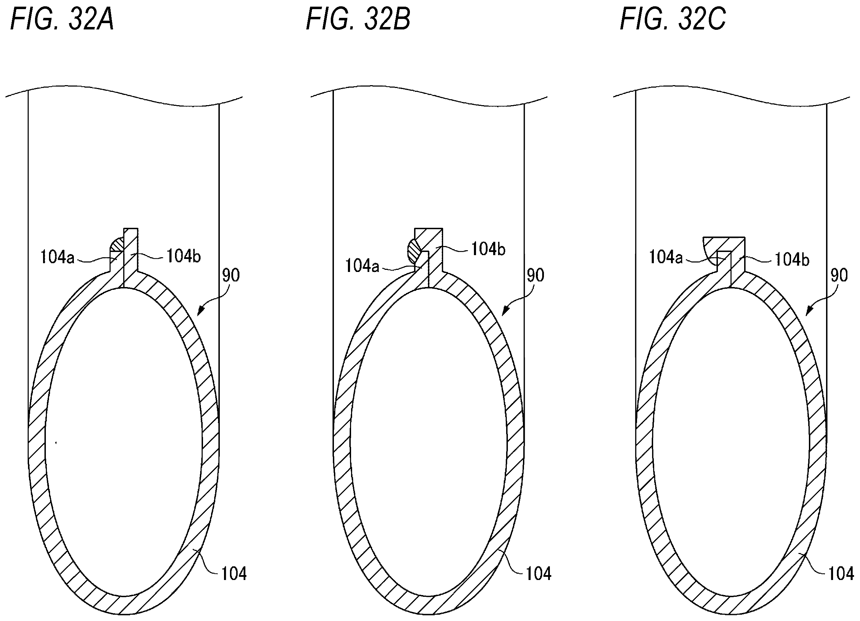

Further, in a modification based on a ring-shaped member as illustrated in FIGS. 32A to 32C, the hollow member 90 may be constituted by bending a ring-shaped member 104 having a band-shaped cross section so as to form a hollow cross section over the entire circumference and joining the ribs 104a, 104b formed on a peripheral edge of the ring-shaped member 104. Also in this case, as a method for joining the ring-shaped member 104, an appropriate method may be selected from adhesion, melt bonding, connection by a mechanical lock mechanism, and the like.

That is, in FIGS. 32A and 32B, one of the ribs 104a and 104b is made longer than the other, and the ribs 104a and 104b are joined to each other by adhesion or melt bonding, and in particular, as illustrated in FIG. 32B, the rib 104b may cover a side surface of the shorter rib 104a by bending a tip of the longer rib 104b. Further, as illustrated in FIG. 32C, the longer rib 102a and the shorter rib 101a may be joined by a continuous or discontinuous U-shaped fastening structure so that the tip of the longer rib 104b covers the tip of the shorter rib 104a and inside thereof is sealed.

As described above, with the configurations as illustrated in FIGS. 29A to 32C, the deformable hollow member 90 can be easily manufactured.

Note that the peripheral edges of the ring-shaped members 101, 102, 104 may not include the ribs 101a, 102a, 104a, and 104b as illustrated in FIGS. 29A to 32C. That is, the hollow member 90 may be constituted by joining the peripheral edges of the arc-shaped portions 101b, 102b of the ring-shaped member 101, 102 by an appropriate joining method, or the hollow member 90 may be constituted by joining the peripheral edges of curved portions of the ring-shaped member 104 by an appropriate joining method.

The configurations as illustrated in FIGS. 29A to 32C are not limited to being based on the ring-shaped members, and a planar member or a curved member for forming a spherical shape or a semicircular arc shape can also be applied.

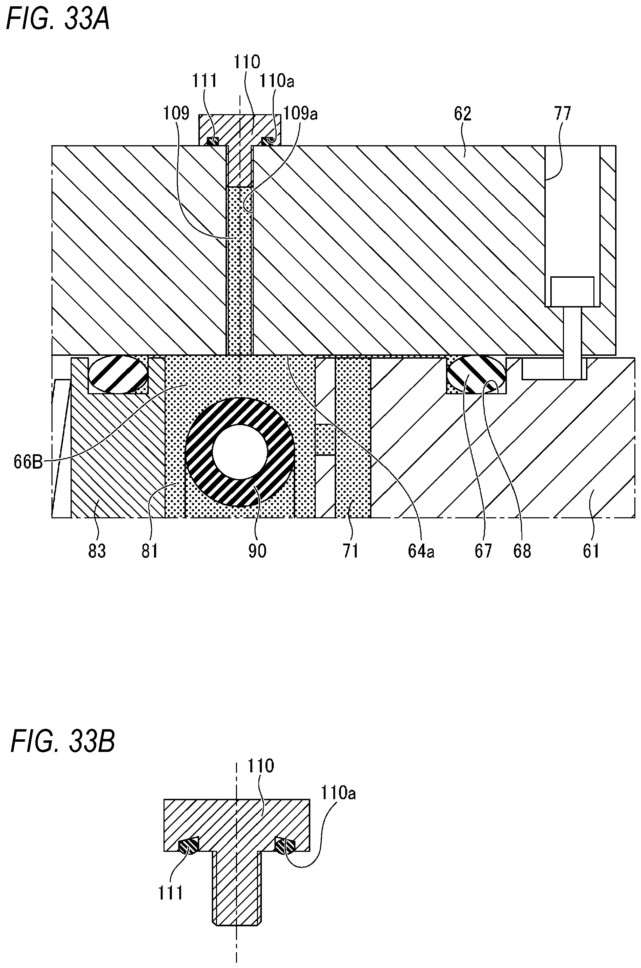

In any of the embodiments, the second space 66B is filled with the second working fluid 81 and needs to be sealed from the outside. In this case, for example, in the housing position adjustment mechanism 60 illustrated in FIG. 2, as illustrated in FIG. 33A, an oil supply path 109 for filling the second space 66B with the second working fluid 81 may be formed in the bearing housing side member 62 so as to penetrate in the radial direction between the inward surface 64a of the annular concave portion 64 and the outer peripheral surface of the bearing housing side member 62.

A stopper bolt 110 to be screwed into a female screw 109a formed in the oil supply path 109 to close the oil supply path 109 may be attached to the outer peripheral surface of the bearing housing side member 62. By filling a gap between the male screw and the female screw 109a by winding a sealing tape (not illustrated) around the male screw part of the stopper bolt 110 or by applying or fill the gap with a leakage preventing agent, it is possible to more reliably prevent leakage of the second working fluid 81 in a compressed state.

An annular seal groove 110a may be formed in a surface opposite to a head of the stopper bolt 110 that is opposite to the outer peripheral surface of the bearing housing side member 62. Accordingly, the O-ring 111 is attached to the seal groove 110a, and a sealing property of the stopper bolt 110 can be improved.

Note that as illustrated in FIG. 33B, a bottom surface of the seal groove 110a of the stopper bolt 110 may be formed in a tapered shape so as to further improve the sealing property.

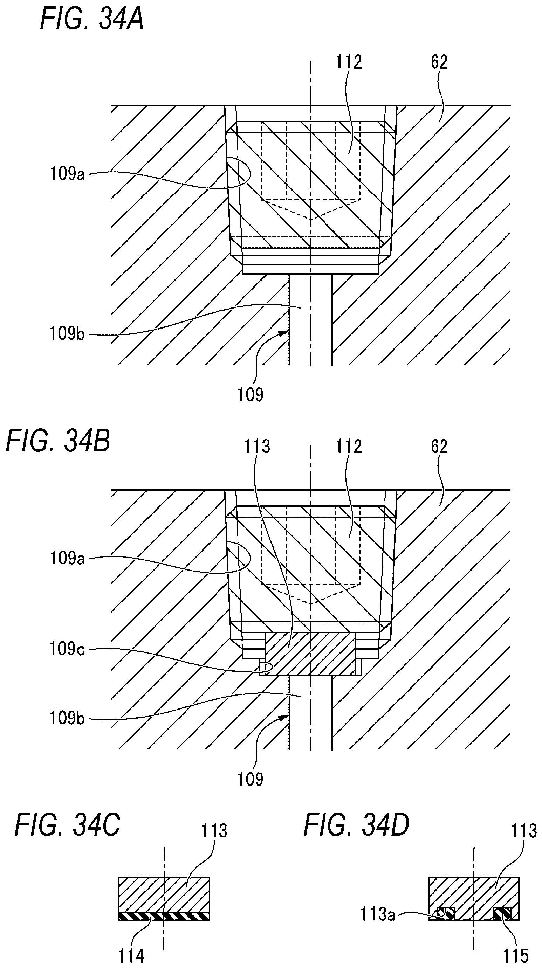

As a member for closing the oil supply path 109, a stopper plug may be used instead of the stopper bolt 110, and for example, the oil supply path 109 may be closed by a tapered stopper plug 112 as illustrated in FIG. 34A. In this case, the stopper plug 112 is screwed into the female screw 109a formed on the outer diameter side of the oil supply path 109 and fixed to the oil supply path 109. As illustrated in FIG. 34B, the oil supply path 109 includes a tapered female screw 109a on the outer diameter side, and a straight portion 109b not including the female screw is continuous with the female screw 109a via a stepped hole 109c. In this case, the stopper plug 112 may be fastened to the female screw 109a in a state in which a disc-shaped member 113 is accommodated in the stepped hole 109c. In this case, since the stopper plug 112 is fastened to the female screw 109a while deforming the disc-shaped member 113, a sealing property is ensured between the disc-shaped member 113 and a contact surface of the stepped hole 109c.

By filling a gap between the male screw and the female screw 109a by winding a sealing tape (not illustrated) around the male screw part of the stopper plug 112 or by applying or fill the gap with a leakage preventing agent, a good sealing property may also be provided.

Note that as illustrated in FIG. 34C, the disc-shaped member 113 may be integrated with an elastic deformable member 114 constituting a contact surface with the stepped hole 109c. Alternatively, as illustrated in FIG. 34D, an annular seal groove 113a may be formed in a contact surface of the disc-shaped member 113 with the stepped hole 109c, and an O-ring 115 may be disposed.

The oil supply path 109 communicating with the second space 66B is not limited to the configuration in which the oil supply path 109 is formed to penetrate in the radial direction, and may be formed to penetrate any member constituting the second space 66B in the axial direction.

Further, the support base may be configured to directly or indirectly support the support base side member of the housing position adjustment mechanism, and is not limited to the configuration in which the rotation shaft penetrates the support base as in the above embodiments, and may be configured to be disposed around the rotation shaft, and can be designed to have any shape.

### (Application to Other Ball Screw Feeding Devices)

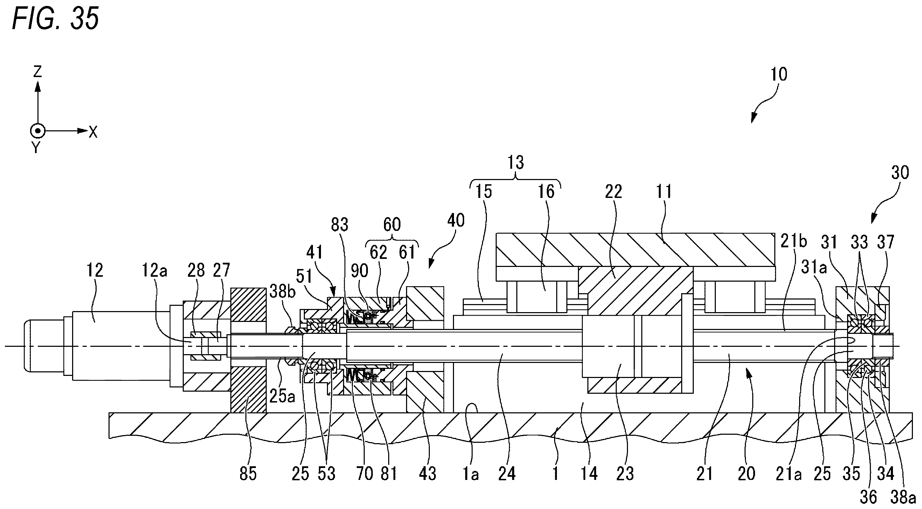

In the ball screw feeding device 20 of FIG. 1, the drive motor 12 is connected to one side (right side in FIG. 1) of the screw shaft 21 supported by the first support mechanism 30, but the present invention is not limited thereto. That is, as in the ball screw feeding device 20 of FIG. 35, the drive motor 12 may be connected to the other side (left side in FIG. 35) of the screw shaft 21 supported by the second support mechanism 40.

In this case, the drive motor 12 is fixed to the base 1 and is supported by another support base 85 through which the screw shaft 21 penetrates. A tip of the small-diameter shaft 27 is disposed in the coupling 28 away from the rotation shaft 12a of the drive motor 12 so that the small-diameter shaft 27 can move in the axial direction when the screw shaft 21 extends in the axial direction due to thermal expansion.

Therefore, the present invention can be used with a high degree of freedom as a ball screw feeding device used for positioning of a device that performs high-precision machining and measurement, semiconductor manufacturing, and the like, such as a machine tool (machining center, lathe, grinder, and the like), a measuring machine (three-dimensional measuring device), a semiconductor manufacturing device (exposure device, table of inspection probe and the like), and the like.

Although the support base 43 is disposed on the axial center side with respect to the bearing unit 41 in the above embodiments, the present invention is not limited thereto, and the support base 43 may be disposed on an axial end side of the bearing unit 41. That is, the support base 43 may be disposed on the axial center side or may be disposed on the axial end side with respect to the bearing unit 41 according to the configuration and function of the housing position adjustment mechanism 60.

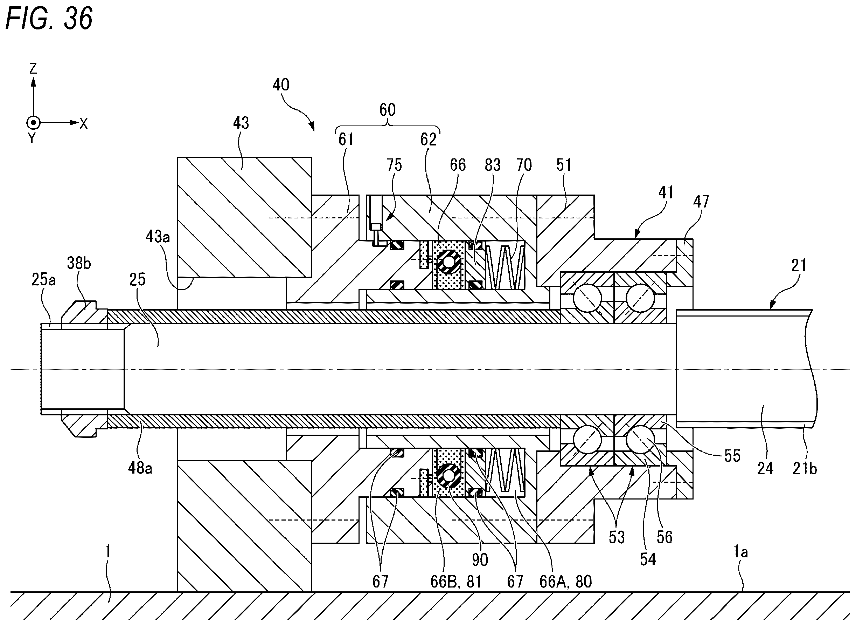

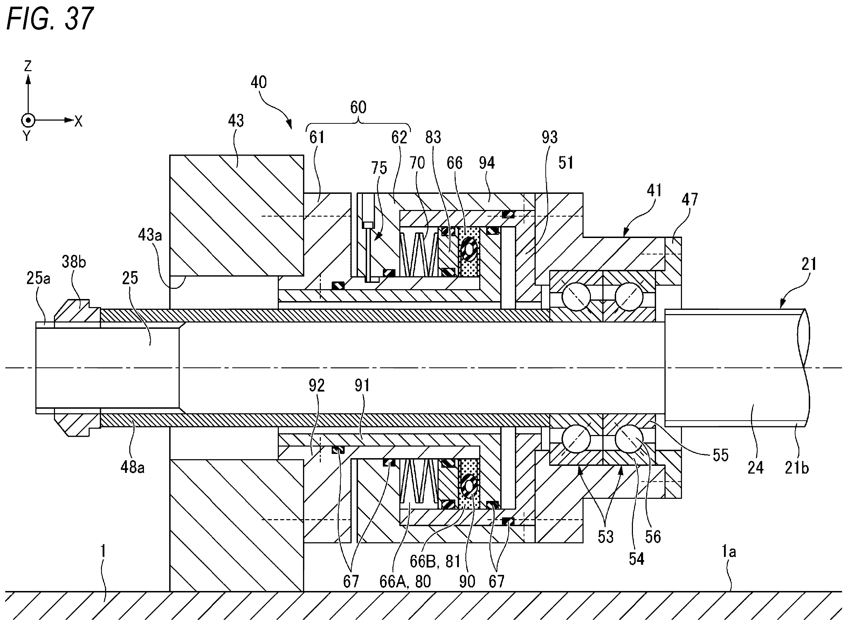

For example, in the embodiment illustrated in FIGS. 36 and 37, the support base 43 is provided on the axial end side with respect to the bearing unit 41. In this case, the support base side member 61 may be directly or indirectly attached to the support base 43, and the bearing housing side member 62 may be directly or indirectly attached to the bearing housing 51. A spacer 48a disposed between the inner ring 55 and the fastening nut 38b passes through the through hole 43a of the support base 43, and the inside of the support base side member 61 and the bearing housing side member 62.

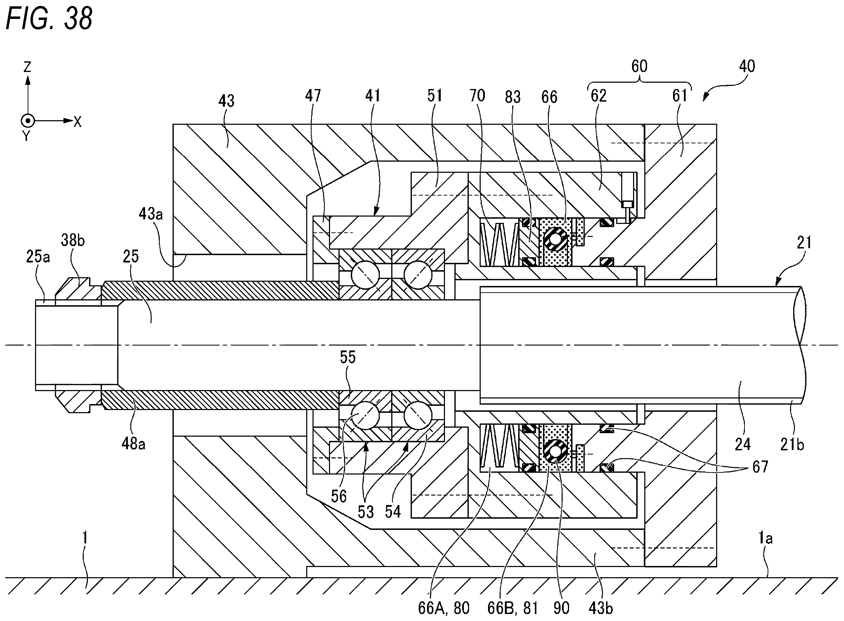

In the embodiments as illustrated in FIGS. 38 and 35, the support base 43 is disposed on the axial end side with respect to the bearing unit 41, and is fixed to the support base side member 61 disposed on the axial center side with respect to the bearing unit 41 by an outer cylindrical portion 43b extending in the axial direction from a main body part including the through hole 43a and surrounding a periphery of the housing position adjustment mechanism 60. Also in this case, the support base side member 61 may be directly or indirectly attached to the support base 43, and the bearing housing side member 62 may be directly or indirectly attached to the bearing housing 51. The spacer 48a disposed between the inner ring 55 and the fastening nut 38b passes through the through hole 43a of the support base 43.

### (Application to Devices Other than Ball Screw Feeding Device)

In the above-described embodiments, the ball screw feeding devices have been described, but the present invention is applicable to a rotation support device in which both ends in an axial direction of a rotation shaft are supported by a pair of support mechanisms in a rotatable manner, in addition to the ball screw feeding devices. That is, when an axial length of the rotation shaft changes due to an influence of heat, a housing position adjustment mechanism as in the above embodiments can be used to continuously and stably maintain the support rigidity of the rotation shaft in the axial direction. By using the housing position adjustment mechanism in the above embodiments, vibration in the axial direction can be damped.

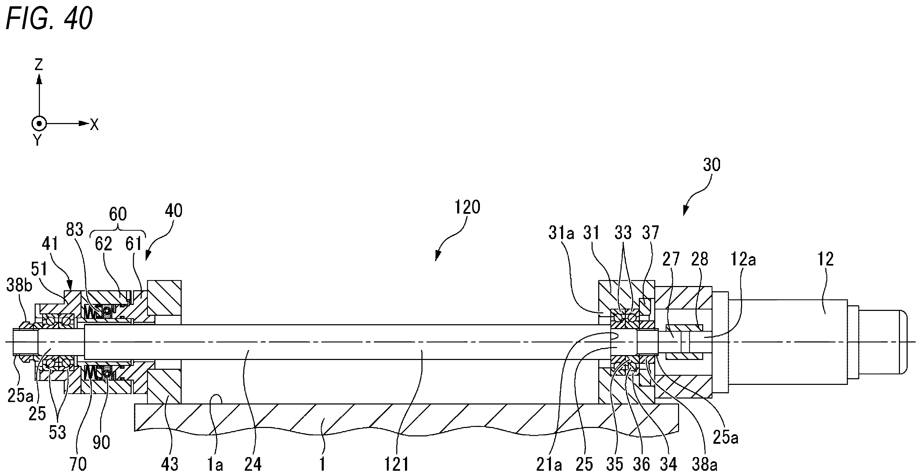

For example, as illustrated in FIG. 40, a rotation support device 120 includes a rotation shaft 121 and a pair of support mechanisms 30, 40 that support both ends in an axial direction of the rotation shaft 121 in a rotatable manner.

The support mechanism 30 includes a bearing housing 31 fixed to a base 1, and bearings 33, 33 that support the rotation shaft 121 in a rotatable manner with respect to the bearing housing 31, that is, a pair of angular ball bearings 33, 33 arranged in front surface combination.

The support mechanism 40 includes a bearing unit 41 including a bearing housing 51 and a pair of bearings 53, 53 that support the rotation shaft 121 in a rotatable manner with respect to the bearing housing 51 and can support an axial load, that is, a pair of angular ball bearings 53, 53 arranged in front surface combination, a support base 43 that is disposed on an axial center side with respect to the bearing unit 41 and through which the rotation shaft 121 penetrates, and a housing position adjustment mechanism 60 disposed between the bearing unit 41 and the support base 43.

The housing position adjustment mechanism 60 includes a support base side member 61 which is provided on the support base 43 side and through which the rotation shaft 121 penetrates, a bearing housing side member 62 which is provided on the bearing housing 51 side, through which the rotation shaft 121 penetrates, and which is movable in the axial direction relative to the support base side member 61, a partition member 83 which is disposed in an accommodation space formed between the support base side member 61 and the bearing housing side member 62 and which divides the accommodation space into a first space 66A and a second space 66B in the axial direction, a first pressure generating unit (a plurality of disc springs 70 and a first working fluid 80 in the drawing) which is accommodated in the first space 66A in a compressed state, and a second pressure generating unit (a hollow member 90 and a second working fluid 81 in the drawing) which is accommodated in the second space 66B in a compressed state.

Note that in FIG. 40, the same reference numerals as those in the above embodiments denote the same parts, and description thereof will be omitted or simplified. In addition, the various structures described in the ball screw feeding device 20 can also be applied to the rotation support device, and achieve the same effects.

Each of the bearings 33, 53 of the support mechanisms 30, 40 of the rotation support device 120 may be an angular ball bearing as in the above embodiments, but is not limited thereto, and may be a roller bearing or a slide bearing capable of supporting an axial load. By using a bearing capable of supporting such an axial load, especially in the support mechanism 40, the first and second pressure generating unit can be compressed via the bearing by fastening the fastening nut 38b as in the above embodiments.

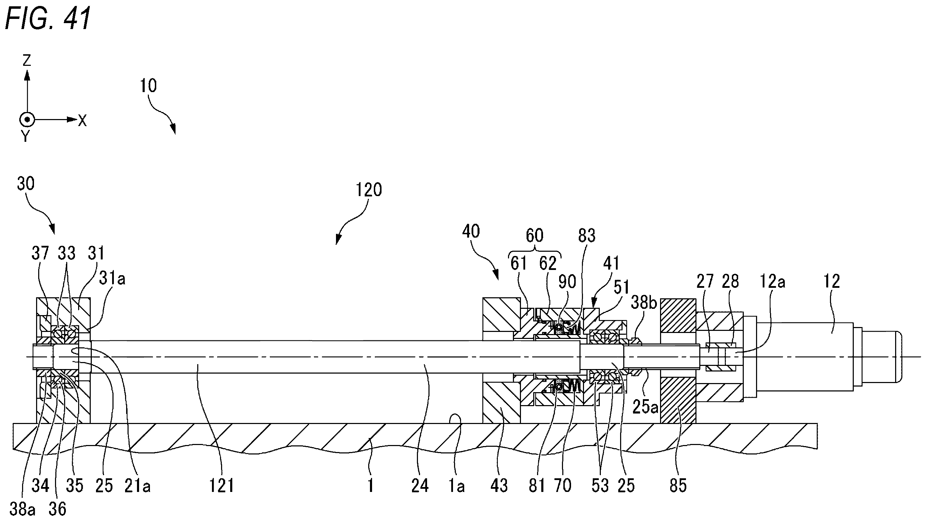

In FIG. 40, the second support mechanism 40 including the housing position adjustment mechanism 60 is configured to support an end of the rotation shaft 121, but as illustrated in FIG. 41, the second support mechanism 40 including the housing position adjustment mechanism 60 may be configured to support the rotation shaft 121 at a position close to another support base 85 that supports the drive motor 12.

For example, when the rotation support device 120 as illustrated in FIG. 41 is applied to a spindle device that rotates a tool in a machine tool, by attaching the tool to the end of the rotation shaft 121 supported by the support mechanism 30, positioning in the axial direction of the tool is reliably performed while continuously and stably maintaining the support rigidity in the axial direction of the rotation shaft 121, and highly accurate machining can be achieved.

Note that in the rotation support device 120 as illustrated in FIGS. 40 and 41, the drive motor 12 is not necessarily disposed coaxially with the rotation shaft 121, and for example, power of a drive motor may be transmitted to the rotation shaft 121 via a pulley, a gear train, or the like.

In addition, the drive motor 12 is not necessarily limited to a separate body disposed coaxially with the rotation shaft 121, and for example, a built-in motor may be directly included in the rotation shaft 121.

The rotation support device 120 may be a housing case as a support in which the bearing housing 31 of the first support mechanism 30 and the support base 43 of the second support mechanism 40 are integrated.

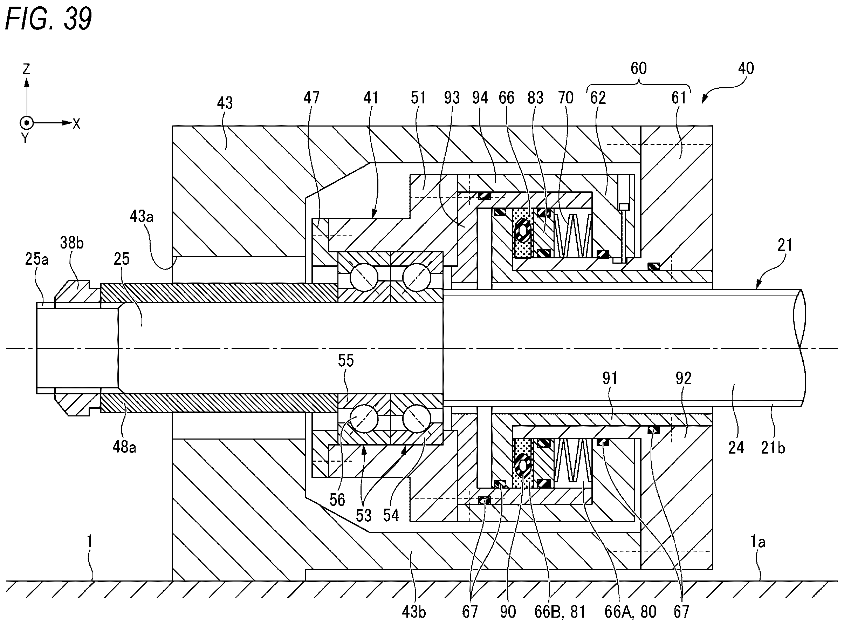

Note that also in a rotation support device other than the ball screw feeding device, as illustrated in FIGS. 36 to 39, the support base may be disposed on an axial end side with respect to the bearing unit.

In the above embodiments, the housing position adjustment mechanism is described as a mechanism that adjusts the position in the axial direction of the bearing housing of the bearing that supports the rotation shaft, but the present invention is not limited thereto, and can be applied as a support mechanism position adjustment mechanism for a shaft support device. That is, the shaft is not limited to a rotation shaft, and the support mechanism is not limited to a configuration including a bearing, and the shaft support device may have a configuration including a shaft and a pair of support mechanisms provided at both ends in an axial direction of the shaft for supporting the shaft, and in which one of the pair of support mechanisms may include a support (for example, the support base 43 in the above embodiments) through which the shaft penetrates or which is disposed around the shaft.

Therefore, the support mechanism position adjustment mechanism for a shaft support device may be configured to include a first member (for example, the support base side member 61 in the above embodiments) which is provided on one of the shaft side and the support side, through which the shaft penetrates or which can be disposed around the shaft, a second member (for example, the bearing housing side member 62 in the above embodiments) which is provided on the other of the shaft side and the support side, through which the shaft penetrates, or which can be disposed around the shaft, which is movable in the axial direction relative to the first member, and which forms an accommodation space (for example, the annular space 66 in the above embodiments) with the first member, a partition member that is disposed in the accommodation space and divides the accommodation space into a first space and a second space in the axial direction, a first pressure generating unit accommodated in the first space in a compressed state, and a second pressure generating unit accommodated in the second space in a compressed state.

The structure of the housing position adjustment mechanism described in the ball screw feeding device 20 can be applied to such a support mechanism position adjustment mechanism for a shaft support device, and the same effects are obtained.

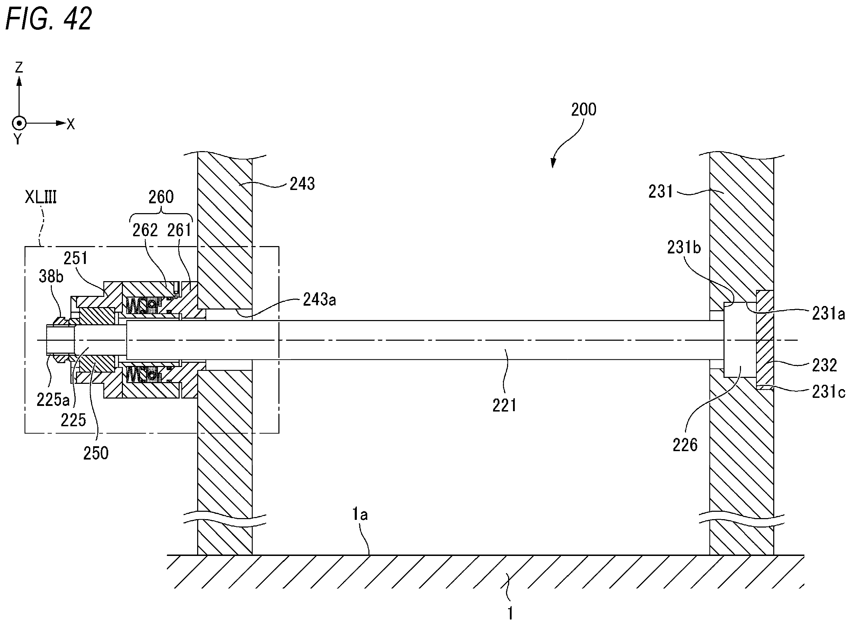

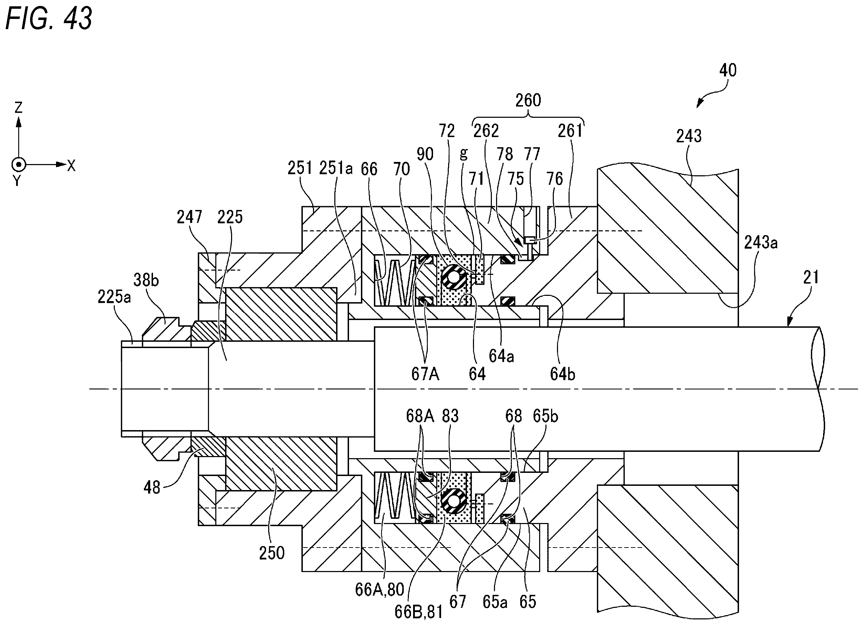

For example, FIGS. 42 and 43 illustrate a rigid joint structure 200 as a shaft support device in which a support mechanism position adjustment mechanism is provided in one of a pair of support mechanisms that support a shaft. The rigid joint structure 200 includes two steel supports 231, 243 that are parallel to each other and fixed to a base 1 while standing vertically. The supports 231, 243 are formed with concentric through holes 231a, 243a, and a shaft 221 constituting a beam member is inserted therethrough. Note that the supports 231, 243 may be a support, a beam, a support plate, or the like, and may be made of a member of any material and shape capable of supporting the shaft.

Note that in this example, in the shaft 221, a flange 226 on one end side in the axial direction is brought into contact with a small-diameter step portion 231b of the through hole 231a of the support 231, and one end of the shaft 221 is positioned and fixed to the support 231 by the other support mechanism for attaching a pressing lid 232 to a large-diameter step portion 231c of the through hole 231a.

The other end of the shaft 221 in the axial direction is inserted through the through hole 243a of the support 243, protrudes to a side opposite to the support 231, and is supported by the support 243 via a shaft guide member 250, a housing 251, and a support mechanism position adjustment mechanism 260 constituting one support mechanism.

A cross-sectional shape of a central portion of the shaft 221 is freely set, and may be a rectangular steel pipe, H-shaped steel, or the like.

The shaft guide member 250 is a member configured to surround the shaft 221, guides the small-diameter portion 225 of the shaft 221, and both ends on the outer diameter side thereof are sandwiched and integrated by a pressing member 247 fixed to the housing 251 and the housing 251.

Similarly to the above embodiments, the housing 251 is attached to the support 243 via the support mechanism position adjustment mechanism 260. That is, the first member 261 corresponding to the support base side member 61 of the above embodiments is fitted to the through hole 243a of the support 243 and fixed to the support 243, and the second member 262 corresponding to the bearing housing side member 62 of the above embodiments is fitted to an inward flange 251a of the housing 251 and fixed to the housing 251.

Therefore, when the shaft guide member 250 is fastened by a fastening nut 38b screwed to a male screw 225a via a spacer 48, a reaction force acts on the shaft guide member 250 to receive an axial load. Therefore, predetermined rigidity is given between the supports 231, 243 and the shaft 221.

In such a rigid joint structure 200, even when the shaft 221 extends in the axial direction, the support mechanism position adjustment mechanism 260 operates to move the shaft guide member 250 and the housing 251 in the same direction following the extension of the shaft 221 in the axial direction. Therefore, a shaft force acting on the shaft 221 can be maintained, and rigidity of the rigid joint structure 200 can be maintained.

Note that in this example, the housing 251 and the second member 262 of the support mechanism position adjustment mechanism 260 may be integrally formed, and the shaft guide member 250 may be disposed on the integrated member. Further, the shaft guide member 250 may be directly fixed to the second member 262 of the support mechanism position adjustment mechanism 260 without providing the housing 251.

The shaft support device is not limited to the rigid joint structure as in the present example, and may be a brace structure in which support mechanisms on a shaft side and a support side are joined via pins. In this case, the shaft 221 may be disposed to be inclined according to the configuration of the brace structure.

Further, in the shaft support device such as the rigid structure, both support mechanisms may have a support mechanism position adjustment mechanism.

As described above, the following matters are disclosed in the present specification.

(A1) A ball screw feeding device, including:
a screw shaft including an outer peripheral surface formed with a spiral screw groove;
a nut including an inner peripheral surface formed with a spiral screw groove;
a plurality of balls arranged between the screw groove of the screw shaft and the screw groove of the nut in a freely rolling manner; and
a pair of support mechanisms that support both ends in an axial direction of the screw shaft in a rotatable manner, in which
one of the pair of support mechanisms includes
   a bearing unit including a bearing housing and an angular ball bearing including an outer ring fitted into the bearing housing, an inner ring fitted onto an axial end of the screw shaft, and a ball disposed between the outer ring and the inner ring in a freely rolling manner,
   a support base disposed on an axial center side of the bearing unit and through which the screw shaft penetrates, and
   a housing position adjustment mechanism disposed between the bearing unit and the support base, and
the housing position adjustment mechanism includes
   a support base side member provided on the support base side and through which the screw shaft penetrates,
   a bearing housing side member provided on the bearing housing side, through which the screw shaft penetrates, and movable relative to the support base side member in the axial direction,
   a partition member that is disposed in an accommodation space formed between the support base side member and the bearing housing side member and divides the accommodation space into a first space and a second space in the axial direction,
   a first pressure generating unit accommodated in the first space in a compressed state, and
   a second pressure generating unit accommodated in the second space in a compressed state.

According to this configuration, even when an axial length of the screw shaft changes due to an influence of heat, support rigidity in the axial direction can be continuously and stably maintained. The support rigidity and the damping characteristic required for the ball screw feeding device can be imparted by the two types of pressure generating units accommodated in the accommodation space.

(A2) The ball screw feeding device according to (A1), in which
the first pressure generating unit is a first working fluid with which the first space is filled, and
the second pressure generating unit is a second working fluid with which the second space is filled.

According to this configuration, a pressure can be applied to the bearing housing side member by the first pressure generating unit which is the first working fluid and the second pressure generating unit which is the second working fluid, and even when the axial length of the screw shaft changes due to the influence of heat, the support rigidity in the axial direction can be continuously and stably maintained.

(A3) The ball screw feeding device according to (A1), in which
the first pressure generating unit is a first working fluid with which the first space is filled, and
the second pressure generating unit includes at least one of a hollow member and an elastic member accommodated in the second space, and a second working fluid with which vicinity of at least one of the hollow member and the elastic member is filled.

According to this configuration, a pressure can be applied to the bearing housing side member by the first pressure generating unit which is the first working fluid and the second pressure generating unit including at least one of the hollow member and the elastic member and the second working fluid, and even when the axial length of the screw shaft changes due to the influence of heat, the support rigidity in the axial direction can be continuously and stably maintained.

(A4) The ball screw feeding device according to (A1), in which
the first pressure generating unit includes at least one of a hollow member and an elastic member accommodated in the first space, and a first working fluid with which vicinity of at least one of the hollow member and the elastic member is filled, and
the second pressure generating unit is a second working fluid with which the second space is filled.

According to this configuration, a pressure can be applied to the bearing housing side member by the first pressure generating unit including at least one of the hollow member and the elastic member and the first working fluid, and the second pressure generating unit which is the second working fluid, and even when the axial length of the screw shaft changes due to the influence of heat, the support rigidity in the axial direction can be continuously and stably maintained.

(A5) The ball screw feeding device according to (A1), in which
the first pressure generating unit includes at least one of a hollow member and an elastic member accommodated in the first space, and a first working fluid with which vicinity of at least one of the hollow member and the elastic member is filled, and
the second pressure generating unit includes at least one of a hollow member and an elastic member accommodated in the second space, and a second working fluid with which vicinity of at least one of the hollow member and the elastic member is filled.

According to this configuration, a pressure can be applied to the bearing housing side member by the first pressure generating unit including at least one of the hollow member and the elastic member and the first working fluid and the second pressure generating unit including at least one of the hollow member and the elastic member and the second working fluid, and even when the axial length of the screw shaft changes due to the influence of heat, the support rigidity in the axial direction can be continuously and stably maintained.

(A6) The ball screw feeding device according to (A1), in which
one of the support base side member and the bearing housing side member has an annular concave portion that opens to one side in the axial direction,
the other of the support base side member and the bearing housing side member has an annular convex portion that protrudes toward the other side in the axial direction and is fitted into the annular concave portion in a slidable manner in the axial direction, and
the partition member is disposed in a space formed between the annular concave portion and the annular convex portion and is formed in an annular shape to be in sliding contact with an inward surface and an outward surface of the annular concave portion.

According to this configuration, the space in which the two pressure generating units are accommodated can be compactly formed around the screw shaft.

(A7) The ball screw feeding device according to (A6), in which
at least one seal member is mounted between the inward surface of the annular concave portion and an outer peripheral surface of the partition member and between the outward surface of the annular concave portion and an inner peripheral surface of the partition member, and
at least one seal member is mounted between the inward surface of the annular concave portion and an outward surface of the annular convex portion and between the outward surface of the annular concave portion and an inward surface of the annular convex portion.

According to this configuration, when the space is filled with the working fluid, leakage of the working fluid can be prevented by the seal member, and a function of the housing position adjustment mechanism can be maintained for a long period of time.

(A8) The ball screw feeding device according to (A6) or (A7), in which
a working fluid is stored in each gap between the inward surface of the annular concave portion and the outer peripheral surface of the partition member, between the outward surface of the annular concave portion and the inner peripheral surface of the partition member, between the inward surface of the annular concave portion and the outward surface of the annular convex portion, and between the outward surface of the annular concave portion and the inward surface of the annular convex portion.

According to this configuration, the housing position adjustment mechanism can provide support rigidity in a radial direction to the screw shaft, and can also have an alignment function with respect to the screw shaft.

(A9) The ball screw feeding device according to (A6) or (A7), in which
the housing position adjustment mechanism includes a storage chamber formed in the annular convex portion so as to open to the outward surface or the inward surface of the annular convex portion and configured to store the working fluid, and an orifice formed in the annular convex portion so as to allow the storage chamber to communicate with the second space.

According to this configuration, the working fluid in the second space and the storage chamber passes through the orifice and the gap between the peripheral surfaces of the annular convex portion and the peripheral surfaces of the annular concave portion, so that vibration can be damped.

(A10) The ball screw feeding device according to (A9), in which the second pressure generating unit includes
the working fluid accommodated in the second space, the storage chamber, and the orifice in a compressed state, and
a hollow member accommodated in the storage chamber.

According to this configuration, the hollow member can also be accommodated in the storage chamber, and a degree of freedom in layout can be increased.

(A11) The ball screw feeding device according to (A6) or (A7), in which
a tip surface of the annular convex portion is formed in a convex tapered shape or a concave tapered shape from an inner peripheral edge to an outer peripheral edge thereof.

According to this configuration, the alignment function and coaxial performance of the angular ball bearing with respect to the screw shaft can be further enhanced, and a load characteristic in the axial direction of the screw shaft can be enhanced.

(A12) The ball screw feeding device according to (A7), in which
the seal member is an O-ring,
the second space is filled with at least a second working fluid,
a seal groove in which the O-ring is disposed is formed in each of the inward surface of the annular concave portion or the outward surface of the annular convex portion, and the outward surface of the annular concave portion or the inward surface of the annular convex portion, and
the seal groove includes a tapered surface whose groove depth decreases as a distance from the accommodation space increases.

According to this configuration, by using the O-ring as the seal member, the O-ring also acts as a damping mechanism, and the vibration generated in the screw shaft can be damped. Even when relative movement between the support base side member and the bearing housing side member occurs, the leakage of the second working fluid to an atmospheric pressure side can be prevented, and axial rigidity of the ball screw feeding device can be continuously maintained.

(A13) The ball screw feeding device according to (A7) or (A12), in which
the seal member is an O-ring, and
a wear-resistant member is interposed between the O-ring and at least one of the inward surface of the annular concave portion and the outward surface of the annular convex portion, and between the O-ring and at least one of the outward surface of the annular concave portion and the inward surface of the annular convex portion.

According to this configuration, by using the O-ring as the seal member, the O-ring also acts as a damping mechanism, and the vibration generated in the screw shaft can be damped. Stress concentration applied to the O-ring can be dispersed, and damage such as wear of the O-ring and a contact surface with the O-ring can be reduced.

(A14) The ball screw feeding device according to (A6), in which
the partition member is a ring-shaped diaphragm that is attached to the inward surface of the annular concave portion and the outward surface of the annular concave portion and that includes a radially central portion deformable in the axial direction.

According to this configuration, a pressure can be applied to the bearing housing side member while balancing the pressures in the first space and the second space, and even when the axial length of the screw shaft changes, the support rigidity in the axial direction can be continuously maintained in a stable state.

(A15) The ball screw feeding device according to (A1), in which
one of the support base side member and the bearing housing side member includes a small-diameter cylindrical portion extending to one side in the axial direction and an outward flange portion extending from a tip of the small-diameter cylindrical portion toward an outer diameter side,
the other of the support base side member and the bearing housing side member includes a large-diameter cylindrical portion extending to the other side in the axial direction and including an inner peripheral surface in sliding contact with an outer peripheral surface of the outward flange portion, and an inward flange portion extending from a tip of the large-diameter cylindrical portion toward an inner diameter side and including an inner peripheral surface in sliding contact with an outer peripheral surface of the small-diameter cylindrical portion, and
the accommodation space is formed by the small-diameter cylindrical portion, the outward flange portion, the large-diameter cylindrical portion, and the inward flange portion.

According to this configuration, even when an axial length of the screw shaft changes due to an influence of heat, support rigidity in the axial direction can be continuously and stably maintained.

(A16) The ball screw feeding device according to (A15), in which
at least one seal member is mounted between an inner peripheral surface of the large-diameter cylindrical portion and the outer peripheral surface of the partition member and between the outer peripheral surface of the small-diameter cylindrical portion and the inner peripheral surface of the partition member, and
at least one seal member is mounted between an inner peripheral surface of the inward flange portion and the outer peripheral surface of the small-diameter cylindrical portion and between the outer peripheral surface of the outward flange portion and the inner peripheral surface of the large-diameter cylindrical portion.

According to this configuration, when the space is filled with the working fluid, leakage of the working fluid can be prevented by the seal member, and a function of the housing position adjustment mechanism can be maintained for a long period of time.

(A17) The ball screw feeding device according to (A15) or (A16), in which
a working fluid is stored in each gap between the inner peripheral surface of the large-diameter cylindrical portion and the outer peripheral surface of the partition member, between the outer peripheral surface of the small-diameter cylindrical portion and the inner peripheral surface of the partition member, between the inner peripheral surface of the inward flange portion and the outer peripheral surface of the small-diameter cylindrical portion, and between the outer peripheral surface of the outward flange portion and the inner peripheral surface of the large-diameter cylindrical portion.

According to this configuration, the housing position adjustment mechanism can provide support rigidity in a radial direction to the screw shaft, and can also have an alignment function with respect to the screw shaft.

(A18) The ball screw feeding device according to (A15) or (A16), in which
the housing position adjustment mechanism includes a storage chamber formed in the outward flange portion or the inward flange portion so as to open to the inner peripheral surface of the large-diameter cylindrical portion or the outer peripheral surface of the small-diameter cylindrical portion and configured to store a working fluid, and an orifice formed in the outward flange portion or the inward flange portion so as to allow the storage chamber to communicate with the second space.

According to this configuration, the working fluid in the second space and the storage chamber passes through the orifice and the gap between the inner peripheral surface of the large-diameter cylindrical portion and the outer peripheral surface of the outward flange portion or between the outer peripheral surface of the small-diameter cylindrical portion and the inner peripheral surface of the inward flange portion, so that the vibration can be damped.

(A19) The ball screw feeding device according to (A16), in which
the seal member is an O-ring,
the second space is filled with at least a second working fluid,
a seal groove in which the O-ring is disposed is formed in each of the inner peripheral surface of the inward flange portion or the outer peripheral surface of the small-diameter cylindrical portion, and the outer peripheral surface of the outward flange portion or the inner peripheral surface of the large-diameter cylindrical portion, and
the seal groove includes a tapered surface whose groove depth decreases as a distance from the accommodation space increases.

According to this configuration, by using the O-ring as the seal member, the O-ring also acts as a damping mechanism, and the vibration generated in the screw shaft can be damped. Even when relative movement between the support base side member and the bearing housing side member occurs, the leakage of the second working fluid to an atmospheric pressure side can be prevented, and axial rigidity of the ball screw feeding device can be continuously maintained.

(A20) The ball screw feeding device according to (A16), in which
the seal member is an O-ring, and
a wear-resistant member is interposed between the O-ring and at least one of the inner peripheral surface of the inward flange portion and the outer peripheral surface of the small-diameter cylindrical portion, and between the O-ring and at least one of the outer peripheral surface of the outward flange portion and the inner peripheral surface of the large-diameter cylindrical portion.

According to this configuration, by using the O-ring as the seal member, the O-ring also acts as a damping mechanism, and the vibration generated in the screw shaft can be damped. Stress concentration applied to the O-ring can be dispersed, and damage such as wear of the O-ring and a contact surface with the O-ring can be reduced.

(A21) The ball screw feeding device according to (A1), in which
one of the support base side member and the bearing housing side member has an annular concave portion that opens to one side in the axial direction,
the other of the support base side member and the bearing housing side member has an annular convex portion that protrudes toward the other side in the axial direction and is fitted into the annular concave portion in a slidable manner in the axial direction, and
the partition member is disposed in an accommodation space formed between the annular concave portion and the annular convex portion, is attached to an inward surface and an outward surface of the annular concave portion to be formed in an annular shape, and is deformable by the first pressure generating unit and the second pressure generating unit.

According to this configuration, even when the axial length of the screw shaft changes due to the influence of heat, the support rigidity in the axial direction can be continuously maintained in a stable state.

(A22) The ball screw feeding device according to any one of (A1) to (A5), in which
a working medium volume change unit configured to change a volume of at least one of the first pressure generating unit and the second pressure generating unit by heating or cooling at least one of the first pressure generating unit and the second pressure generating unit is attached to at least one of the support base side member and the bearing housing side member.

According to this configuration, the first pressure generating unit and the second pressure generating unit are heated or cooled to expand or contract a volume of the working medium, so that the support rigidity in the axial direction can be continuously maintained in a stable state.

(A23) The ball screw feeding device according to (A1), in which
one of the pair of support mechanisms further includes another housing position adjustment mechanism disposed adjacent to the housing position adjustment mechanism between the bearing unit and the support base, and
the another housing position adjustment mechanism includes
   another support base side member provided on the support base side and through which the screw shaft penetrates,
   another bearing housing side member provided on the bearing housing side, through which the screw shaft penetrates, and movable in the axial direction relative to the another support base side member, and
   a third pressure generating unit that is accommodated in a compressed state in another accommodation space formed between the another support base side member and the another bearing housing side member.

According to this configuration, it becomes easier to maintain the axial rigidity of the ball screw feeding device.

(A24) A ball screw feeding device, including:
a screw shaft including an outer peripheral surface formed with a spiral screw groove;
a nut including an inner peripheral surface formed with a spiral screw groove;
a plurality of balls arranged between the screw groove of the screw shaft and the screw groove of the nut in a freely rolling manner; and
a pair of support mechanisms that support both ends in an axial direction of the screw shaft in a rotatable manner, in which
one of the pair of support mechanisms includes
   a bearing unit including a bearing housing and an angular ball bearing including an outer ring fitted into the bearing housing, an inner ring fitted onto an axial end of the screw shaft, and a ball disposed between the outer ring and the inner ring in a freely rolling manner,
   a support base through which the screw shaft penetrates, and
   a housing position adjustment mechanism mounted on the bearing unit and the support base, and
the housing position adjustment mechanism includes
   a support base side member mounted on the support base and through which the screw shaft penetrates,
   a bearing housing side member mounted on the bearing housing, through which the screw shaft penetrates, and movable relative to the support base side member in the axial direction,
   a partition member that is disposed in an accommodation space formed between the support base side member and the bearing housing side member and divides the accommodation space into a first space and a second space in the axial direction,
   a first pressure generating unit accommodated in the first space in a compressed state, and
   a second pressure generating unit accommodated in the second space in a compressed state.

According to this configuration, even when an axial length of the screw shaft changes due to an influence of heat, the support rigidity in the axial direction can be continuously and stably maintained. The support rigidity and the damping characteristic required for the ball screw feeding device can be imparted by the two types of pressure generating units accommodated in the accommodation space.

(A25) A rotation support device, including:
a rotation shaft; and
a pair of support mechanisms that respectively support both ends in an axial direction of the rotation shaft in a rotatable manner, in which
one of the pair of support mechanisms includes
   a bearing unit including a bearing housing and a bearing that supports the rotation shaft in a rotatable manner with respect to the bearing housing and capable of supporting an axial load,
   a support base disposed at an axial center side of the bearing unit and through which the rotation shaft penetrates, and
   a housing position adjustment mechanism disposed between the bearing unit and the support base, and
the housing position adjustment mechanism includes
   a support base side member provided on the support base side and through which the rotation shaft penetrates,
   a bearing housing side member provided on the bearing housing side, through which the rotation shaft penetrates, and movable relative to the support base side member in the axial direction,
   a partition member that is disposed in an accommodation space formed between the support base side member and the bearing housing side member and divides the accommodation space into a first space and a second space in the axial direction,
   a first pressure generating unit accommodated in the first space in a compressed state, and
   a second pressure generating unit accommodated in the second space in a compressed state.

According to this configuration, even when an axial length of the rotation shaft changes due to an influence of heat, the support rigidity in the axial direction can be continuously and stably maintained. The support rigidity and the damping characteristic required for the rotation support device can be imparted by two types of pressure generating units accommodated in the accommodation space.

(A26) A rotation support device, including:
a rotation shaft; and
a pair of support mechanisms that respectively support both ends in an axial direction of the rotation shaft in a rotatable manner, in which
one of the pair of support mechanisms includes
   a bearing unit including a bearing housing and a bearing that supports the rotation shaft in a rotatable manner with respect to the bearing housing and capable of supporting an axial load,
   a support base through which the rotation shaft penetrates, and
   a housing position adjustment mechanism mounted on the bearing unit and the support base, and
the housing position adjustment mechanism includes
   a support base side member mounted on the support base and through which the rotation shaft penetrates,
   a bearing housing side member mounted on the bearing housing, through which the rotation shaft penetrates, and movable relative to the support base side member in the axial direction,
   a partition member that is disposed in an accommodation space formed between the support base side member and the bearing housing side member and divides the accommodation space into a first space and a second space in the axial direction,
   a first pressure generating unit accommodated in the first space in a compressed state, and
   a second pressure generating unit accommodated in the second space in a compressed state.

According to this configuration, even when an axial length of the rotation shaft changes due to an influence of heat, the support rigidity in the axial direction can be continuously and stably maintained. The support rigidity and the damping characteristic required for the rotation support device can be imparted by two types of pressure generating units accommodated in the accommodation space.

(A27) A support mechanism position adjustment mechanism for a shaft support device including a shaft and a pair of support mechanisms provided at both ends in an axial direction of the shaft to support the shaft with respect to a base, the support mechanism position adjustment mechanism for a shaft support device being provided in one of the pair of support mechanisms, the support mechanism position adjustment mechanism including:
a first member provided on one of the support mechanism side and the base side, and through which the shaft is capable of penetrating;
a second member provided on the other of the support mechanism side and the base side, and through which the shaft is capable of penetrating, which is movable in the axial direction relative to the first member, and which forms an accommodation space with the first member;
a partition member disposed in the accommodation space and dividing the accommodation space into a first space and a second space in the axial direction;
a first pressure generating unit accommodated in the first space in a compressed state; and
a second pressure generating unit accommodated in the second space in a compressed state.

According to this configuration, even when an axial length of the shaft changes due to an influence of heat, the support rigidity in the axial direction can be continuously and stably maintained. The support rigidity and the damping characteristic required for the shaft support device can be imparted by the two types of pressure generating units accommodated in the accommodation space.

(A28) A support mechanism position adjustment mechanism for a shaft support device including a shaft and a pair of support mechanisms provided at both ends in an axial direction of the shaft to support the shaft with respect to a base, the support mechanism position adjustment mechanism for a shaft support device being provided in one of the pair of support mechanisms, the support mechanism position adjustment mechanism including:
a first member mounted on one of the support mechanism and the base, and through which the shaft is capable of penetrating;
a second member mounted on the other of the support mechanism and the base, and through which the shaft is capable of penetrating, which is movable in the axial direction relative to the first member, and which forms an accommodation space with the first member;
a partition member disposed in the accommodation space and dividing the accommodation space into a first space and a second space in the axial direction;
a first pressure generating unit accommodated in the first space in a compressed state; and
a second pressure generating unit accommodated in the second space in a compressed state.

According to this configuration, even when an axial length of the shaft changes due to an influence of heat, the support rigidity in the axial direction can be continuously and stably maintained. The support rigidity and the damping characteristic required for the shaft support device can be imparted by the two types of pressure generating units accommodated in the accommodation space.

(A29) A rotation support device, including:
a rotation shaft; and
a pair of support mechanisms that respectively support both ends in an axial direction of the rotation shaft in a rotatable manner, in which
one of the pair of support mechanisms includes
   a bearing unit including a bearing housing and a bearing that supports the rotation shaft in a rotatable manner with respect to the bearing housing and capable of supporting an axial load,
   a support base through which the rotation shaft penetrates, and
   a housing position adjustment mechanism disposed between the bearing unit and the support base, and
the housing position adjustment mechanism includes
   a support base side member provided on the support base side and through which the rotation shaft penetrates or which is disposed around the rotation shaft,
   a bearing housing side member provided on the bearing housing side, through which the rotation shaft penetrates or which is disposed around the rotation shaft, and movable relative to the support base side member in the axial direction,
   a partition member that is disposed in an accommodation space formed between the support base side member and the bearing housing side member and divides the accommodation space into a first space and a second space in the axial direction,
   a first pressure generating unit accommodated in the first space in a compressed state, and
   a second pressure generating unit accommodated in the second space in a compressed state.

According to this configuration, even when an axial length of the rotation shaft changes due to an influence of heat, the support rigidity in the axial direction can be continuously and stably maintained. The support rigidity and the damping characteristic required for the rotation support device can be imparted by two types of pressure generating units accommodated in the accommodation space.

(A30) The rotation support device according to (A29), in which
one of the support base side member and the bearing housing side member includes a plurality of concave portions that open to one side in the axial direction,
the other of the support base side member and the bearing housing side member includes a plurality of convex portions that protrude toward the other side in the axial direction and are respectively fitted into the plurality of concave portions in a slidable manner in the axial direction, and
a plurality of the accommodation spaces are respectively formed between the plurality of concave portions and the plurality of convex portions.

According to this configuration, a layout of the housing position adjustment mechanism can be freely configured by the plurality of accommodation spaces.

(A31) The rotation support device according to (A30), in which
the plurality of accommodation spaces are arranged on both sides in a width direction with respect to the rotation shaft.

According to this configuration, a height dimension of the housing position adjustment mechanism can be reduced.

(A32) The rotation support device according to (A30), in which
the partition member is disposed in each of the plurality of accommodation spaces and is formed in sliding contact with an inner surface of each of the concave portions.

According to this configuration, the plurality of accommodation spaces can be configured in common.

(A33) The rotation support device according to (A29), in which
the rotation support device is a ball screw feeding device in which the rotation shaft is a screw shaft in which a spiral screw groove is formed on an outer peripheral surface, and further includes a nut including an inner peripheral surface formed with a spiral screw groove, and a plurality of balls disposed between the screw groove of the screw shaft and the screw groove of the nut in a freely rolling manner.

According to this configuration, a ball screw feeding device in which the support rigidity in the axial direction can be continuously and stably maintained even when an axial length of the rotation shaft changes due to an influence of heat can be configured.

(A34) A support mechanism position adjustment mechanism for a shaft support device including a shaft and a pair of support mechanisms provided at both ends in an axial direction of the shaft to support the shaft with respect to a base, the support mechanism position adjustment mechanism for a shaft support device being provided in one of the pair of support mechanisms, the support mechanism position adjustment mechanism including:
a first member provided on one of the support mechanism side and the base side, and through which the shaft is capable of penetrating or which is capable of being disposed around the shaft;
a second member provided on the other of the support mechanism side and the base side, and through which the shaft is capable of penetrating or which is capable of being disposed around the shaft, which is movable in the axial direction relative to the first member, and which forms an accommodation space with the first member;
a partition member disposed in the accommodation space and dividing the accommodation space into a first space and a second space in the axial direction;
a first pressure generating unit accommodated in the first space in a compressed state; and
a second pressure generating unit accommodated in the second space in a compressed state.

According to this configuration, even when an axial length of the shaft changes due to an influence of heat, the support rigidity in the axial direction can be continuously and stably maintained. The support rigidity and the damping characteristic required for the shaft support device can be imparted by the two types of pressure generating units accommodated in the accommodation space.

(B1) A rotation support device, including:
a rotation shaft; and
a pair of support mechanisms that respectively support both ends in an axial direction of the rotation shaft in a rotatable manner, in which
one of the pair of support mechanisms includes
   a bearing unit including a bearing housing and a bearing that supports the rotation shaft in a rotatable manner with respect to the bearing housing and capable of supporting an axial load,
   a support base through which the rotation shaft penetrates or which is disposed around the rotation shaft, and
   a housing position adjustment mechanism disposed between the bearing unit and the support base, and
the housing position adjustment mechanism includes
   a support base side member provided on the support base side and through which the rotation shaft penetrates or which is disposed around the rotation shaft,
   a bearing housing side member provided on the bearing housing side, through which the rotation shaft penetrates or which is disposed around the rotation shaft, and movable relative to the support base side member in the axial direction,
   a partition member that is disposed in an accommodation space formed between the support base side member and the bearing housing side member and divides the accommodation space into a first space and a second space in the axial direction,
   a first pressure generating unit accommodated in the first space in a compressed state, and
   a second pressure generating unit accommodated in the second space in a compressed state.

According to this configuration, even when an axial length of the rotation shaft changes due to an influence of heat, support rigidity in the axial direction can be continuously and stably maintained. The support rigidity and a damping characteristic required for the rotation support device can be imparted by two types of pressure generating units accommodated in the accommodation space.

(B2) The rotation support device according to (B1), in which
the first pressure generating unit is a first working fluid with which the first space is filled, and
the second pressure generating unit is a second working fluid with which the second space is filled.

According to this configuration, a pressure can be applied to the bearing housing side member by the first pressure generating unit which is the first working fluid and the second pressure generating unit which is the second working fluid, and even when the axial length of the rotation shaft changes due to the influence of heat, the support rigidity in the axial direction can be continuously and stably maintained.

(B3) The rotation support device according to (B1), in which
the first pressure generating unit is a first working fluid with which the first space is filled, and
the second pressure generating unit includes at least one of a hollow member and an elastic member accommodated in the second space, and a second working fluid with which vicinity of at least one of the hollow member and the elastic member is filled.

According to this configuration, a pressure can be applied to the bearing housing side member by the first pressure generating unit which is the first working fluid and the second pressure generating unit including at least one of the hollow member and the elastic member and the second working fluid, and even when the axial length of the rotation shaft changes due to the influence of heat, the support rigidity in the axial direction can be continuously and stably maintained.

(B4) The rotation support device according to (B1), in which
the first pressure generating unit includes at least one of a hollow member and an elastic member accommodated in the first space, and a first working fluid with which vicinity of at least one of the hollow member and the elastic member is filled, and
the second pressure generating unit is a second working fluid with which the second space is filled.

According to this configuration, a pressure can be applied to the bearing housing side member by the first pressure generating unit including at least one of the hollow member and the elastic member and the first working fluid, and the second pressure generating unit which is the second working fluid, and even when the axial length of the rotation shaft changes due to the influence of heat, the support rigidity in the axial direction can be continuously and stably maintained.

(B5) The rotation support device according to (B1), in which
the first pressure generating unit includes at least one of a hollow member and an elastic member accommodated in the first space, and a first working fluid with which vicinity of at least one of the hollow member and the elastic member is filled, and
the second pressure generating unit includes at least one of a hollow member and an elastic member accommodated in the second space, and a second working fluid with which vicinity of at least one of the hollow member and the elastic member is filled.

According to this configuration, a pressure can be applied to the bearing housing side member by the first pressure generating unit including at least one of the hollow member and the elastic member and the first working fluid and the second pressure generating unit including at least one of the hollow member and the elastic member and the second working fluid, and even when the axial length of the rotation shaft changes due to the influence of heat, the support rigidity in the axial direction can be continuously and stably maintained.

(B6) The rotation support device according to (B1), in which
one of the support base side member and the bearing housing side member has an annular concave portion that opens to one side in the axial direction,
the other of the support base side member and the bearing housing side member has an annular convex portion that protrudes toward the other side in the axial direction and is fitted into the annular concave portion in a slidable manner in the axial direction, and
the partition member is disposed in a space formed between the annular concave portion and the annular convex portion and is formed in an annular shape to be in sliding contact with an inward surface and an outward surface of the annular concave portion.

According to this configuration, the space in which the two pressure generating units are accommodated can be compactly formed around the rotation shaft.

(B7) The rotation support device according to (B6), in which
at least one seal member is mounted between the inward surface of the annular concave portion and an outer peripheral surface of the partition member and between the outward surface of the annular concave portion and an inner peripheral surface of the partition member, and
at least one seal member is mounted between the inward surface of the annular concave portion and an outward surface of the annular convex portion and between the outward surface of the annular concave portion and an inward surface of the annular convex portion.

According to this configuration, when the space is filled with the working fluid, leakage of the working fluid can be prevented by the seal member, and a function of the housing position adjustment mechanism can be maintained for a long period of time.

(B8) The rotation support device according to (B6) or (B7), in which
a working fluid is stored in each gap between the inward surface of the annular concave portion and the outer peripheral surface of the partition member, between the outward surface of the annular concave portion and the inner peripheral surface of the partition member, between the inward surface of the annular concave portion and the outward surface of the annular convex portion, and between the outward surface of the annular concave portion and the inward surface of the annular convex portion.

According to this configuration, the housing position adjustment mechanism can provide support rigidity in a radial direction to the rotation shaft, and can also have an alignment function with respect to the rotation shaft.

(B9) The rotation support device according to (B6) or (B7), in which
the housing position adjustment mechanism includes a storage chamber formed in the annular convex portion so as to open to the outward surface or the inward surface of the annular convex portion and configured to store the working fluid, and an orifice formed in the annular convex portion so as to allow the storage chamber to communicate with the second space.

According to this configuration, the working fluid in the second space and the storage chamber passes through the orifice and the gap between the peripheral surfaces of the annular convex portion and the peripheral surfaces of the annular concave portion, so that vibration can be damped.

(B10) The rotation support device according to (B9), in which
the second pressure generating unit includes
the working fluid accommodated in the second space, the storage chamber, and the orifice in a compressed state, and
a hollow member accommodated in the storage chamber.

According to this configuration, the hollow member can also be accommodated in the storage chamber, and a degree of freedom in layout can be increased.

(B11) The rotation support device according to (B6) or (B7), in which
a tip surface of the annular convex portion is formed in a convex tapered shape or a concave tapered shape from an inner peripheral edge to an outer peripheral edge thereof.

According to this configuration, the alignment function and coaxial performance of the angular ball bearing with respect to the rotation shaft can be further enhanced, and a load characteristic in the axial direction of the rotation shaft can be enhanced.

(B12) The rotation support device according to (B7), in which
the seal member is an O-ring,
the second space is filled with at least a second working fluid,
a seal groove in which the O-ring is disposed is formed in each of the inward surface of the annular concave portion or the outward surface of the annular convex portion, and the outward surface of the annular concave portion or the inward surface of the annular convex portion, and
the seal groove includes a tapered surface whose groove depth decreases as a distance from the accommodation space increases.

According to this configuration, by using the O-ring as the seal member, the O-ring also acts as a damping mechanism, and the vibration generated in the rotation shaft can be damped. Even when relative movement between the support base side member and the bearing housing side member occurs, the leakage of the second working fluid to an atmospheric pressure side can be prevented, and axial rigidity of the rotation support device can be continuously maintained.

(B13) The rotation support device according to (B7) or (B12), in which
the seal member is an O-ring, and
a wear-resistant member is interposed between the O-ring and at least one of the inward surface of the annular concave portion and the outward surface of the annular convex portion, and between the O-ring and at least one of the outward surface of the annular concave portion and the inward surface of the annular convex portion.

According to this configuration, by using the O-ring as the seal member, the O-ring also acts as a damping mechanism, and the vibration generated in the rotation shaft can be damped. Stress concentration applied to the O-ring can be dispersed, and damage such as wear of the O-ring and a contact surface with the O-ring can be reduced.

(B14) The rotation support device according to (B6), in which
the partition member is a ring-shaped diaphragm that is attached to the inward surface of the annular concave portion and the outward surface of the annular concave portion and that includes a radially central portion deformable in the axial direction.

According to this configuration, a pressure can be applied to the bearing housing side member while balancing the pressures in the first space and the second space, and even when the axial length of the rotation shaft changes, the support rigidity in the axial direction can be continuously maintained in a stable state.

(B15) The rotation support device according to (B1), in which
one of the support base side member and the bearing housing side member includes a small-diameter cylindrical portion extending to one side in the axial direction and an outward flange portion extending from a tip of the small-diameter cylindrical portion toward an outer diameter side,
the other of the support base side member and the bearing housing side member includes a large-diameter cylindrical portion extending to the other side in the axial direction and including an inner peripheral surface in sliding contact with an outer peripheral surface of the outward flange portion, and an inward flange portion extending from a tip of the large-diameter cylindrical portion toward an inner diameter side and including an inner peripheral surface in sliding contact with an outer peripheral surface of the small-diameter cylindrical portion, and
the accommodation space is formed by the small-diameter cylindrical portion, the outward flange portion, the large-diameter cylindrical portion, and the inward flange portion.

According to this configuration, even when an axial length of the rotation shaft changes due to an influence of heat, support rigidity in the axial direction can be continuously and stably maintained.

(B16) The rotation support device according to (B15), in which
at least one seal member is mounted between an inner peripheral surface of the large-diameter cylindrical portion and the outer peripheral surface of the partition member and between the outer peripheral surface of the small-diameter cylindrical portion and the inner peripheral surface of the partition member, and
at least one seal member is mounted between an inner peripheral surface of the inward flange portion and the outer peripheral surface of the small-diameter cylindrical portion and between the outer peripheral surface of the outward flange portion and the inner peripheral surface of the large-diameter cylindrical portion.

According to this configuration, when the space is filled with the working fluid, leakage of the working fluid can be prevented by the seal member, and a function of the housing position adjustment mechanism can be maintained for a long period of time.

(B17) The rotation support device according to (B15) or (B16), in which
a working fluid is stored in each gap between the inner peripheral surface of the large-diameter cylindrical portion and the outer peripheral surface of the partition member, between the outer peripheral surface of the small-diameter cylindrical portion and the inner peripheral surface of the partition member, between the inner peripheral surface of the inward flange portion and the outer peripheral surface of the small-diameter cylindrical portion, and between the outer peripheral surface of the outward flange portion and the inner peripheral surface of the large-diameter cylindrical portion.

According to this configuration, the housing position adjustment mechanism can provide support rigidity in a radial direction to the rotation shaft, and can also have an alignment function with respect to the rotation shaft.

(B18) The rotation support device according to (B15) or (B16), in which
the housing position adjustment mechanism includes a storage chamber formed in the outward flange portion or the inward flange portion so as to open to the inner peripheral surface of the large-diameter cylindrical portion or the outer peripheral surface of the small-diameter cylindrical portion and configured to store a working fluid, and an orifice formed in the outward flange portion or the inward flange portion so as to allow the storage chamber to communicate with the second space.

According to this configuration, the working fluid in the second space and the storage chamber passes through the orifice and the gap between the inner peripheral surface of the large-diameter cylindrical portion and the outer peripheral surface of the outward flange portion or between the outer peripheral surface of the small-diameter cylindrical portion and the inner peripheral surface of the inward flange portion, so that the vibration can be damped.

(B19) The rotation support device according to (B16), in which
the seal member is an O-ring,
the second space is filled with at least a second working fluid,
a seal groove in which the O-ring is disposed is formed in each of the inner peripheral surface of the inward flange portion or the outer peripheral surface of the small-diameter cylindrical portion, and the outer peripheral surface of the outward flange portion or the inner peripheral surface of the large-diameter cylindrical portion, and
the seal groove includes a tapered surface whose groove depth decreases as a distance from the accommodation space increases.

According to this configuration, by using the O-ring as the seal member, the O-ring also acts as a damping mechanism, and the vibration generated in the rotation shaft can be damped. Even when relative movement between the support base side member and the bearing housing side member occurs, the leakage of the second working fluid to an atmospheric pressure side can be prevented, and axial rigidity of the rotation support device can be continuously maintained.

(B20) The rotation support device according to (B16), in which
the seal member is an O-ring, and
a wear-resistant member is interposed between the O-ring and at least one of the inner peripheral surface of the inward flange portion and the outer peripheral surface of the small-diameter cylindrical portion, and between the O-ring and at least one of the outer peripheral surface of the outward flange portion and the inner peripheral surface of the large-diameter cylindrical portion.

According to this configuration, by using the O-ring as the seal member, the O-ring also acts as a damping mechanism, and the vibration generated in the rotation shaft can be damped. Stress concentration applied to the O-ring can be dispersed, and damage such as wear of the O-ring and a contact surface with the O-ring can be reduced.

(B21) The rotation support device according to (B1), in which
one of the support base side member and the bearing housing side member has an annular concave portion that opens to one side in the axial direction,
the other of the support base side member and the bearing housing side member has an annular convex portion that protrudes toward the other side in the axial direction and is fitted into the annular concave portion in a slidable manner in the axial direction, and
the partition member is disposed in an accommodation space formed between the annular concave portion and the annular convex portion, is attached to an inward surface and an outward surface of the annular concave portion to be formed in an annular shape, and is deformable by the first pressure generating unit and the second pressure generating unit.

According to this configuration, even when the axial length of the rotation shaft changes due to the influence of heat, the support rigidity in the axial direction can be continuously maintained in a stable state.

(B22) The rotation support device according to any one of (B1) to (B5), in which
a working medium volume change unit configured to change a volume of at least one of the first pressure generating unit and the second pressure generating unit by heating or cooling at least one of the first pressure generating unit and the second pressure generating unit is attached to at least one of the support base side member and the bearing housing side member.

According to this configuration, the first pressure generating unit and the second pressure generating unit are heated or cooled to expand or contract a volume of the working medium, so that the support rigidity in the axial direction can be continuously maintained in a stable state.

(B23) The rotation support device according to (B1), in which
one of the pair of support mechanisms further includes another housing position adjustment mechanism disposed adjacent to the housing position adjustment mechanism between the bearing unit and the support base, and
the another housing position adjustment mechanism includes
   another support base side member provided on the support base side and through which the rotation shaft penetrates or which is disposed around the rotation shaft,
   another bearing housing side member provided on the bearing housing side, through which the rotation shaft penetrates or which is disposed around the rotation shaft, and movable in the axial direction relative to the another support base side member, and
   a third pressure generating unit that is accommodated in a compressed state in another accommodation space formed between the another support base side member and the another bearing housing side member.

According to this configuration, it becomes easier to maintain the axial rigidity of the rotation support device.

(B24) The rotation support device according to (B1), in which
one of the support base side member and the bearing housing side member includes a plurality of concave portions that open to one side in the axial direction,
the other of the support base side member and the bearing housing side member includes a plurality of convex portions that protrude toward the other side in the axial direction and are respectively fitted into the plurality of concave portions in a slidable manner in the axial direction, and
a plurality of the accommodation spaces are respectively formed between the plurality of concave portions and the plurality of convex portions.

According to this configuration, a layout of the housing position adjustment mechanism can be freely configured by the plurality of accommodation spaces.

(B25) The rotation support device according to (B24), in which
the plurality of accommodation spaces are arranged on both sides in a width direction with respect to the rotation shaft.

According to this configuration, a height dimension of the housing position adjustment mechanism can be reduced.

(B26) The rotation support device according to (B24), in which
the partition member is disposed in each of the plurality of accommodation spaces and is formed in sliding contact with an inner surface of each of the concave portions.

According to this configuration, the plurality of accommodation spaces can be configured in common.

(B27) The rotation support device according to any one of (B1) to (B26), in which
the bearing of the bearing unit includes a pair of angular ball bearings each including an outer ring fitted into the bearing housing, an inner ring fitted onto an axial end of the rotation shaft, and a ball disposed between the outer ring and the inner ring in a freely rolling manner.

According to this configuration, in a case where the bearing unit includes the pair of angular ball bearings, even when an axial length of the rotation shaft changes due to an influence of heat, support rigidity in the axial direction can be continuously and stably maintained.

(B28) The rotation support device according to any one of (B1) to (B27), in which
the rotation support device is a ball screw feeding device in which the rotation shaft is a screw shaft in which a spiral screw groove is formed on an outer peripheral surface, and further includes a nut including an inner peripheral surface formed with a spiral screw groove, and a plurality of balls disposed between the screw groove of the screw shaft and the screw groove of the nut in a freely rolling manner.

According to this configuration, a ball screw feeding device in which the support rigidity in the axial direction can be continuously and stably maintained even when an axial length of the rotation shaft changes due to an influence of heat can be configured.

[B29] A support mechanism position adjustment mechanism for a shaft support device including a shaft and a pair of support mechanisms provided at both ends in an axial direction of the shaft to support the shaft, the support mechanism position adjustment mechanism for a shaft support device being provided in one of the pair of support mechanisms, one of the pair of support mechanisms including a support through which the shaft penetrates or which is disposed around the shaft, the support mechanism position adjustment mechanism including:
a first member provided on one of the shaft side and the support side, and through which the shaft is capable of penetrating or which is capable of being disposed around the shaft;
a second member provided on the other of the shaft side and the support side, and through which the shaft is capable of penetrating or which is capable of being disposed around the shaft, which is movable in the axial direction relative to the first member, and which forms an accommodation space with the first member;
a partition member disposed in the accommodation space and dividing the accommodation space into a first space and a second space in the axial direction;
a first pressure generating unit accommodated in the first space in a compressed state; and
a second pressure generating unit accommodated in the second space in a compressed state.

According to this configuration, even when an axial length of the shaft changes due to an influence of heat, the support rigidity in the axial direction can be continuously and stably maintained. The support rigidity and the damping characteristic required for the shaft support device can be imparted by the two types of pressure generating units accommodated in the accommodation space.

(B30) The support mechanism position adjustment mechanism for a shaft support device according to (B29), in which
the shaft is a rotation shaft,
one of the pair of support mechanisms further includes a bearing unit including a bearing housing and a bearing that supports the rotation shaft in a rotatable manner with respect to the bearing housing and is capable of supporting an axial load,
the support mechanism position adjustment mechanism is a housing position adjustment mechanism disposed between the bearing unit and the support,
the first member is a support side member provided on the support side and through which the rotation shaft is capable of penetrating or which is capable of being disposed around the rotation shaft, and
the second member is a bearing housing side member provided on the bearing housing side, through which the rotation shaft is capable of penetrating or which is capable of being disposed around the rotation shaft, which is movable in the axial direction relative to the support side member, and which forms the accommodation space with the support side member.

According to this configuration, even when an axial length of the shaft changes due to an influence of heat, the support rigidity in the axial direction can be continuously and stably maintained.

(B31) The support mechanism position adjustment mechanism for a shaft support device according to (B29) or (B30), in which
the first pressure generating unit is a first working fluid with which the first space is filled, and
the second pressure generating unit is a second working fluid with which the second space is filled.

According to this configuration, a pressure can be applied to the first member or the second member by the first pressure generating unit which is the first working fluid and the second pressure generating unit which is the second working fluid, and even when the axial length of the shaft changes due to the influence of heat, the support rigidity in the axial direction can be continuously and stably maintained.

(B32) The support mechanism position adjustment mechanism for a shaft support device according to (B29) or (B30), in which
the first pressure generating unit is a first working fluid with which the first space is filled, and
the second pressure generating unit includes at least one of a hollow member and an elastic member accommodated in the second space, and a second working fluid with which vicinity of at least one of the hollow member and the elastic member is filled.

According to this configuration, a pressure can be applied to the first member or the second member by the first pressure generating unit which is the first working fluid and the second pressure generating unit including at least one of the hollow member and the elastic member and the second working fluid, and even when the axial length of the shaft changes due to the influence of heat, the support rigidity in the axial direction can be continuously and stably maintained.

(B33) The support mechanism position adjustment mechanism for a shaft support device according to (B29) or (B30), in which
the first pressure generating unit includes at least one of a hollow member and an elastic member accommodated in the first space, and a first working fluid with which vicinity of at least one of the hollow member and the elastic member is filled, and
the second pressure generating unit is a second working fluid with which the second space is filled.

According to this configuration, a pressure can be applied to the first member or the second member by the first pressure generating unit including at least one of the hollow member and the elastic member and the first working fluid, and the second pressure generating unit which is the second working fluid, and even when the axial length of the shaft changes due to the influence of heat, the support rigidity in the axial direction can be continuously and stably maintained.

(B34) The support mechanism position adjustment mechanism for a shaft support device according to (B29) or (B30), in which
the first pressure generating unit includes at least one of a hollow member and an elastic member accommodated in the first space, and a first working fluid with which vicinity of at least one of the hollow member and the elastic member is filled, and
the second pressure generating unit includes at least one of a hollow member and an elastic member accommodated in the second space, and a second working fluid with which vicinity of at least one of the hollow member and the elastic member is filled.

According to this configuration, a pressure can be applied to the first member or the second member by the first pressure generating unit including at least one of the hollow member and the elastic member and the first working fluid and the second pressure generating unit including at least one of the hollow member and the elastic member and the second working fluid, and even when the axial length of the shaft changes due to the influence of heat, the support rigidity in the axial direction can be continuously and stably maintained.

(B35) The support mechanism position adjustment mechanism for a shaft support device according to (B29) or (B30), in which
one of the first member and the second member has an annular concave portion that opens to one side in the axial direction,
the other of the first member and the second member has an annular convex portion that protrudes toward the other side in the axial direction and is fitted into the annular concave portion in a slidable manner in the axial direction, and
the partition member is disposed in a space formed between the annular concave portion and the annular convex portion and is formed in an annular shape to be in sliding contact with an inward surface and an outward surface of the annular concave portion.

According to this configuration, the space in which the two pressure generating units are accommodated can be compactly formed around the shaft.

(B36) The support mechanism position adjustment mechanism for a shaft support device according to (B35), in which
at least one seal member is mounted between the inward surface of the annular concave portion and an outer peripheral surface of the partition member and between the outward surface of the annular concave portion and an inner peripheral surface of the partition member, and
at least one seal member is mounted between the inward surface of the annular concave portion and an outward surface of the annular convex portion and between the outward surface of the annular concave portion and an inward surface of the annular convex portion.

According to this configuration, when the space is filled with the working fluid, leakage of the working fluid can be prevented by the seal member, and a function of the support mechanism position adjustment mechanism can be maintained for a long period of time.

(B37) The support mechanism position adjustment mechanism for a shaft support device according to (B35) or (B36), in which
a working fluid is stored in each gap between the inward surface of the annular concave portion and the outer peripheral surface of the partition member, between the outward surface of the annular concave portion and the inner peripheral surface of the partition member, between the inward surface of the annular concave portion and the outward surface of the annular convex portion, and between the outward surface of the annular concave portion and the inward surface of the annular convex portion.

According to this configuration, the support mechanism position adjustment mechanism can provide support rigidity in a radial direction to the shaft, and can also have an alignment function with respect to the shaft.

(B38) The support mechanism position adjustment mechanism for a shaft support device according to (B35) or (B36), in which
the support mechanism position adjustment mechanism includes a storage chamber formed in the annular convex portion so as to open to the outward surface or the inward surface of the annular convex portion and configured to store the working fluid, and an orifice formed in the annular convex portion so as to allow the storage chamber to communicate with the second space.

According to this configuration, the working fluid in the second space and the storage chamber passes through the orifice and the gap between the peripheral surfaces of the annular convex portion and the peripheral surfaces of the annular concave portion, so that vibration can be damped.

(B39) The support mechanism position adjustment mechanism for a shaft support device according to (B38), in which
the second pressure generating unit includes
the working fluid accommodated in the second space, the storage chamber, and the orifice in a compressed state, and
a hollow member accommodated in the storage chamber.

According to this configuration, the hollow member can also be accommodated in the storage chamber, and a degree of freedom in layout can be increased.

(B40) The support mechanism position adjustment mechanism for a shaft support device according to (B35) or (B36), in which
a tip surface of the annular convex portion is formed in a convex tapered shape or a concave tapered shape from an inner peripheral edge to an outer peripheral edge thereof.

According to this configuration, the alignment function and coaxial performance of the shaft can be further enhanced, and a load characteristic in the axial direction of the shaft can be enhanced.

(B41) The support mechanism position adjustment mechanism for a shaft support device according to (B36), in which
the seal member is an O-ring,
the second space is filled with at least a second working fluid,
a seal groove in which the O-ring is disposed is formed in each of the inward surface of the annular concave portion or the outward surface of the annular convex portion, and the outward surface of the annular concave portion or the inward surface of the annular convex portion, and
the seal groove includes a tapered surface whose groove depth decreases as a distance from the accommodation space increases.

According to this configuration, by using the O-ring as the seal member, the O-ring also acts as a damping mechanism, and the vibration generated in the shaft can be damped. Even when relative movement between the first member and the second member occurs, the leakage of the second working fluid to an atmospheric pressure side can be prevented, and axial rigidity of the shaft support device can be continuously maintained.

(B42) The support mechanism position adjustment mechanism for a shaft support device according to (B36) or (B41), in which
the seal member is an O-ring, and
a wear-resistant member is interposed between the O-ring and at least one of the inward surface of the annular concave portion and the outward surface of the annular convex portion, and between the O-ring and at least one of the outward surface of the annular concave portion and the inward surface of the annular convex portion.

According to this configuration, by using the O-ring as the seal member, the O-ring also acts as a damping mechanism, and the vibration generated in the shaft can be damped. Stress concentration applied to the O-ring can be dispersed, and damage such as wear of the O-ring and a contact surface with the O-ring can be reduced.

(B43) The support mechanism position adjustment mechanism for a shaft support device according to (B35), in which
the partition member is a ring-shaped diaphragm that is attached to the inward surface of the annular concave portion and the outward surface of the annular concave portion and that includes a radially central portion deformable in the axial direction.

According to this configuration, a pressure can be applied to the second member while balancing the pressures in the first space and the second space, and even when the axial length of the shaft changes, the support rigidity in the axial direction can be continuously maintained in a stable state.

(B44) The support mechanism position adjustment mechanism for a shaft support device according to (B29), in which
one of the first member and the second member includes a small-diameter cylindrical portion extending to one side in the axial direction and an outward flange portion extending from a tip of the small-diameter cylindrical portion toward an outer diameter side,
the other of the first member and the second member includes a large-diameter cylindrical portion extending to the other side in the axial direction and including an inner peripheral surface in sliding contact with an outer peripheral surface of the outward flange portion, and an inward flange portion extending from a tip of the large-diameter cylindrical portion toward an inner diameter side and including an inner peripheral surface in sliding contact with an outer peripheral surface of the small-diameter cylindrical portion, and
the accommodation space is formed by the small-diameter cylindrical portion, the outward flange portion, the large-diameter cylindrical portion, and the inward flange portion.

According to this configuration, even when an axial length of the shaft changes due to an influence of heat, the support rigidity in the axial direction can be continuously and stably maintained.

(B45) The support mechanism position adjustment mechanism for a shaft support device according to (B44), in which
at least one seal member is mounted between an inner peripheral surface of the large-diameter cylindrical portion and the outer peripheral surface of the partition member and between the outer peripheral surface of the small-diameter cylindrical portion and the inner peripheral surface of the partition member, and
at least one seal member is mounted between an inner peripheral surface of the inward flange portion and the outer peripheral surface of the small-diameter cylindrical portion and between the outer peripheral surface of the outward flange portion and the inner peripheral surface of the large-diameter cylindrical portion.

According to this configuration, when the space is filled with the working fluid, leakage of the working fluid can be prevented by the seal member, and a function of the support mechanism position adjustment mechanism can be maintained for a long period of time.

(B46) The support mechanism position adjustment mechanism for a shaft support device according to (B44) or (B45), in which
a working fluid is stored in each gap between the inner peripheral surface of the large-diameter cylindrical portion and the outer peripheral surface of the partition member, between the outer peripheral surface of the small-diameter cylindrical portion and the inner peripheral surface of the partition member, between the inner peripheral surface of the inward flange portion and the outer peripheral surface of the small-diameter cylindrical portion, and between the outer peripheral surface of the outward flange portion and the inner peripheral surface of the large-diameter cylindrical portion.

According to this configuration, the support mechanism position adjustment mechanism can provide support rigidity in a radial direction to the shaft, and can also have an alignment function with respect to the shaft.

(B47) The support mechanism position adjustment mechanism for a shaft support device according to (B44) or (B45), in which
the support mechanism position adjustment mechanism includes a storage chamber formed in the outward flange portion or the inward flange portion so as to open to the inner peripheral surface of the large-diameter cylindrical portion or the outer peripheral surface of the small-diameter cylindrical portion and configured to store a working fluid, and an orifice formed in the outward flange portion or the inward flange portion so as to allow the storage chamber to communicate with the second space.

According to this configuration, the working fluid in the second space and the storage chamber passes through the orifice and the gap between the inner peripheral surface of the large-diameter cylindrical portion and the outer peripheral surface of the outward flange portion or between the outer peripheral surface of the small-diameter cylindrical portion and the inner peripheral surface of the inward flange portion, so that the vibration can be damped.

(B48) The support mechanism position adjustment mechanism for a shaft support device according to (B45), in which
the seal member is an O-ring,
the second space is filled with at least a second working fluid,
a seal groove in which the O-ring is disposed is formed in each of the inner peripheral surface of the inward flange portion or the outer peripheral surface of the small-diameter cylindrical portion, and the outer peripheral surface of the outward flange portion or the inner peripheral surface of the large-diameter cylindrical portion, and
the seal groove includes a tapered surface whose groove depth decreases as a distance from the accommodation space increases.

According to this configuration, by using the O-ring as the seal member, the O-ring also acts as a damping mechanism, and the vibration generated in the shaft can be damped. Even when relative movement between the first member and the second member occurs, the leakage of the second working fluid to an atmospheric pressure side can be prevented, and axial rigidity of the shaft support device can be continuously maintained.

(B49) The support mechanism position adjustment mechanism for a shaft support device according to (B45), in which
the seal member is an O-ring, and
a wear-resistant member is interposed between the O-ring and at least one of the inner peripheral surface of the inward flange portion and the outer peripheral surface of the small-diameter cylindrical portion, and between the O-ring and at least one of the outer peripheral surface of the outward flange portion and the inner peripheral surface of the large-diameter cylindrical portion.

According to this configuration, by using the O-ring as the seal member, the O-ring also acts as a damping mechanism, and the vibration generated in the shaft can be damped. Stress concentration applied to the O-ring can be dispersed, and damage such as wear of the O-ring and a contact surface with the O-ring can be reduced.

(B50) The support mechanism position adjustment mechanism for a shaft support device according to (B29) or (B30), in which
one of the first member and the second member has an annular concave portion that opens to one side in the axial direction,
the other of the first member and the second member has an annular convex portion that protrudes toward the other side in the axial direction and is fitted into the annular concave portion in a slidable manner in the axial direction, and
the partition member is disposed in an accommodation space formed between the annular concave portion and the annular convex portion, is attached to an inward surface and an outward surface of the annular concave portion to be formed in an annular shape, and is deformable by the first pressure generating unit and the second pressure generating unit.

According to this configuration, even when the axial length of the shaft changes due to the influence of heat, the support rigidity in the axial direction can be continuously maintained in a stable state.

(B51) The support mechanism position adjustment mechanism for a shaft support device according to any one of (B29) to (B34), in which
a working medium volume change unit configured to change a volume of at least one of the first pressure generating unit and the second pressure generating unit by heating or cooling at least one of the first pressure generating unit and the second pressure generating unit is attached to at least one of the first member and the second member.

According to this configuration, the first pressure generating unit and the second pressure generating unit are heated or cooled to expand or contract a volume of the working medium, so that the support rigidity in the axial direction can be continuously maintained in a stable state.

(B52) The support mechanism position adjustment mechanism for a shaft support device according to any one of (B29) to (B51), in which
one of the pair of support mechanisms further includes another support mechanism position adjustment mechanism disposed adjacent to the support mechanism position adjustment mechanism between the bearing unit and the support base, and
the another support mechanism position adjustment mechanism includes
   another first member provided on the support base side and through which the shaft penetrates or which is disposed around the shaft,
   another second member provided on the bearing housing side, through which the shaft penetrates or which is disposed around the shaft, and movable in the axial direction relative to the another first member, and
   a third pressure generating unit that is accommodated in a compressed state in another accommodation space formed between the another first member and the another second member.

According to this configuration, it becomes easier to maintain the axial rigidity of the shaft support device.

(B53) The support mechanism position adjustment mechanism for a shaft support device according to (B29), in which
one of the first member and the second member includes a plurality of concave portions that open to one side in the axial direction,
the other of the first member and the second member includes a plurality of convex portions that protrude toward the other side in the axial direction and are respectively fitted into the plurality of concave portions in a slidable manner in the axial direction, and
a plurality of the accommodation spaces are respectively formed between the plurality of concave portions and the plurality of convex portions.

According to this configuration, a layout of the support mechanism position adjustment mechanism can be freely configured by the plurality of accommodation spaces.

(B54) The support mechanism position adjustment mechanism for a shaft support device according to (B53), in which
the plurality of accommodation spaces are arranged on both sides in a width direction with respect to the shaft.

According to this configuration, a height dimension of the support mechanism position adjustment mechanism can be reduced.

(B55) The support mechanism position adjustment mechanism for a shaft support device according to (B53), in which
the partition member is disposed in each of the plurality of accommodation spaces and is formed in sliding contact with an inner surface of each of the concave portions.

According to this configuration, the plurality of accommodation spaces can be configured in common.

Note that the present application is based on Japanese Patent Application No. 2022-173762 filed on October 28, 2022, Japanese Patent Application No. 2023-118996 filed on July 21, 2023, and Japanese Patent Application No. 2023-134636 filed on August 22, 2023, contents of which are incorporated herein by reference.

### REFERENCE SIGNS LIST

20 ball screw feeding device (shaft support device, rotation support device)
21 screw shaft (shaft, rotation shaft)
23 nut
30 first support mechanism (support mechanism)
31 fixed side bearing housing
33, 53 angular ball bearing (bearing)
34, 54 outer ring
35, 55 inner ring
36, 56 ball
38a, 38b fastening nut
40 second support mechanism (support mechanism)
41 bearing unit
43 support base (support)
51 movable side bearing housing (bearing housing)
51a inward flange
59 wear-resistant member
60 housing position adjustment mechanism (support mechanism position adjustment mechanism)
61 support base side member (first member)
62 bearing housing side member (second member)
64 annular concave portion
65 annular convex portion
66 annular space (accommodation space)
66A first space
66B second space
67, 67A O-ring (seal member)
68 seal groove
69a tapered surface
70 disc spring (elastic member)
80 first working fluid
81 second working fluid
83 partition member
90 hollow member
120 rotation support device
121 rotation shaft
130, 131 heating element (working medium volume change unit)
132, 133 cooling medium (working medium volume change unit)
160 another housing position adjustment mechanism (another support mechanism position adjustment mechanism)
161 another support base side member (another support side member)
162 another bearing housing side member

## Claims

1. A rotation support device, comprising:
a rotation shaft; and
a pair of support mechanisms that respectively support both ends in an axial direction of the rotation shaft in a rotatable manner, wherein
one of the pair of support mechanisms includes
a bearing unit including a bearing housing and a bearing that supports the rotation shaft in a rotatable manner with respect to the bearing housing and capable of supporting an axial load,
a support base through which the rotation shaft penetrates or which is disposed around the rotation shaft, and
a housing position adjustment mechanism disposed between the bearing unit and the support base, and
the housing position adjustment mechanism includes
a support base side member provided on the support base side and through which the rotation shaft penetrates or which is disposed around the rotation shaft,
a bearing housing side member provided on the bearing housing side, through which the rotation shaft penetrates or which is disposed around the rotation shaft, and movable relative to the support base side member in the axial direction,
a partition member that is disposed in an accommodation space formed between the support base side member and the bearing housing side member and divides the accommodation space into a first space and a second space in the axial direction,
a first pressure generating unit accommodated in the first space in a compressed state, and
a second pressure generating unit accommodated in the second space in a compressed state.

2. The rotation support device according to claim 1, wherein
the first pressure generating unit is a first working fluid with which the first space is filled, and
the second pressure generating unit is a second working fluid with which the second space is filled.

3. The rotation support device according to claim 1, wherein
the first pressure generating unit is a first working fluid with which the first space is filled, and
the second pressure generating unit includes at least one of a hollow member and an elastic member accommodated in the second space, and a second working fluid with which vicinity of at least one of the hollow member and the elastic member is filled.

4. The rotation support device according to claim 1, wherein
the first pressure generating unit includes at least one of a hollow member and an elastic member accommodated in the first space, and a first working fluid with which vicinity of at least one of the hollow member and the elastic member is filled, and
the second pressure generating unit is a second working fluid with which the second space is filled.

5. The rotation support device according to claim 1, wherein
the first pressure generating unit includes at least one of a hollow member and an elastic member accommodated in the first space, and a first working fluid with which vicinity of at least one of the hollow member and the elastic member is filled, and
the second pressure generating unit includes at least one of a hollow member and an elastic member accommodated in the second space, and a second working fluid with which vicinity of at least one of the hollow member and the elastic member is filled.

6. The rotation support device according to claim 1, wherein
one of the support base side member and the bearing housing side member has an annular concave portion that opens to one side in the axial direction,
the other of the support base side member and the bearing housing side member has an annular convex portion that protrudes toward the other side in the axial direction and is fitted into the annular concave portion in a slidable manner in the axial direction, and
the partition member is disposed in an accommodation space formed between the annular concave portion and the annular convex portion and is formed in an annular shape to be in sliding contact with an inward surface and an outward surface of the annular concave portion.

7. The rotation support device according to claim 6, wherein
at least one seal member is mounted between the inward surface of the annular concave portion and an outer peripheral surface of the partition member and between the outward surface of the annular concave portion and an inner peripheral surface of the partition member, and
at least one seal member is mounted between the inward surface of the annular concave portion and an outward surface of the annular convex portion and between the outward surface of the annular concave portion and an inward surface of the annular convex portion.

8. The rotation support device according to claim 6 or 7, wherein
a working fluid is stored in each gap between the inward surface of the annular concave portion and the outer peripheral surface of the partition member, between the outward surface of the annular concave portion and the inward surface of the partition member, between the inward surface of the annular concave portion and the outward surface of the annular convex portion, and between the outward surface of the annular concave portion and the inward surface of the annular convex portion.

9. The rotation support device according to claim 6 or 7, wherein
the housing position adjustment mechanism includes a storage chamber formed in the annular convex portion so as to open to the outward surface or the inward surface of the annular convex portion and configured to store the working fluid, and an orifice formed in the annular convex portion so as to allow the storage chamber to communicate with the second space.

10. The rotation support device according to claim 9, wherein
the second pressure generating unit includes
the working fluid accommodated in the second space, the storage chamber, and the orifice in a compressed state, and
a hollow member accommodated in the storage chamber.

11. The rotation support device according to claim 6 or 7, wherein
a tip surface of the annular convex portion is formed in a convex tapered shape or a concave tapered shape from an inner peripheral edge to an outer peripheral edge thereof.

12. The rotation support device according to claim 7, wherein
the seal member is an O-ring,
the second space is filled with at least a second working fluid,
a seal groove in which the O-ring is disposed is formed in each of the inward surface of the annular concave portion or the outward surface of the annular convex portion, and the outward surface of the annular concave portion or the inward surface of the annular convex portion, and
the seal groove includes a tapered surface whose groove depth decreases as a distance from the accommodation space increases.

13. The rotation support device according to claim 7, wherein
the seal member is an O-ring, and
a wear-resistant member is interposed between the O-ring and at least one of the inward surface of the annular concave portion and the outward surface of the annular convex portion, and between the O-ring and at least one of the outward surface of the annular concave portion and the inward surface of the annular convex portion.

14. The rotation support device according to claim 6, wherein
the partition member is a ring-shaped diaphragm that is attached to the inward surface of the annular concave portion and the outward surface of the annular concave portion and that includes a radially central portion deformable in the axial direction.

15. The rotation support device according to claim 1, wherein
one of the support base side member and the bearing housing side member includes a small-diameter cylindrical portion extending to one side in the axial direction and an outward flange portion extending from a tip of the small-diameter cylindrical portion toward an outer diameter side,
the other of the support base side member and the bearing housing side member includes a large-diameter cylindrical portion extending to the other side in the axial direction and including an inner peripheral surface in sliding contact with an outer peripheral surface of the outward flange portion, and an inward flange portion extending from a tip of the large-diameter cylindrical portion toward an inner diameter side and including an inner peripheral surface in sliding contact with an outer peripheral surface of the small-diameter cylindrical portion, and
the accommodation space is formed by the small-diameter cylindrical portion, the outward flange portion, the large-diameter cylindrical portion, and the inward flange portion.

16. The rotation support device according to claim 15, wherein
at least one seal member is mounted between an inner peripheral surface of the large-diameter cylindrical portion and the outer peripheral surface of the partition member and between the outer peripheral surface of the small-diameter cylindrical portion and the inner peripheral surface of the partition member, and
at least one seal member is mounted between an inner peripheral surface of the inward flange portion and the outer peripheral surface of the small-diameter cylindrical portion and between the outer peripheral surface of the outward flange portion and the inner peripheral surface of the large-diameter cylindrical portion.

17. The rotation support device according to claim 15 or 16, wherein
a working fluid is stored in each gap between the inner peripheral surface of the large-diameter cylindrical portion and the outer peripheral surface of the partition member, between the outer peripheral surface of the small-diameter cylindrical portion and the inner peripheral surface of the partition member, between the inner peripheral surface of the inward flange portion and the outer peripheral surface of the small-diameter cylindrical portion, and between the outer peripheral surface of the outward flange portion and the inner peripheral surface of the large-diameter cylindrical portion.

18. The rotation support device according to claim 15 or 16, wherein
the housing position adjustment mechanism includes a storage chamber formed in the outward flange portion or the inward flange portion so as to open to the inner peripheral surface of the large-diameter cylindrical portion or the outer peripheral surface of the small-diameter cylindrical portion and configured to store a working fluid, and an orifice formed in the outward flange portion or the inward flange portion so as to allow the storage chamber to communicate with the second space.

19. The rotation support device according to claim 16, wherein
the seal member is an O-ring,
the second space is filled with at least a second working fluid,
a seal groove in which the O-ring is disposed is formed in each of the inner peripheral surface of the inward flange portion or the outer peripheral surface of the small-diameter cylindrical portion, and the outer peripheral surface of the outward flange portion or the inner peripheral surface of the large-diameter cylindrical portion, and
the seal groove includes a tapered surface whose groove depth decreases as a distance from the accommodation space increases.

20. The rotation support device according to claim 16, wherein
the seal member is an O-ring, and
a wear-resistant member is interposed between the O-ring and at least one of the inner peripheral surface of the inward flange portion and the outer peripheral surface of the small-diameter cylindrical portion, and between the O-ring and at least one of the outer peripheral surface of the outward flange portion and the inner peripheral surface of the large-diameter cylindrical portion.

21. The rotation support device according to claim 1, wherein
one of the support base side member and the bearing housing side member has an annular concave portion that opens to one side in the axial direction,
the other of the support base side member and the bearing housing side member has an annular convex portion that protrudes toward the other side in the axial direction and is fitted into the annular concave portion in a slidable manner in the axial direction, and
the partition member is disposed in an accommodation space formed between the annular concave portion and the annular convex portion, is attached to an inward surface and an outward surface of the annular concave portion to be formed in an annular shape, and is deformable by the first pressure generating unit and the second pressure generating unit.

22. The rotation support device according to any one of claims 1 to 5, wherein
a working medium volume change unit configured to change a volume of at least one of the first pressure generating unit and the second pressure generating unit by heating or cooling at least one of the first pressure generating unit and the second pressure generating unit is attached to at least one of the support base side member and the bearing housing side member.

23. The rotation support device according to claim 1, wherein
one of the pair of support mechanisms further includes another housing position adjustment mechanism disposed adjacent to the housing position adjustment mechanism between the bearing unit and the support base, and
the another housing position adjustment mechanism includes
another support base side member provided on the support base side and through which the rotation shaft penetrates or which is disposed around the rotation shaft,
another bearing housing side member provided on the bearing housing side, through which the rotation shaft penetrates or which is disposed around the rotation shaft, and movable in the axial direction relative to the another support base side member, and
a third pressure generating unit that is accommodated in a compressed state in another accommodation space formed between the another support base side member and the another bearing housing side member.

24. The rotation support device according to claim 1, wherein
one of the support base side member and the bearing housing side member includes a plurality of concave portions that open to one side in the axial direction,
the other of the support base side member and the bearing housing side member includes a plurality of convex portions that protrude toward the other side in the axial direction and are respectively fitted into the plurality of concave portions in a slidable manner in the axial direction, and
a plurality of the accommodation spaces are respectively formed between the plurality of concave portions and the plurality of convex portions.

25. The rotation support device according to claim 24, wherein
the plurality of accommodation spaces are arranged on both sides in a width direction with respect to the rotation shaft.

26. The rotation support device according to claim 24, wherein
the partition member is disposed in each of the plurality of accommodation spaces and is formed in sliding contact with an inner surface of each of the concave portions.

27. The rotation support device according to claim 1, wherein
the bearing of the bearing unit includes a pair of angular ball bearings each including an outer ring fitted into the bearing housing, an inner ring fitted onto an axial end of the rotation shaft, and a ball disposed between the outer ring and the inner ring in a freely rolling manner.

28. The rotation support device according to claim 1, wherein
the rotation support device is a ball screw feeding device in which the rotation shaft is a screw shaft in which a spiral screw groove is formed on an outer peripheral surface, and further comprises a nut including an inner peripheral surface formed with a spiral screw groove, and a plurality of balls disposed between the screw groove of the screw shaft and the screw groove of the nut in a freely rolling manner.

29. A support mechanism position adjustment mechanism for a shaft support device including a shaft and a pair of support mechanisms provided at both ends in an axial direction of the shaft to support the shaft, the support mechanism position adjustment mechanism for a shaft support device being provided in one of the pair of support mechanisms, one of the pair of support mechanisms including a support through which the shaft penetrates or which is disposed around the shaft, the support mechanism position adjustment mechanism comprising:
a first member provided on one of the shaft side and the support side, and through which the shaft is capable of penetrating or which is capable of being disposed around the shaft;
a second member provided on the other of the shaft side and the support side, and through which the shaft is capable of penetrating or which is capable of being disposed around the shaft, which is movable in the axial direction relative to the first member, and which forms an accommodation space with the first member;
a partition member disposed in the accommodation space and dividing the accommodation space into a first space and a second space in the axial direction;
a first pressure generating unit accommodated in the first space in a compressed state; and
a second pressure generating unit accommodated in the second space in a compressed state.

30. The support mechanism position adjustment mechanism for a shaft support device according to claim 29, wherein
the shaft is a rotation shaft,
one of the pair of support mechanisms further includes a bearing unit including a bearing housing and a bearing that supports the rotation shaft in a rotatable manner with respect to the bearing housing and is capable of supporting an axial load,
the support mechanism position adjustment mechanism is a housing position adjustment mechanism disposed between the bearing unit and the support,
the first member is a support side member provided on the support side and through which the rotation shaft is capable of penetrating or which is capable of being disposed around the rotation shaft, and
the second member is a bearing housing side member provided on the bearing housing side, through which the rotation shaft is capable of penetrating or which is capable of being disposed around the rotation shaft, which is movable in the axial direction relative to the support side member, and which forms the accommodation space with the support side member.
